(19) Europäisches Patentamt
European Patent Office
Office européen des brevets

(11) EP 0 625 550 B1

# (12) EUROPÄISCHE PATENTSCHRIFT

(45) Veröffentlichungstag und Bekanntmachung des Hinweises auf die Patenterteilung:
**01.09.1999 Patentblatt 1999/35**

(51) Int Cl.[6]: **C09B 67/00**, C09B 50/00

(21) Anmeldenummer: **94810278.5**

(22) Anmeldetag: **09.05.1994**

(54) **Farbstoffmischungen, 1:2-Kobaltkomplexformazanfarbstoffe und deren Verwendung**

Dye mixtures, 1:2 cobalt complex formazan dyes and their use

Mélanges de colorants, colorants formazaniques complexes 1:2 de cobalt et leurs utilisation

(84) Benannte Vertragsstaaten:
**BE CH DE FR GB IT LI NL**

(30) Priorität: **18.05.1993 CH 151493**
**24.08.1993 CH 251593**
**24.08.1993 CH 251693**

(43) Veröffentlichungstag der Anmeldung:
**23.11.1994 Patentblatt 1994/47**

(73) Patentinhaber: **Ciba Specialty Chemicals Holding Inc.**
**4057 Basel (CH)**

(72) Erfinder:
- **Lehmann, Urs, Dr.**
  **CH-4056 Basel (CH)**
- **Frick, Marcel**
  **CH-4153 Reinach (CH)**

(56) Entgegenhaltungen:
**EP-A- 0 124 679**
**EP-A- 0 300 195**
**DE-A- 3 329 193**
**FR-A- 1 370 438**
**GB-A- 1 046 649**

- **CHEMICAL ABSTRACTS, vol. 72, no. 12, 23. März 1970, Columbus, Ohio, US; abstract no. 56691e, Seite 70 ; & SU-A-249 515 (KUBICKI E.) 5. September 1969**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 625 550 B1

## Beschreibung

Die vorliegende Erfindung betrifft Mischungen von 1:2-Kobaltkomplexformazanfarbstoffen mit Anthrachinonfarbstoffen oder 1:2-Chrom-oder 1:2-Kobaltkomplexazofarbstoffen, die insbesondere zum Färben oder Bedrucken von natürlichen oder synthetischen textilen Polyamidfasermaterialien geeignet sind und insbesondere sehr gute Echtheitseigenschaften aufweisen. Ein weiterer Gegenstand der vorliegenden Erfindung sind die neuen 1:2-Kobaltkomplexformazanfarbstoffe.

Aus der GB-A-1 046 649 sind Farbstoffmischungen bekannt, welche unsymetrische Kobaltkomplexe enthaltend Farmazanfarbstoffe, die durch eine Sulfonsäureamidgruppe monosubstituiert sind, enthalten.

EP-A-0 124 679 offenbart Farbstoffmischungen, welche keine Co-Komplexformazanfarbstoffe enthalten.

Chemical Abstract, Vol. 72, Nr. 12, Abstract Nr. 56691*e* beschreibt spezifische symetrische Co-Komplexformazanfarbstoffe als Einzelfarbstoffe.

Aus der FR-A-1 370 438 sind Co-Komplexformazanfarbstoffe mit einer spezifischen Position eines Sulfonsäureamidsubstituenten am Phenylring der Hydrazonkomponente bekannt.

Gegenstand der vorliegenden Erfindung sind Farbstoffmischungen, welche dadurch gekennzeichnet sind, dass sie mindestens einen 1:2-Kobaltkomplexfarbstoff der Formazanverbindung der Formel

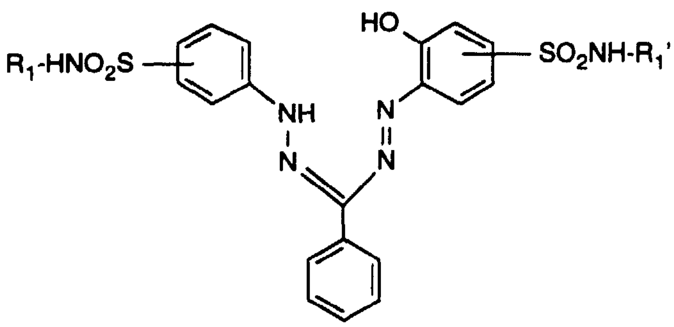

(8),

worin $R_1$ und $R_1$' unabhängig voneinander Wasserstoff oder $C_1$-$C_4$-Alkyl bedeuten und die Phenylreste der Verbindung der Formel (8) gegebenenfalls durch $C_1$-$C_4$-Alkyl, $C_1$-$C_4$-Alkoxy, $C_2$-$C_4$-Alkanoylamino, $C_1$-$C_4$-Alkylsulfonyl, $C_1$-$C_4$-Hydroxyalkylsulfonyl, Halogen, Sulfo, Hydroxyl, Carboxyl oder Nitro weitersubstituiert sind, und bevorzugt unsubstituiert sind,
zusammen mit mindestens einem Anthrachinonfarbstoff der Formel (2)

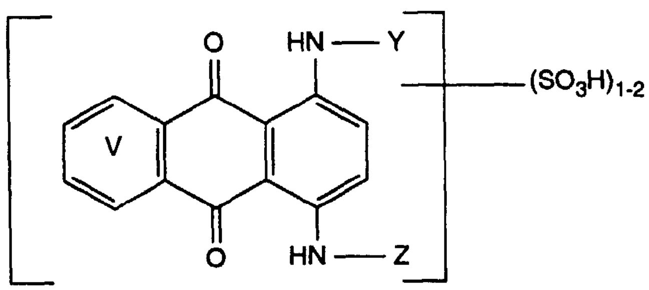

(2),

worin Y Wasserstoff, gegebenenfalls substituiertes $C_1$-$C_4$-Alkyl, Cyclohexyl, Phenyl oder 1,2,3,4-Tetrahydronaphthyl und
Z gegebenenfalls substituiertes $C_1$-$C_8$-Alkyl, Cyclohexyl, Phenyl oder 1,2,3,4-Tetrahydronaphthyl ist,
wobei der Ring V des Anthrachinonfarbstoffs der Formel (2) gegebenenfalls durch eine oder zwei Hydroxylgruppen weitersubstituiert ist,
oder zusammen mit mindestens einem 1:2-Chrom- oder 1 :2-Kobaltkomplexfarbstoff von zwei gleichen oder voneinander verschiedenen Azoverbindungen aus der Gruppe der Verbindungen der Formeln (3), (4), (5) und (6)

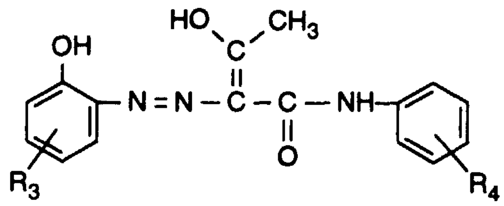

(3),

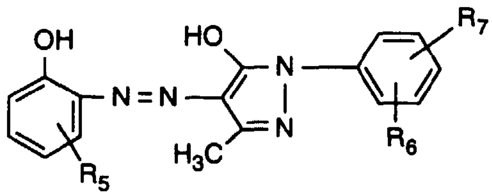

(4),

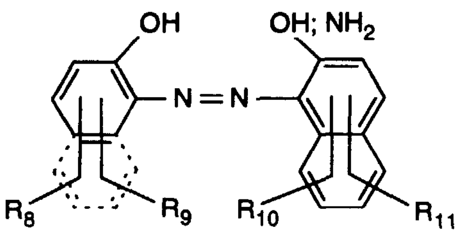

(5),

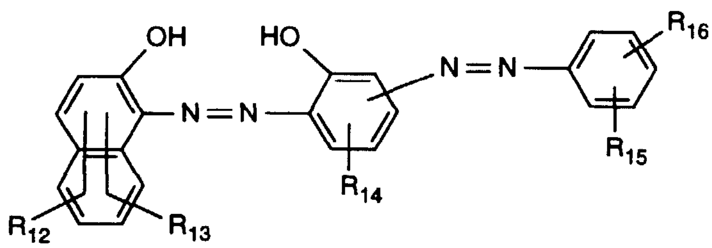

(6),

worin $R_3$, $R_4$, $R_5$, $R_6$, $R_7$, $R_8$, $R_9$, $R_{10}$, $R_{11}$, $R_{12}$, $R_{13}$, $R_{14}$, $R_{15}$ und $R_{16}$ unabhängig voneinander Wasserstoff, $C_1$-$C_4$-Alkyl, $C_1$-$C_4$-Alkoxy, $C_2$-$C_4$-Alkanoylamino, Halogen, Sulfo, Hydroxyl, Nitro, Sulfamoyl oder gegebenenfalls im Alkylteil durch Hydroxyl oder $C_1$-$C_4$-Alkoxy weitersubstituiertes N-$C_1$-$C_4$-Alkylsulfamoyl sind,
enthalten.

Bei den 1:2-Kobaltkomplexformazanfarbstoffen der Formel (8) handelt es sich bevorzugt um symmetrische Kobaltkomplexfarbstoffe.

Als Substituenten der Phenylreste der Formazanverbindung der Formel (8) kommen neben dem Rest der Formel $-SO_2N(R_1)R_2$ unabhängig voneinander z.B. $C_1$-$C_4$-Alkyl, wie z.B. Methyl oder Aethyl; $C_1$-$C_4$-Alkoxy, wie z.B. Methoxy oder Aethoxy; $C_2$-$C_4$-Alkanoylamino, wie z.B. Acetylamino oder Propionylamino; Hydroxy; Sulfo; Nitro; Carboxy; Halogen, wie z.B. Fluor, Chlor oder Brom; oder gegebenenfalls im Alkylteil durch Hydroxy substituiertes $C_1$-$C_4$-Alkylsulfonyl in Betracht.

Als Substituenten der Reste Y und Z in der Bedeutung als Phenyl kommen z.B. in Betracht:

$C_1$-$C_{12}$-Alkyl; $C_1$-$C_4$-Alkoxy; $C_2$-$C_4$-Alkanoylamino; Hydroxy; Sulfo; Nitro; Carboxy; Cyano; Amino; Halogen; Benzoylaminomethyl; Chloracetylamino;
Chloracetylaminomethyl; α-Chloracryloylaminomethyl; Acryloylaminomethyl; Phenoxy, Phenylcarbonylamino, Phenylsulfonyloxy, Phenylsulfonylamino,

Phenylsulfonylaminomethyl oder N-Methyl-phenylsulfonylaminomethyl, wobei die Phenylreste wie oben für Y und Z angegeben weitersubstituiert sein können. Weiterhin kann es sich bei dem Rest Z um einen über ein Brückenglied gebundenen Anthrachinonfarbstoffrest handeln; als Beispiele hierfür seien die Anthrachinonfarbstoffe der nachfolgenden Formel (11) genannt.

Als $C_1$-$C_8$-Alkyl kommen für Y und Z unabhängig voneinander z.B. Methyl, Aethyl, Propyl, Isopropyl, Butyl, Isobutyl, sek.-Butyl, tert.-Butyl, Pentyl, Hexyl, Heptyl oder Octyl in Betracht, wobei die Alkylreste durch Phenyl substituiert sein können und der Phenylrest wie oben für Y und Z in der Bedeutung als Phenyl weitersubstituiert sein kann. Bevorzugte Substituenten des Phenylrestes sind hierbei $C_1$-$C_{12}$-Alkyl, $C_1$-$C_4$-Alkoxy, $C_2$-$C_4$-Alkanoylamino, Hydroxy, Sulfo, Nitro, Carboxy, Cyano, Amino, Halogen, Benzoylaminomethyl, Chloracetylamino, Chloracetylaminomethyl, $\alpha$-Chloracryloylaminomethyl oder Acryloylaminomethyl.

Als Cyclohexyl kommt für Y und Z unabhängig voneinander neben unsubstituiertem Cyclohexyl z.B. durch $C_1$-$C_4$-Alkyl, Phenylsulfonylamino oder Benzyl substituiertes Cyclohexyl in Betracht, wobei die Phenylreste z.B. durch $C_1$-$C_4$-Alkyl, $C_1$-$C_4$-Alkoxy, $C_2$-$C_4$-Alkanoylamino, Sulfo oder Halogen weitersubstituiert sein können.

Als 1,2,3,4-Tetrahydronaphthyl kommt für Y und Z unabhängig voneinander neben unsubstituiertem 1,2,3,4-Tetrahydronaphthyl der beispielsweise durch Sulfo substituierte Rest in Betracht.

Enthält der Anthrachinonfarbstoff der Formel (2) eine oder zwei Hydroxylgruppen im Ring V, so sind diese in der Regel in der 1- und/oder 2-Position gebunden.

Die Gesamtzahl der Sulfogruppen im Anthrachinonfarbstoff der Formel (2) ist eins oder zwei.

Als $C_1$-$C_4$-Alkyl kommen für $R_3$ bis $R_{16}$ unabhängig voneinander Methyl, Aethyl, Propyl, Isopropyl, Butyl, Isobutyl, sek.-Butyl oder tert.-Butyl, insbesondere Methyl, in Betracht.

Als $C_1$-$C_4$-Alkoxy kommen für $R_3$ bis $R_{16}$ unabhängig voneinander Methoxy, Äthoxy, Propoxy, Isopropoxy, Butoxy, sek.-Butoxy, Isobutoxy oder tert.-Butoxy, insbesondere Methoxy, in Betracht.

Als $C_2$-$C_4$-Alkanoylamino kommen für $R_3$ bis $R_{16}$ unabhängig voneinander z.B. Acetylamino oder Propionylamino, insbesondere Acetylamino, in Betracht.

Als Halogen kommen für $R_3$ bis $R_{16}$ unabhängig voneinander z.B. Fluor, Chlor oder Brom, insbesondere Chlor, in Betracht.

Bevorzugt handelt es sich bei den Formazanverbindungen der Formel (8) um Verbindungen der Formel

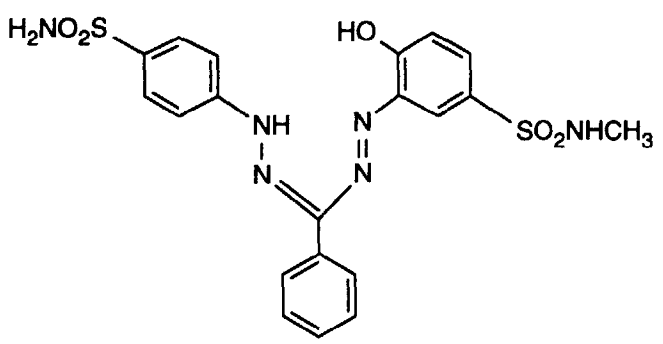

(8a),

wobei die Phenylreste keine weiteren Substituenten enthalten oder wie oben für die Verbindung der Formel (8) angegeben weitersubstituiert sein können. Vorzugsweise enthalten die Phenylreste der Verbindung der Formel (8a) keine weiteren Substituenten.

Als Anthrachinonfarbstoffe der Formel (2) kommen bevorzugt Anthrachinonfarbstoffe der Formel

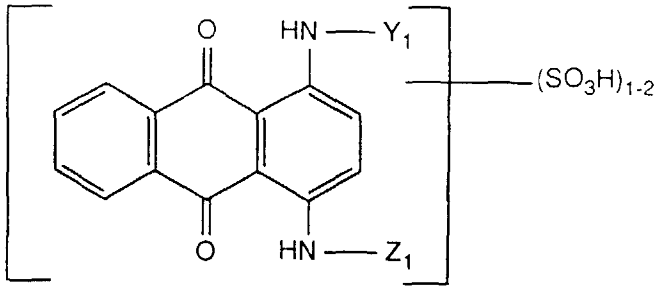

(9),

worin $Z_1$ gegebenenfalls durch $C_1$-$C_{12}$-Alkyl, $C_1$-$C_4$-Alkoxy, $C_2$-$C_4$-Alkanoylamino, Halogen, Benzoylaminomethyl, Chloracetylamino, Chloracetylaminomethyl oder α-Chloracryloylaminomethyl substituiertes Phenyl; Phenyl-$C_1$-$C_8$-alkyl, wobei der Phenylrest keine weiteren Substituenten enthält oder wie unter Formel (9) für $Z_1$ in der Bedeutung als Phenyl angegeben substituiert ist; gegebenenfalls durch $C_1$-$C_4$-Alkyl, Phenylsulfonylamino oder $C_1$-$C_4$-Alkylphenylsulfonylamino substituiertes Cyclohexyl; 1,2,3,4-Tetrahydronaphthyl; oder ein Rest der Formel

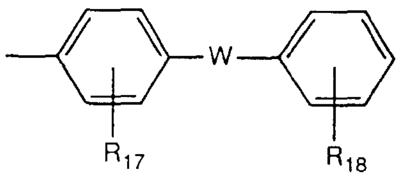

ist, wobei W ein Brückenglied der Formel -O-, -NH-CO-, $-OSO_2-$, $-NH-SO_2-$, $-CH_2-NH-SO_2-$ oder $-CH_2-N(CH_3)-SO_2-$ ist,
$R_{17}$ Wasserstoff, $C_1$-$C_4$-Alkyl, $C_1$-$C_4$-Alkoxy oder Halogen und
$R_{18}$ Wasserstoff, $C_1$-$C_4$-Alkyl, $C_1$-$C_4$-Alkoxy, Halogen oder Acryloylaminomethyl ist, $Y_1$ Wasserstoff; $C_1$-$C_4$-Alkyl; gegebenenfalls durch $C_1$-$C_4$-Alkyl, $C_1$-$C_4$-Alkoxy oder Halogen substituiertes Phenyl; gegebenenfalls im Phenylring durch $C_1$-$C_4$-Alkyl, $C_1$-$C_4$-Alkoxy, Halogen oder Benzoylaminomethyl substituiertes Phenyl-$C_1$-$C_8$-alkyl; gegebenenfalls durch $C_1$-$C_4$-Alkyl substituiertes Cyclohexyl; oder 1,2,3,4-Tetrahydronaphthyl ist, oder Anthrachinonfarbstoffe der Formel

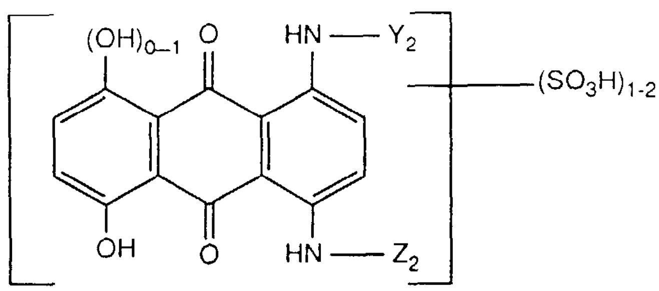

(10),

worin $Z_2$ gegebenenfalls durch $C_1$-$C_4$-Alkyl, $C_1$-$C_4$-Alkoxy oder Halogen substituiertes Phenyl oder gegebenenfalls durch $C_1$-$C_4$-Alkyl oder Benzyl substituiertes Cyclohexyl ist und
$Y_2$ $C_1$-$C_4$-Alkyl ist oder die oben für $Z_2$ angegebenen Bedeutungen hat, oder Anthrachinonfarbstoffe der Formel

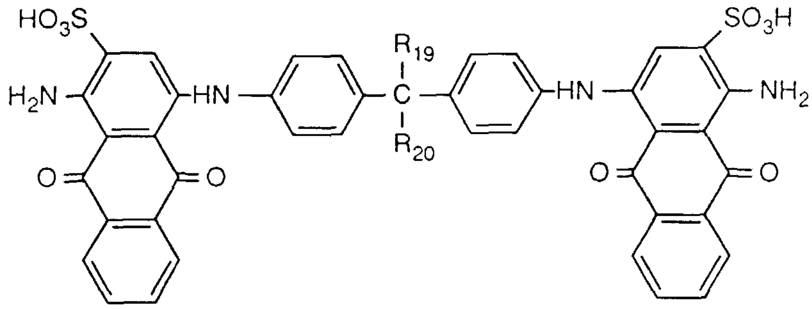

(11),

worin $R_{19}$ und $R_{20}$ Wasserstoff oder Methyl bedeuten, in Betracht.

Besonders bevorzugt als Anthrachinonfarbstoffe der Formel (2) sind Anthrachinonfarbstoffe der Formel

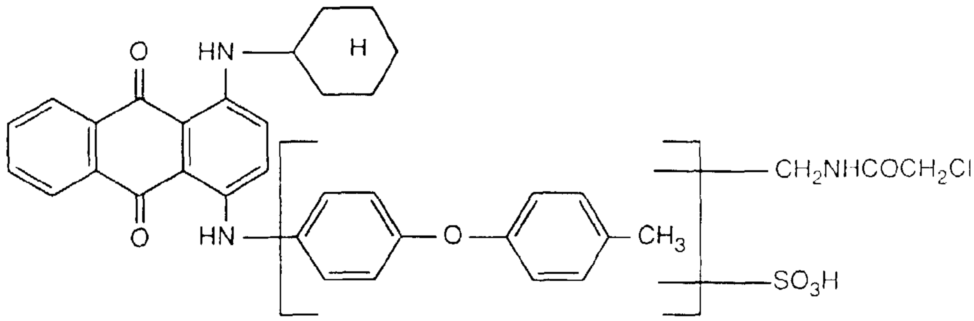

(12),

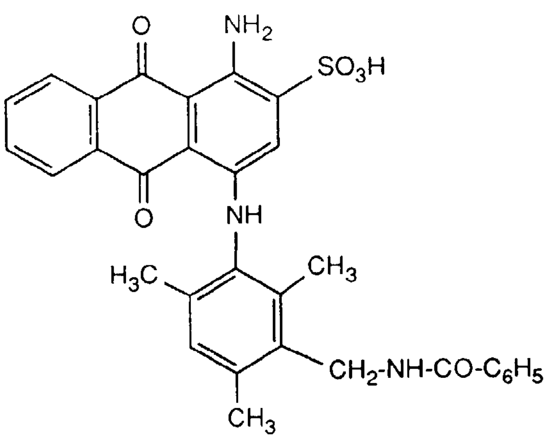

(13),

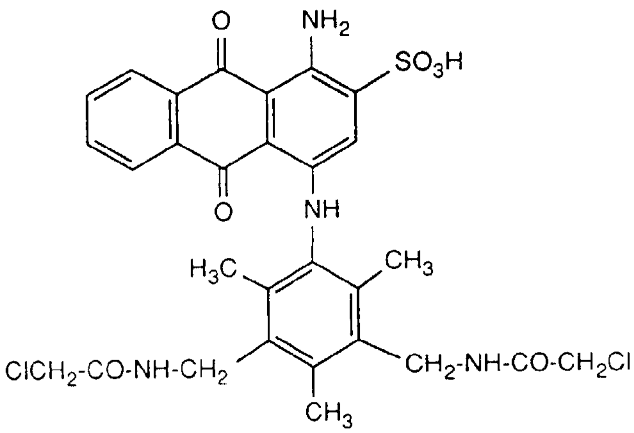

(14),

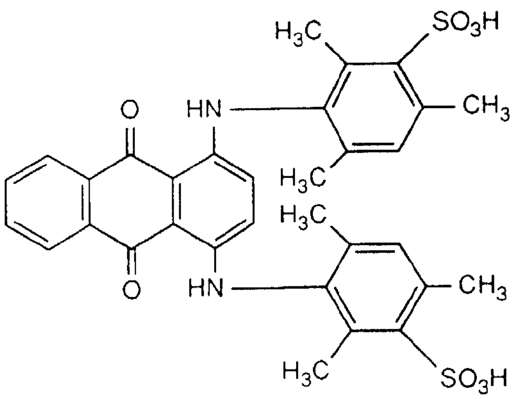

(15),

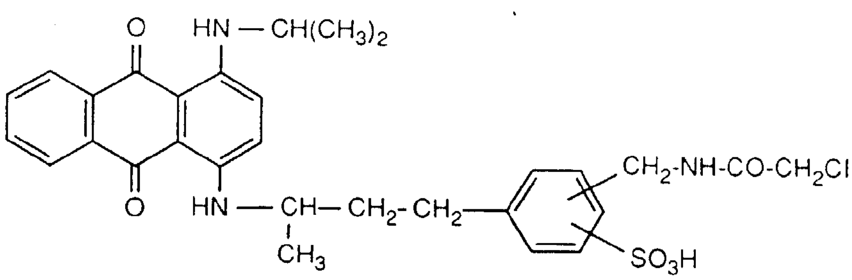

(16),

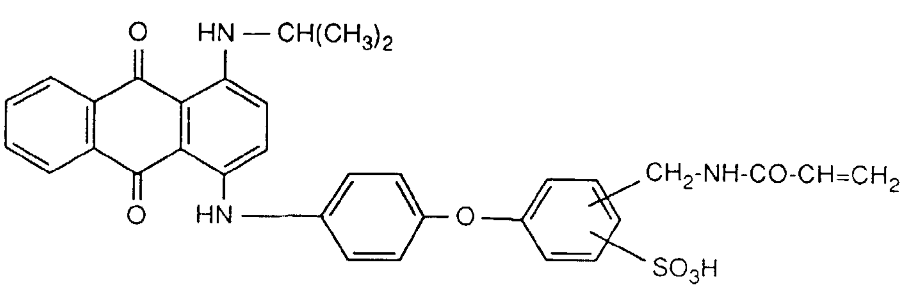

(17),

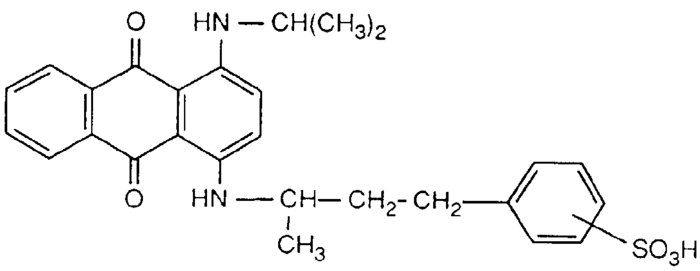

(18),

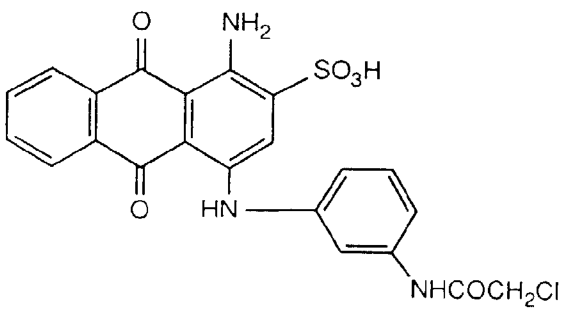

(19),

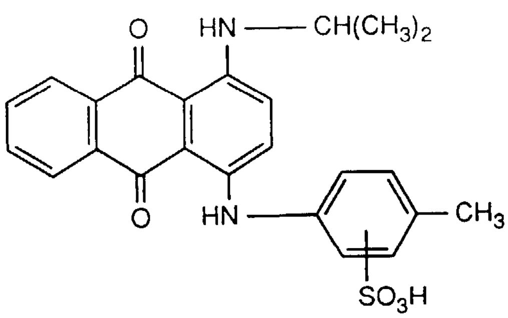

(20),

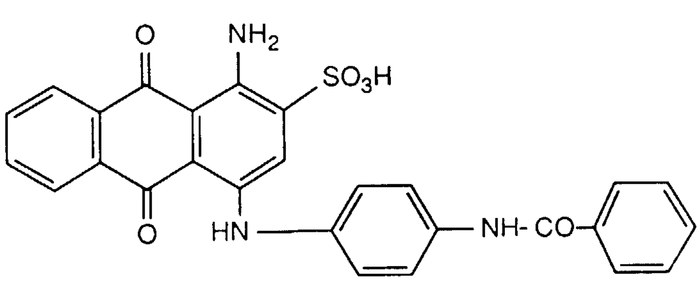

(21),

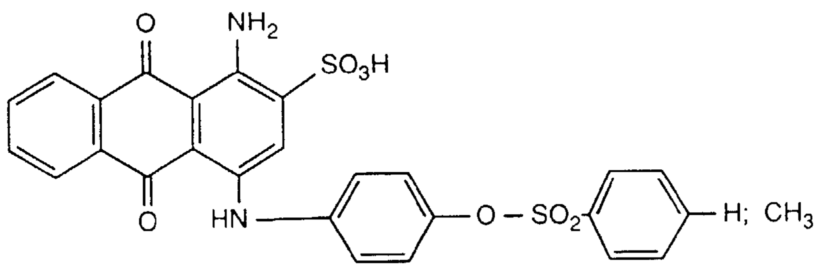

(22),

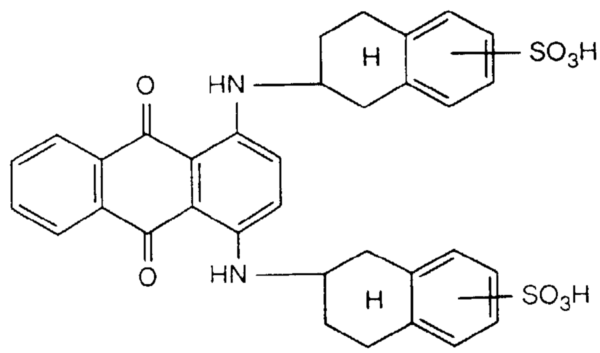

(23),

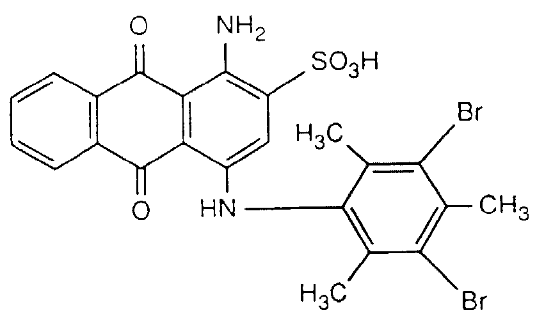

(24),

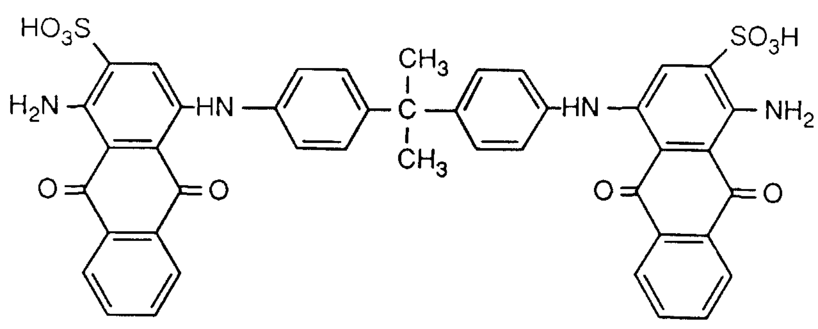

(25),

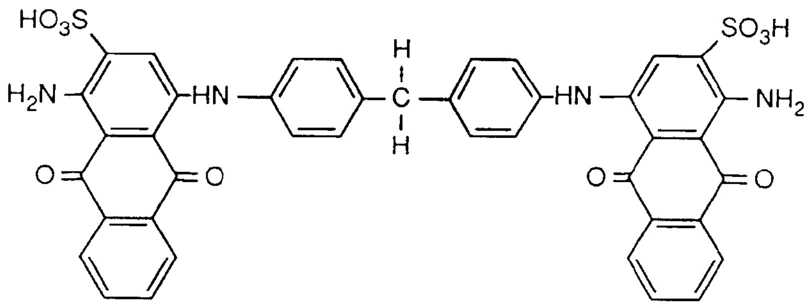

(26),

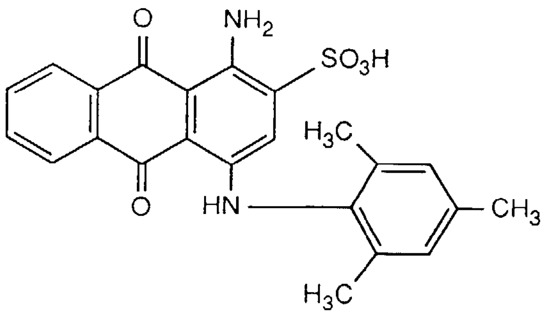

(27),

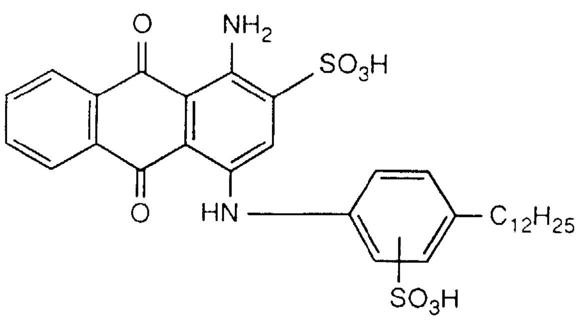

(28),

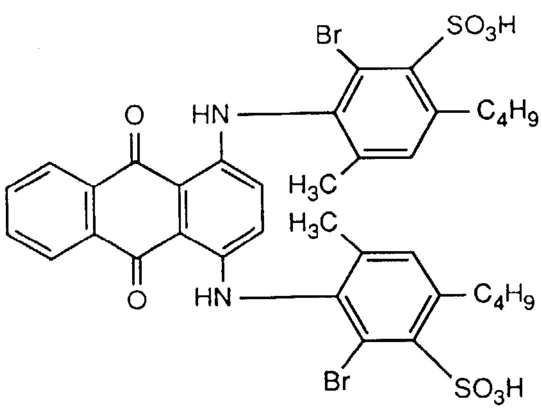

(29),

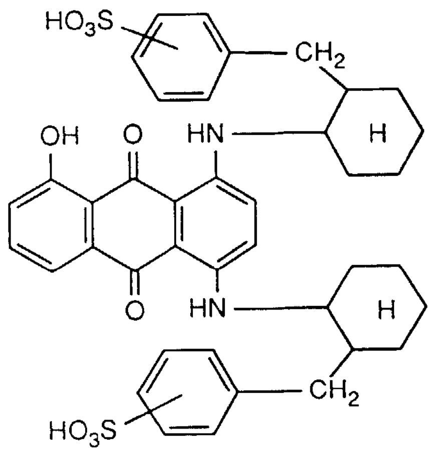

(30),

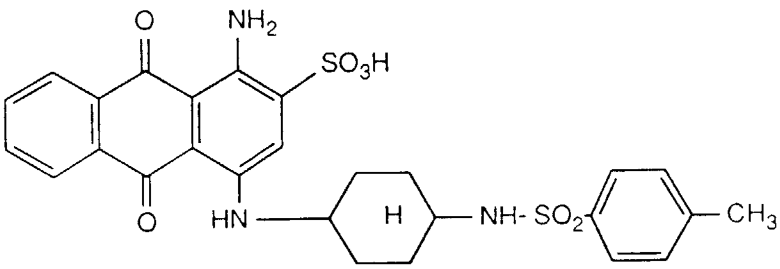

(31),

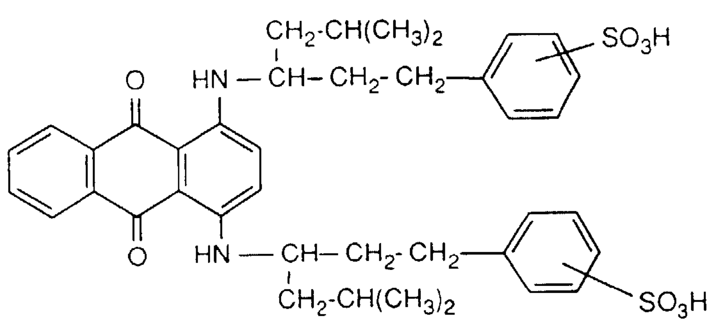

(32),

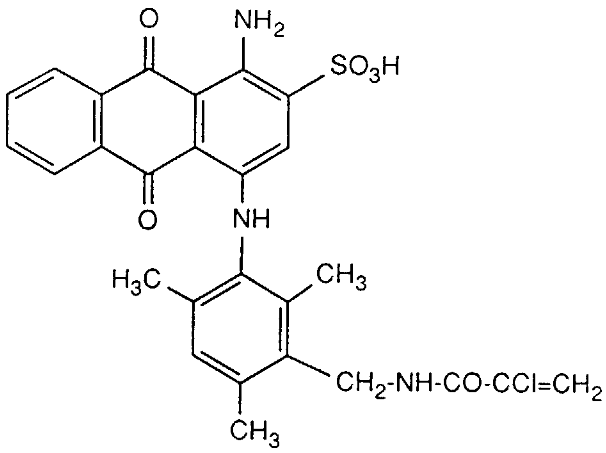

(33),

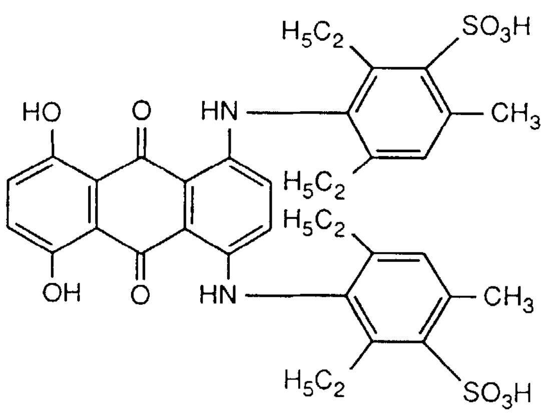

(34),

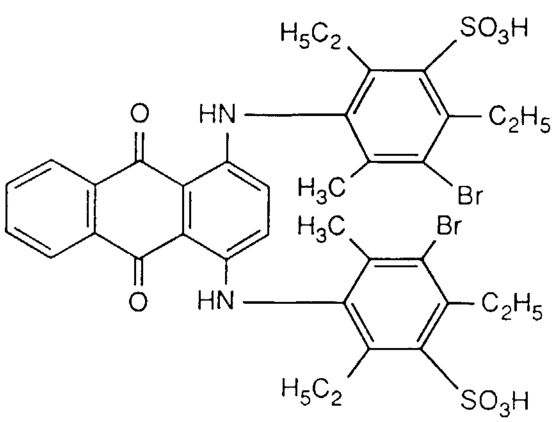

(35),

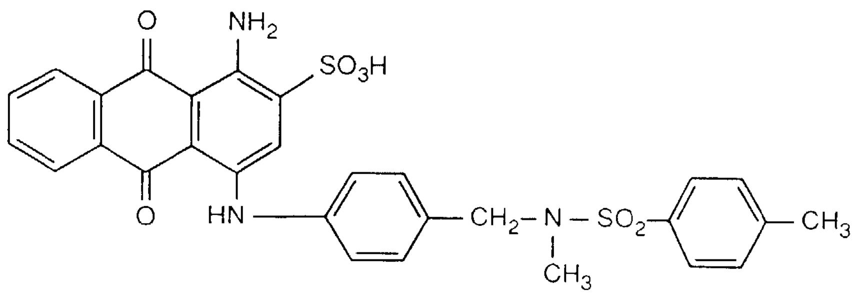

(36),

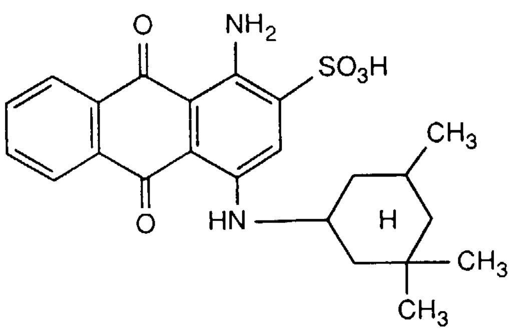

(37),

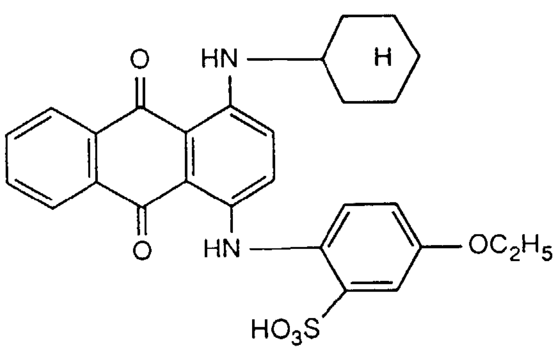

(38),

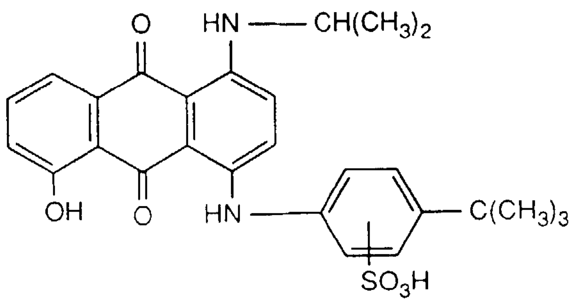

(39),

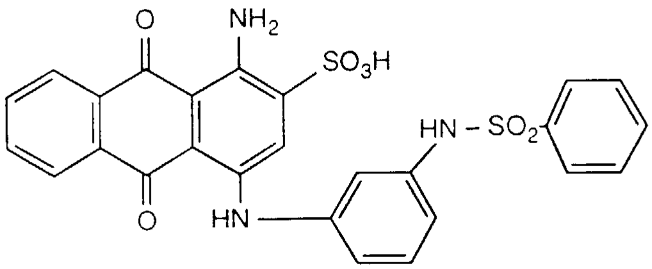

(40),

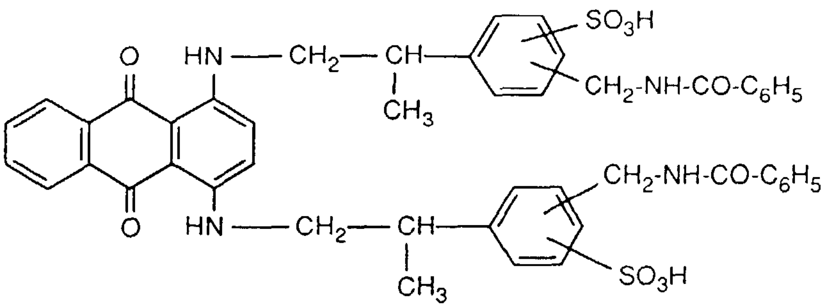

(41)

oder

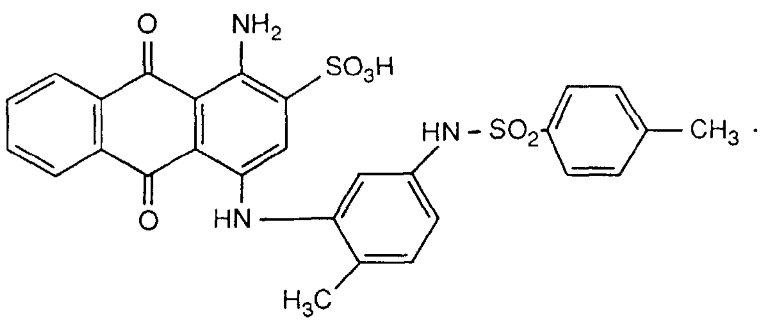

(42).

Als 1:2-Chrom- oder 1:2-Kobaltkomplexazofarbstoffe kommen insbesondere 1:2-Kobaltkomplexfarbstoffe von zwei gleichen oder voneinander verschiedenen Azoverbindungen aus der Gruppe der Verbindungen der Formeln (3), (4) und (5), sowie 1:2-Chromkomplexfarbstoffe von zwei gleichen oder voneinander verschiedenen Azoverbindungen aus der Gruppe der Verbindungen der Formeln (5) und (6) in Betracht.

Besonders bevorzugt als 1:2-Chrom- oder 1:2-Kobaltkomplexazofarbstoffe sind Farbstoffe der Formel

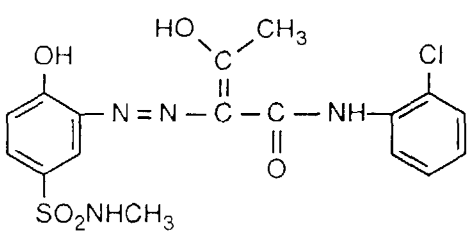

(43),

1:2-Kobaltkomplex

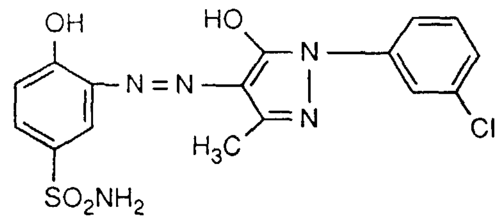

(44),

1:2-Kobaltkomplex

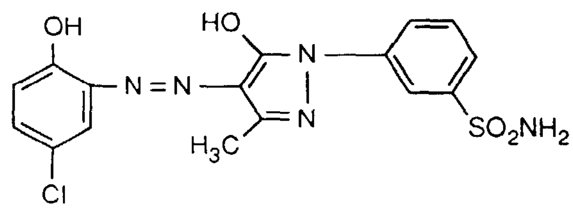

+

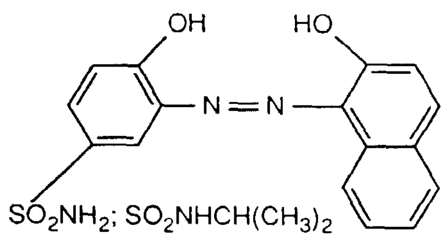

(45),

1:2-Kobaltkomplex

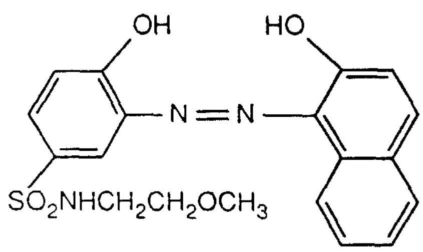

(46),

1:2-Kobaltkomplex

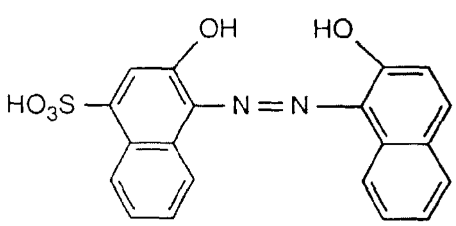

+

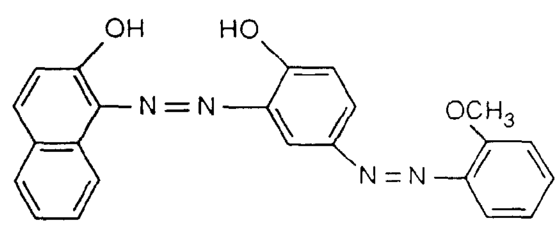

(47),

1:2-Chromkomplex

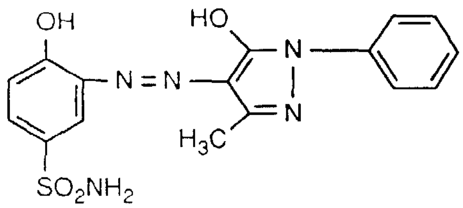

(48),

1:2-Kobaltkomplex

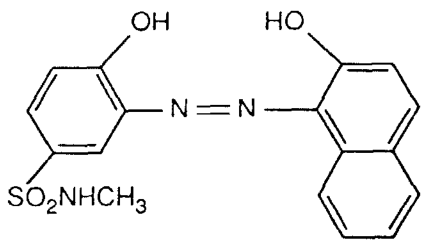

(49)

1:2-Kobaltkomplex

oder

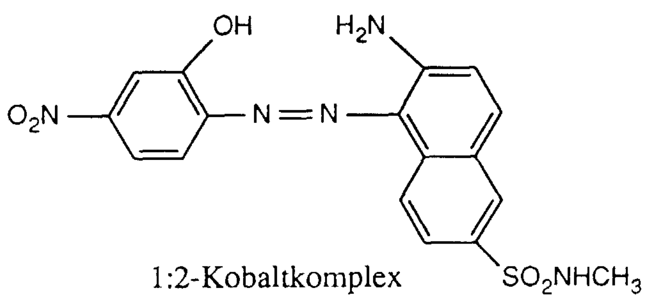

(50).

1:2-Kobaltkomplex

Ganz besonders bevorzugt sind Farbstoffmischungen, welche neben dem 1:2-Kobaltkomplexformazanfarbstoff mindestens einen Farbstoff der Formeln (9), (10), (11) und (43) bis (50), insbesondere mindestens einen Farbstoff der Formeln (12) bis (50), enthalten. Hiebei ist der Farbstoff der Formel (50) ganz besonders bevorzugt. Für den 1: 2-Kobaltkomplexformazanfarbstoff gelten hierbei die oben angegebenen Bedeutungen und Bevorzugungen.

Die Anthrachinonfarbstoffe der Formel (2) sowie die 1:2-Chrom- und 1:2-Kobaltkomplexazofarbstoffe sind bekannt oder können in Analogie zu bekannten Verbindungen erhalten werden. So können Anthrachinonfarbstoffe der Formel (2) z.B. analog den in der GB-A-903,590, GB-A-945,806, GB-A-2,009,214 sowie US-A-3,491,125 angegebenen Verfahren erhalten werden. Die 1:2-Chrom- und 1:2-Kobaltkomplexazofarbstoffe können z.B. analog den in der GB-A-716,753, GB-A-719,274, GB-A-745,641 sowie GB-A-851,861 angegebenen Verfahren erhalten werden.

Die 1:2-Kobaltkomplexformazanfarbstoffe Farbstoffe der Formel (1) sind zum Teil neu. Die 1:2-Kobaltkomplexformazanfarbstoffe Farbstoffe der Formel (1) können analog dem für die Herstellung der neuen 1:2-Kobaltkomplexformazanfarbstofle angegebenen Verfahren erhalten werden.

Die erfindungsgemässe Farbstoffmischung kann z.B. durch Mischung der Einzelfarbstoffe hergestellt werden. Dieser Mischprozess erfolgt beispielsweise in geeigneten Mühlen, z.B. Kugel- und Stiftmühlen, sowie in Knetern oder Mixern.

Ferner können die Farbstoffmischungen z.B. durch Zerstäubungstrocknung der wässrigen Farbstoffmischungen hergestellt werden.

Die Farbstoffmischungen enthalten bevorzugt 5 bis 95 Gew.%, insbesondere 10 bis 90 Gew.-% und vorzugsweise 20 bis 80 Gew.% des 1:2-Kobaltkomplexformazanfarbstoffes, bezogen auf die Gesamtmenge der Farbstoffe der Mischungen.

In den erfindungsgemässen Farbstoffmischungen liegen die einzelnen Farbstoffe, soweit diese Sulfogruppen enthalten, entweder in der Form ihrer freien Sulfonsäure oder vorzugsweise als deren Salze wie z.B. der Alkali-, Erdalkali- oder Ammoniumsalze oder als Salze eines organischen Amins vor. Als Beispiele seien die Natrium-, Lithium- oder Ammoniumsalze oder das Salz des Triäthanolamins genannt. Als Gegenionen von Metallkomplexfarbstoffen mit negativer Ladung kommen z.B. die Kationen der oben genannten Salze in Betracht.

Die Farbstoffmischungen enthalten in der Regel weitere Zusätze, wie z.B. Kochsalz oder Dextrin.

Gegenstand der Erfindung ist ferner ein Verfahren zum Färben oder Bedrucken von hydroxylgruppenhaltigen oder stickstoffhaltigen Fasermaterialien mit den erfindungsgemässen Farbstoffmischungen.

Als Fasermaterialien kommen bevorzugt sowohl natürliche Polyamidfasermaterialien, wie z.B. Seide oder insbesondere Wolle, als auch synthetische Polyamidfasermaterialien, wie z.B. Polyamid 6 oder Polyamid 6.6, oder woll- oder polyamidhaltige Mischgewebe in Frage. Von besonderem Interesse sind hierbei synthetische Polyamidfasermaterialien.

Das genannte Fasermaterial kann dabei in den verschiedensten Verarbeitungsformen vorliegen, wie z.B. als Faser, Garn, Gewebe oder Gewirke und insbesondere in Form von Teppichen.

Das Färben oder Drucken kann in üblichen Färbe- oder Druckapparaturen erfolgen. Die Färbeflotten oder Druckpasten können weitere Zusätze, beispielsweise Netzmittel, Antischaummittel, Egalisiermittel oder die Eigenschaft des Textilmaterials beeinflussende Mittel, wie z.B. Weichmachungsmittel, Zusätze zum Flammfestausrüsten oder schmutz-, wasser- und öl-abweisende Mittel sowie wasserenthärtende Mittel und natürliche oder synthetische Verdicker, wie z.B. Alginate und Celluloseäther, enthalten.

Die erfindungsgemässen Farbstoffmischungen ergeben egale Färbungen mit guten Allgemeinechtheiten, insbesondere guter Reib-, Nass-, Nassreib-, Licht- und Heisslichtechtheit. Ferner sind die erfindungsgemässen Farbstoffmischungen gut wasserlöslich und hartwasserbeständig und zeichnen sich durch gutes Aufziehverhalten und durch gute Kombinierbarkeit mit anderen Farbstoffen aus.

Gegenstand der Erfindung sind ferner symmetrische 1:2-Kobaltkomplexformazanfarbstoffe von Verbindungen der Formel

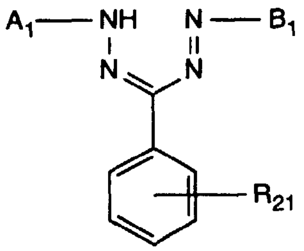

(51),

die der Formel

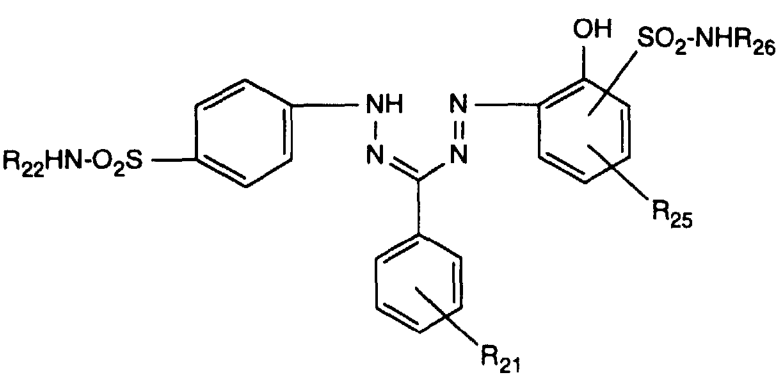

(51a)

worin $R_{21}$ Wasserstoff, Chlor oder Fluor, $R_{22}$ Wasserstoff, Methyl, Ethyl oder 2-Hydroxyethyl, $R_{25}$ Wasserstoff oder Chlor und $R_{26}$ Wasserstoff, Methyl, Ethyl, 2-Hydroxyethyl, Phenyl, 2- oder 3-Carboxyphenyl, 2- oder 3-Sulfamoylphenyl oder 2- oder 3-Sulfophenyl bedeuten,
oder der Formel

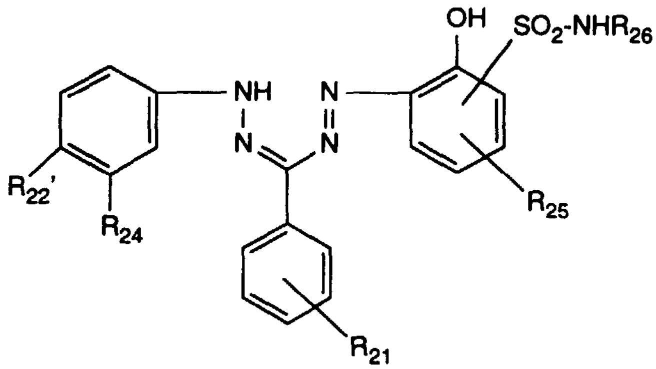

(51b),

entsprechen
worin $R_{21}$ Wasserstoff, $R_{22}'$ Wasserstoff, $R_{24}$ Acetylamino oder insbesondere Propionylamino, $R_{25}$ Wasserstoff oder Chlor und $R_{26}$ Wasserstoff, Methyl oder Ethyl bedeuten.

Bevorzugt sind symmetrische 1:2-Kobaltkomplexformazanfarbstoffe von Verbindungen der oben angegebenen Formel (51a), worin $R_{21}$ Wasserstoff, Chlor oder Fluor, $R_{22}$ Wasserstoff, Methyl oder Ethyl, $R_{25}$ Chlor und $R_{26}$ Wasserstoff, Methyl, Ethyl, 2-Carboxyphenyl, 2-Sulfamoylphenyl oder 2-Sulfophenyl bedeuten.

Ebenfalls bevorzugt sind symmetrische 1:2-Kobaltkomplexformazanfarbstoffe der Formel

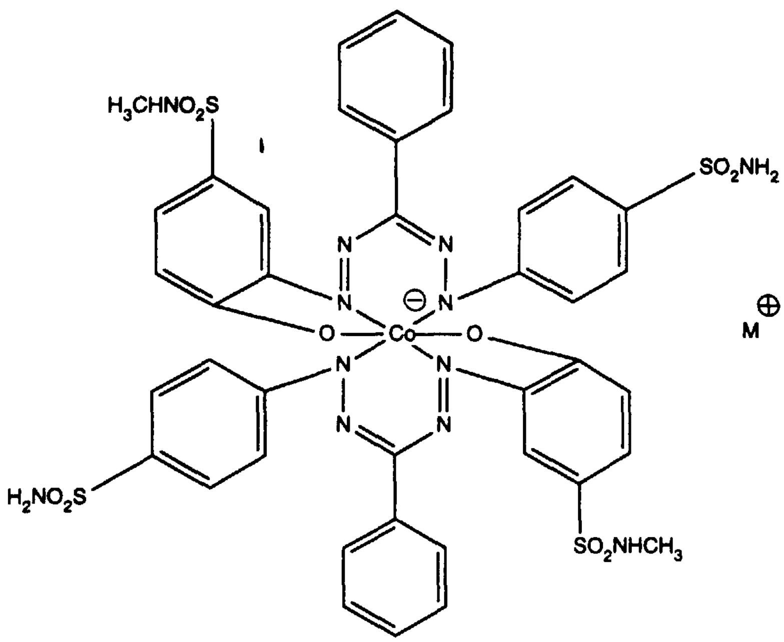

(51d),

worin $M^{\oplus}$ ein Kation bedeutet.

$M^{\oplus}$ steht als Kation z.B. für ein Proton oder vorzugsweise für ein Metallkation, z.B. ein Alkalimetallkation wie $Na^{\oplus}$, $K^{\oplus}$ oder $Li^{\oplus}$; ferner kann $M^{\oplus}$ ein Ammoniumkation oder das Ammoniumsalz eines organischen Amins, z.B. das Salz des Mono-, Di- oder Triäthanolamins, bedeuten.

Die Verbindungen der Formel (51) können in an sich bekannter Weise hergestellt werden, z.B. indem man eine Verbindung der Formel

$$B_1\text{-}NH_2 \tag{57}$$

diazotiert, auf das Hydrazon der Formel

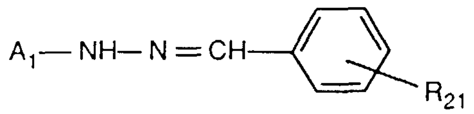

(58)

kuppelt, und die erhaltene metallfreie Verbindung mit einem Kobaltsalz metallisiert, wobei die Variablen $R_{21}$, $A_1$ und $B_1$ die unter Formel (51) angegebenen Bedeutungen haben.

Die Diazotierung des Amins der Formel (57) erfolgt in der Regel durch Einwirken salpetriger Säure in wässrig-mineralsaurer Lösung bei tiefer Temperatur, die Kupplung auf die Kupplungskomponente der Formel (58) vorteilhaft bei alkalischen pH-Werten, z.B. bei pH-Werten ≥ 9 und insbesondere bei einem pH-Wert von 10 bis 12.

Die Metallisierung findet z.B. in einem wässrigen Medium, welches einen alkalischen pH-Wert, z.B. einen Wert von 7,5 bis 12 und vorzugsweise 8 bis 12, aufweist, bei einer Temperatur von 40 bis 100°C und insbesondere 40 bis 60°C statt. Geeignete Kobaltsalze sind z.B. das Acetat, Nitrat, Chlorid oder insbesondere das Sulfat.

Die Kupplung der diazotierten Verbindung der Formel (57) mit der Verbindung der Formel (58) und die Metallisierung können hintereinander oder auch gleichzeitig, z.B. indem man die Diazosuspension zusammen mit dem Kobaltsatz zur Lösung des Hydrazons zugibt, durchgeführt werden.

Die Verbindungen der Formeln (57) und (58) sind an sich bekannt oder können in Analogie zu bekannten Verbindungen hergestellt werden.

Die erfindungsgemässen Farbstoffe enthalten in der Regel weitere Zusätze, wie z.B. Kochsalz oder Dextrin.

Gegenstand der Erfindung ist ferner ein Verfahren zum Färben oder Bedrucken von hydroxylgruppenhaltigen oder stickstoffhaltigen Fasermaterialien mit den erfindungsgemässen Farbstoffen.

Als Fasermaterialien kommen bevorzugt sowohl natürliche Polyamidfasermaterialien, wie z.B. Seide oder insbesondere Wolle, als auch synthetische Polyamidfasermaterialien, wie z.B. Polyamid 6 oder Polyamid 6.6, oder woll- oder polyamidhaltige Mischgewebe in Frage. Von besonderem Interesse sind hierbei synthetische Polyamidfasermaterialien.

Das genannte Fasermaterial kann dabei in den verschiedensten Verarbeitungsformen vorliegen, wie z.B. als Faser, Garn, Gewebe oder Gewirke und insbesondere in Form von Teppichen.

Das Färben oder Drucken kann in üblichen Färbe- oder Druckapparaturen erfolgen. Die Färbeflotten oder Druckpasten können weitere Zusätze, beispielsweise Netzmittel, Antischaummittel, Egalisiermittel oder die Eigenschaft des Textilmaterials beeinflussende Mittel, wie z.B. Weichmachungsmittel, Zusätze zum Flammfestausrüsten oder schmutz-, wasser- und öl-abweisende Mittel sowie wasserenthärtende Mittel und natürliche oder synthetische Verdicker, wie z.B. Alginate und Celluloseäther, enthalten.

Die erfindungsgemässen Farbstoffe ergeben egale Färbungen mit guten Allgemeinechtheiten, insbesondere guter Reib-, Nass-, Nassreib-, Licht- und Heisslichtechtheit. Ferner sind die erfindungsgemässen Farbstoffe gut wasserlöslich und hartwasserbeständig und zeichnen sich durch gutes Aufziehverhalten und durch gute Kombinierbarkeit mit anderen Farbstoffen aus.

In den folgenden Beispielen stehen Teile für Gewichtsteile. Die Temperaturen sind Celsiusgrade. Die Beziehung zwischen Gewichtsteilen und Volumenteilen ist dieselbe wie diejenige zwischen Gramm und Kubikzentimeter.

Beispiel 1A : Zur Herstellung einer Farbstoffmischung, die die Farbstoffe der Formeln

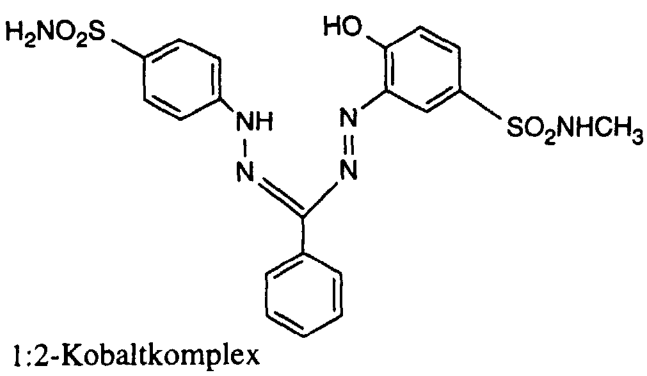

(118),

1:2-Kobaltkomplex

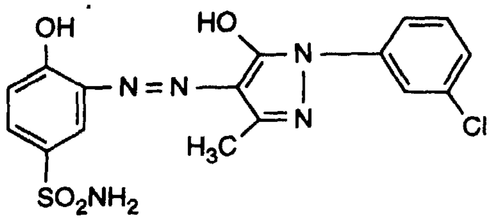

(44),

1:2-Kobaltkomplex

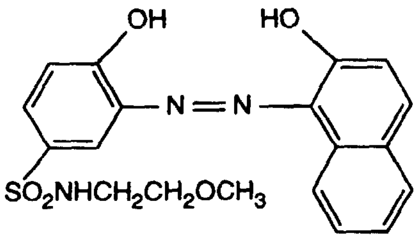

(46)

1:2-Kobaltkomplex

und

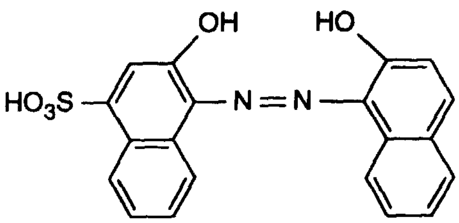

+

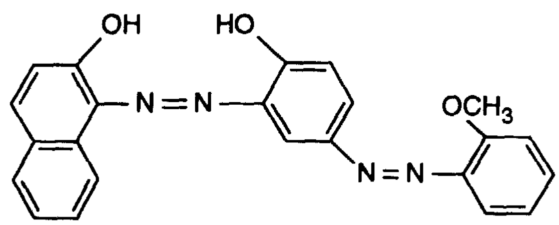

(47)

1:2-Chromkomplex

enthält, werden in einem Mixer 55 Teile des Farbstoffs der Formel (118), 13 Teile des Farbstoffs der Formel (44), 14 Teile des Farbstoffs der Formel (46) und 18 Teile des Farbstoffs der Formel (47) homogen gemischt und ergeben 100 Teile der Mischung, die im folgenden als Farbstoffmischung A bezeichnet wird.

Beispiel 1B: Zur Herstellung einer Farbstoffmischung, die die Farbstoffe der Formeln (118) und (46) und den Farbstoff der Formel

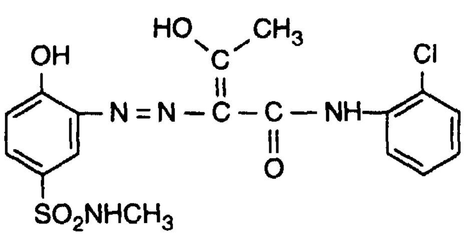

(43)

1:2-Kobaltkomplex

enthält, werden in einem Mixer 22 Teile des Farbstoffs der Formel (118), 47 Teile des Farbstoffs der Formel (46) und 31 Teile des Farbstoffs der Formel (43) homogen gemischt und ergeben 100 Teile der Mischung, die im folgenden als Farbstoffmischung B bezeichnet wird.

Beispiel 1C: Zur Herstellung einer Farbstoffmischung, die die Farbstoffe der Formeln (118), (44) und (46)

enthält, werden in einem Mixer 20 Teile des Farbstoffs der Formel (118), 35 Teile des Farbstoffs der Formel (44) und 45 Teile des Farbstoffs der Formel (46) homogen gemischt und ergeben 100 Teile der Mischung, die im folgenden als Farbstoffmischung C bezeichnet wird.

Beispiel 1D: Zur Herstellung einer Farbstoffmischung, die die Farbstoffe der Formeln (118) und (43) und den Farbstoff der Formel

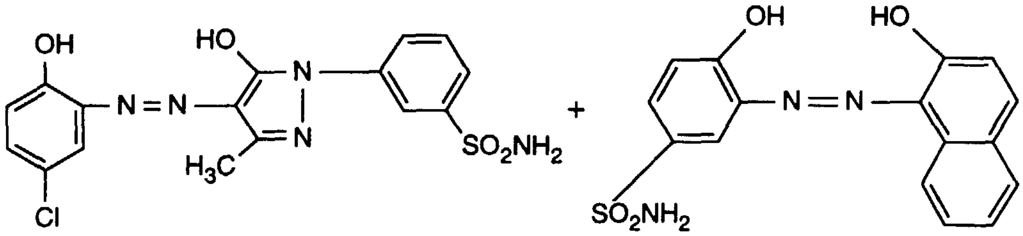

+

(106)

1:2-Kobaltkomplex

enthält, werden in einem Mixer 22 Teile des Farbstoffs der Formel (118), 32 Teile des Farbstoffs der Formel (43) und 46 Teile des Farbstoffs der Formel (106) homogen gemischt und ergeben 100 Teile der Mischung, die im folgenden als Farbstoffmischung D bezeichnet wird.

Beispiel 1E: Zur Herstellung einer Farbstoffmischung, die die Farbstoffe der Formeln (118), (44) und (106) enthält, werden in einem Mixer 21 Teile des Farbstoffs der Formel (118), 36 Teile des Farbstoffs der Formel (44) und 43 Teile des Farbstoffs der Formel (106) homogen gemischt und ergeben 100 Teile der Mischung, die im folgenden als Farbstoffmischung E bezeichnet wird.

Beispiel 1F:Zur Herstellung einer Farbstoffmischung, die die Farbstoffe der Formeln (118) und (106) und die Farbstoffe der Formeln

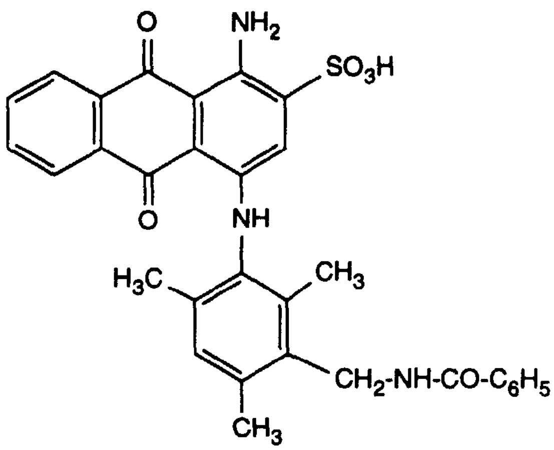

(13)

und

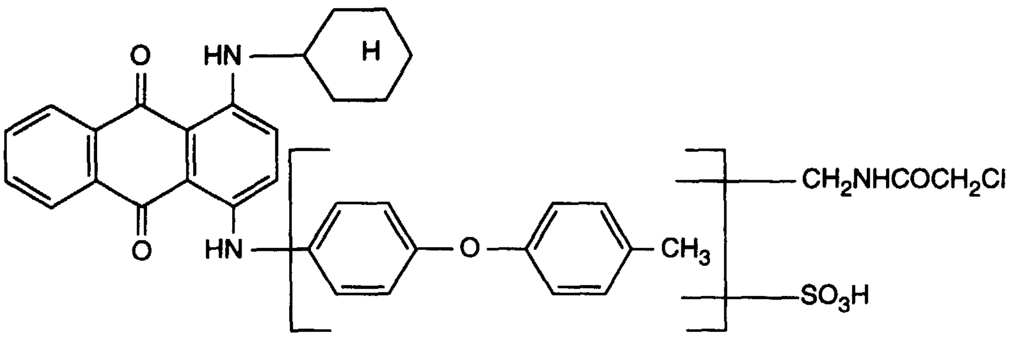

(12)

enthält, werden in einem Mixer 40 Teile des Farbstoffs der Formel (118), 7 Teile des Farbstoffs der Formel (106), 40 Teile des Farbstoffs der Formel (13) und 13 Teile des Farbstoffs der Formel (12) homogen gemischt und ergeben 100 Teile der Mischung, die im folgenden als Farbstoffmischung F bezeichnet wird.

Beispiel 1G: Zur Herstellung einer Farbstoffmischung, die die Farbstoffe der Formeln (118), (106) und (13) enthält, werden in einem Mixer 41 Teile des Farbstoffs der Formel (118), 4 Teile des Farbstoffs der Formel (106) und 55 Teile des Farbstoffs der Formel (13) homogen gemischt und ergeben 100 Teile der Mischung, die im folgenden als Farbstoffmischung G bezeichnet wird.

Beispiel 1H:Zur Herstellung einer Farbstoffmischung, die den Farbstoff der Formel (118) und den Farbstoff der Formel

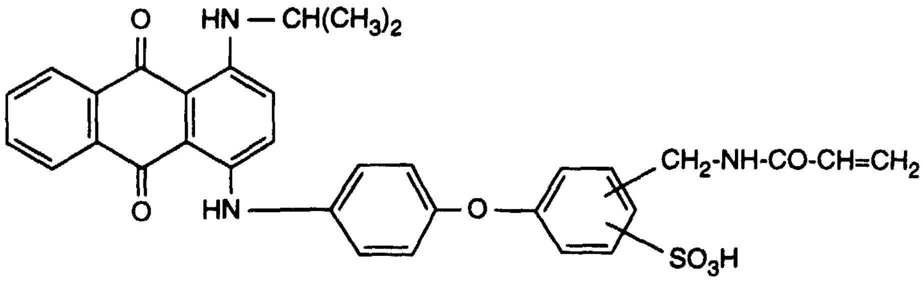

(17)

enthält, werden in einem Mixer 45 Teile des Farbstoffs der Formel (118) und 55 Teile des Farbstoffs der Formel (17) homogen gemischt und ergeben 100 Teile der Mischung, die im folgenden als Farbstoffmischung H bezeichnet wird.

Beispiel 1I: Zur Herstellung einer Farbstoffmischung, die den Farbstoff der Formel (118) und den Farbstoff der Formel

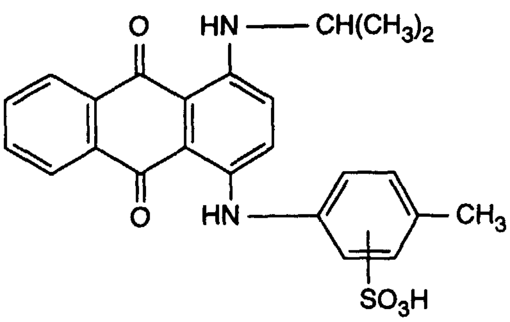

(20)

enthält, werden in einem Mixer 45 Teile des Farbstoffs der Formel (118) und 55 Teile des Farbstoffs der Formel (20) homogen gemischt und ergeben 100 Teile der Mischung, die im folgenden als Farbstoffmischung I bezeichnet wird.

Beispiel IJ: Zur Herstellung einer Farbstoffmischung, die den Farbstoff der Formel (118), den Farbstoff der Formel

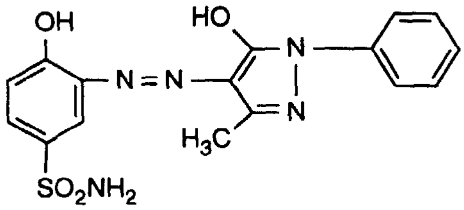

(48)

1:2-Kobaltkomplex

und den Farbstoff der Formel

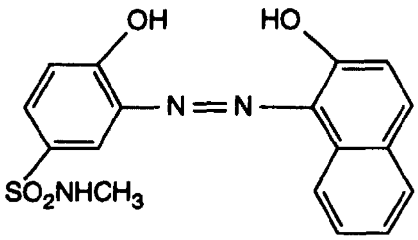

(49)

1:2-Kobaltkomplex

enthält, werden in einem Mixer 22 Teile des Farbstoffs der Formel (118), 31 Teile des Farbstoffs der Formel (48) und 47 Teile des Farbstoffs der Formel (49) homogen gemischt und ergeben 100 Teile der Mischung, die im folgenden als Farbstoffmischung J bezeichnet wird.

Beispiel 1L: Zur Herstellung einer Farbstoffmischung, die den Farbstoff der Formel (118) und den Farbstoff der Formel

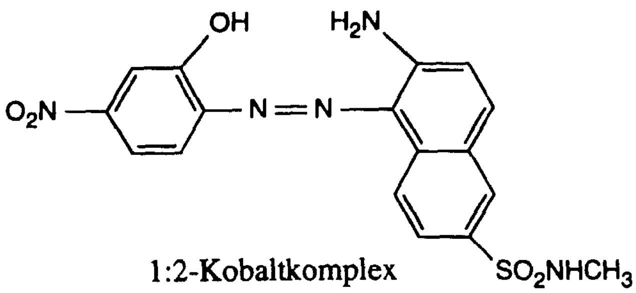

(50)

1:2-Kobaltkomplex

enthält, werden in einem Mixer 50 Teile des Farbstoffs der Formel (118) und 50 Teile des Farbstoffs der Formel (50) homogen gemischt und ergeben 100 Teile der Mischung, die im folgenden als Farbstoffmischung L bezeichnet wird.

Beispiel 2: 86,1 g 4-Sulfamoylanilin werden in 200 ml Wasser eingetragen, der pH-Wert mit Natriumhydroxidlösung auf ca. 11,5 eingestellt und die Mischung so lange auf ca. 50°C erhitzt, bis eine Lösung entstanden ist. Zu dieser Lösung lässt man 125 ml 4N Natriumnitritlösung rasch zufliessen. Nach dem Absinken der Temperatur auf ca. 35 bis 40°C wird die erhaltene Lösung zu einem -5 bis 0°C kalten Gemisch aus 100 g Eis und 400 ml 31%iger Naphthalin-1-sulfonsäurelösung zufliessen gelassen. Man hält ca. 1 Stunde bei 0 bis 2°C, gibt gegebenenfalls noch etwas Nitritlösung hinzu, und zerstört am Ende den Nitritüberschuss mit Sulfaminsäure.

Der pH-Wert der oben erhaltenen Lösung wird mit Natriumhydroxidlösung auf 4,5 bis 5 eingestellt und anschliessend eine Suspension von 104,6 g Natriumpyrosulfit in 100 ml Wasser bei 0 bis 5°C innerhalb von ca. 30 bis 45 Minuten zugetropft; hierbei wird der pH-Wert durch Zugabe von Natriumhydroxidlösung bei 6 bis 6,5 gehalten. Man lässt eine Stunde bei ca. 5°C, weitere zwei Stunden bei 40 bis 50°C und schliesslich über Nacht bei Raumtemperatur nachrühren. Nach Zugabe von HCl (pH ≤1) wird das gebildete $SO_2$ mit Pressluft ausgetrieben. Das hydrazinhaltige Gemisch wird auf 60 bis 70°C erwärmt und innerhalb von ca. 15 Minuten werden 50 ml Benzaldehyd zugetropft. Man lässt ca. 2 bis 2,5 Stunden bei 65 bis 70°C nachrühren, kühlt auf Raumtemperatur ab und filtriert die auskristallisierte Verbindung der Formel

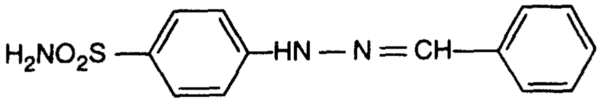

(116)

ab. Das Produkt wird nach dem Waschen mit Wasser und Salzsäure im Vakuum getrocknet.

Beispiel 3: 30,3 g 2-Amino-4-N-methylsulfamoylphenol werden in 180 ml Wasser gelöst, der pH-Wert mit HCl sauer eingestellt und die Temperatur auf 0 bis 5°C abgekühlt. Bei dieser Temperatur werden 37,5 ml 4N Natriumnitritlösung zugegeben und die Aminoverbindung diazotiert.

Nach Zerstörung des Nitritüberschusses mit Sulfaminsäure und Erhöhung des pH-Werts auf 3 mit Natriumhydroxidlösung wird die Diazosuspension innerhalb von ca. 1,5 Stunden in kleinen Portionen zu einer mit Natriumhydroxidlösung auf pH 12,3 bis 12,5 eingestellten Lösung von 41,3 g des gemäss Beispiel 2 erhaltenen Hydrazons in ca. 350 ml Wasser bei 40 bis 45 °C zugegeben und der pH-Wert durch Zugabe von Natriumhydroxidlösung bei 12,3 bis 12,5 gehalten. Man lässt ca. 30 Minuten bei 40 bis 45°C nachrühren, senkt den pH-Wert mit Salzsäure auf ca. 9,5, filtriert den metallfreien Farbstoff der Formel

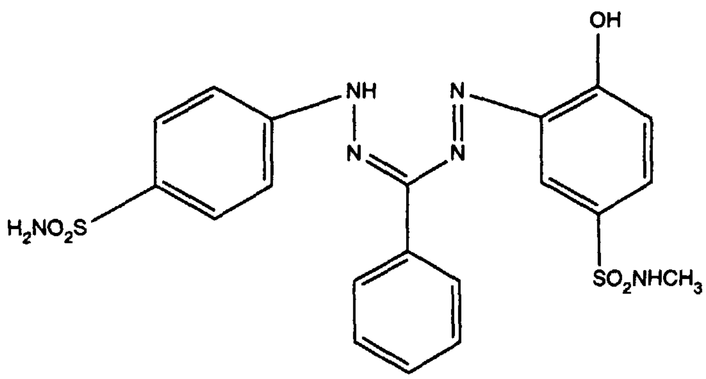

(8a)

nach dem Abkühlen ab und wäscht ihn mit Kochsalzlösung.

Beispiel 4: Der gemäss Beispiel 3 erhaltene rohe Farbstoff wird in 600 ml Wasser homogen suspendiert und auf ca. 60 bis 70°C erwärmt. Man stellt den pH-Wert mit Sodalösung auf ca. 8,5 bis 9,5 ein und lässt innerhalb von ca. 30 Minuten unter Rühren 70 ml 1-molare $CoSO_4$/Weinsäurelösung bei 60 bis 65°C zutropfen, wobei der pH durch Zugabe weiterer Sodalösung zwischen 8,5 und 9 gehalten wird. Der Farbton ändert sich von rot nach blau und der 1:2-Co-Komplex kristallisiert aus. Man stellt den pH mit Natriumhydroxidlösung auf 11 bis 11,5 ein, lässt ca. 30 Minuten weiterrühren, senkt den pH-Wert mit Salzsäure auf ca. 9,5, filtriert die Verbindung der Formel

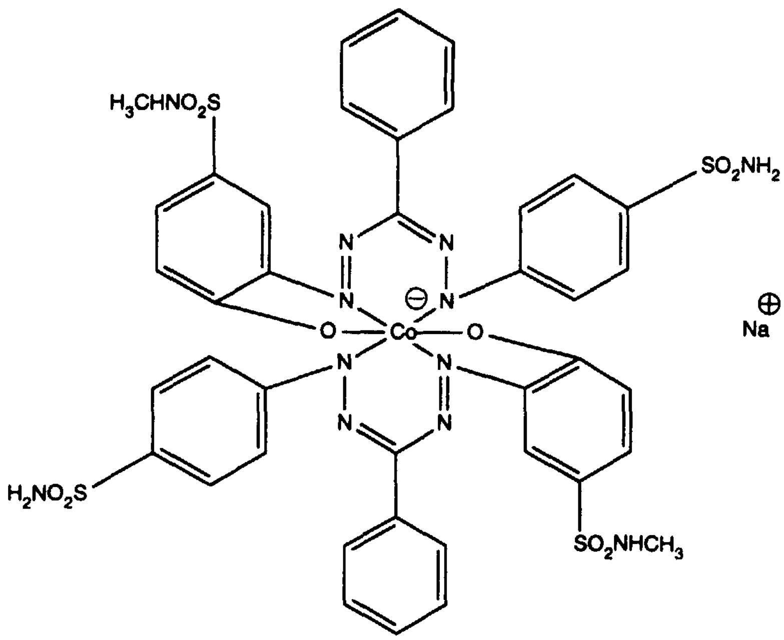

(118)

ab und wäscht den Niederschlag mit Kochsalzlösung.

Beispiele 5 bis 29: Analog wie in den Beispielen 2 bis 4 beschrieben lassen sich die symmetrischen 1:2-Kobaltkomplexe von Verbindungen der allgemeinen Formel

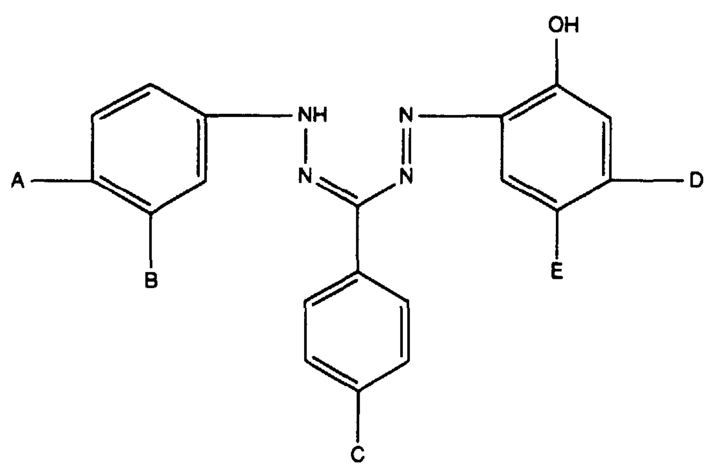

herstellen, worin die Variablen die in der Tabelle angegebenen Bedeutungen haben:

| Beispiel Nr. | A | B | C | D | E |
|---|---|---|---|---|---|
| 5 | $SO_2NH_2$ | H | H | $SO_2NHCH_3$ | H |
| 6 | $SO_2NH_2$ | H | H | H | $SO_2NH_2$ |
| 7 | $SO_2NH_2$ | H | H | $SO_2NH_2$ | H |
| 8 | $SO_2NH_2$ | H | H | $SO_2NHCH_3$ | Cl |
| 9 | $SO_2NH_2$ | H | H | $SO_2NH_2$ | Cl |
| 10 | $SO_2NH_2$ | H | H | 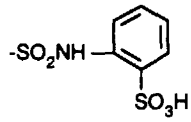 | H |
| 11 | $SO_2NH_2$ | H | Cl | H | 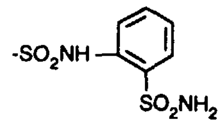 |
| 12 | $SO_2NHCH_3$ | H | H | H | $SO_2NH_2$ |
| 13 | $SO_2NH_2$ | H | Cl | $SO_2NH_2$ | Cl |
| 14 | $SO_2NH_2$ | H | Cl | $SO_2NHCH_3$ | Cl |
| 15 | $SO_2NH_2$ | H | F | $SO_2NH_2$ | Cl |
| 16 | $SO_2NH_2$ | H | F | $SO_2NHCH_3$ | Cl |
| 17 | H | $SO_2NH_2$ | H | $SO_2NH_2$ | Cl |
| 18 | H | $SO_2NH_2$ | H | $SO_2NHCH_3$ | Cl |
| 19 | H | $SO_2NH_2$ | H | H | 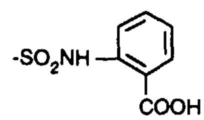 |
| 20 | $CH_3$ | $SO_2NHC_2H_5OH$ | H | $SO_2NH_2$ | Cl |
| 21 | $CH_3$ | $SO_2NHC_2H_5OH$ | H | $SO_2NHCH_3$ | Cl |
| 22 | $CH_3$ | $SO_2NHC_2H_5OH$ | Cl | $SO_2NHCH_3$ | Cl |
| 23 | $CH_3$ | $SO_2NHC_2H_5OH$ | Cl | $SO_2NH_2$ | Cl |
| 24 | H | $NHCOC_2H_5$ | H | H | $SO_2NH_2$ |
| 25 | H | $NHCOC_2H_5$ | H | H | $SO_2NHCH_3$ |
| 26 | H | $NHCOC_2H_5$ | H | $SO_2NH_2$ | Cl |
| 27 | H | $NHCOC_2H_5$ | H | $SO_2NHCH_3$ | Cl |
| 28 | $SO_2NH_2$ | H | H | H | 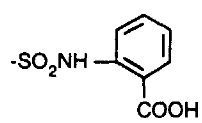 |
| 29 | H | $SO_2NH_2$ | H | 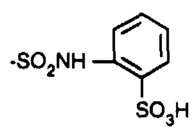 | H |

Beispiele 35 bis 38: Analog wie in den Beispielen 2 bis 4 beschrieben lassen sich die symmetrischen 1:

2-Kobaltkomplexe der Verbindungen der allgemeinen Formel

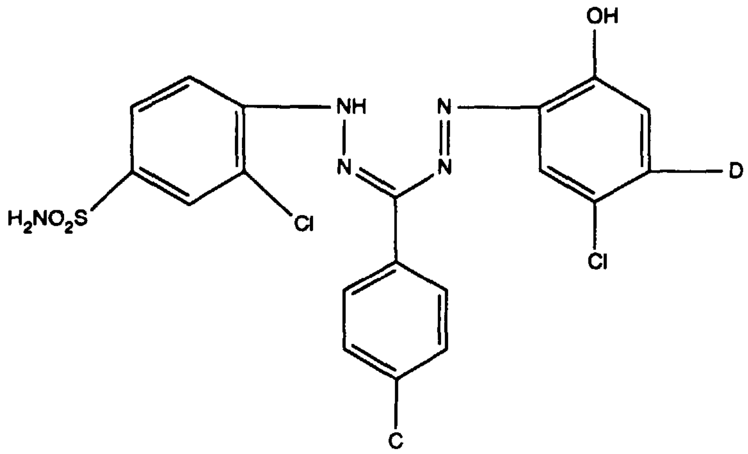

herstellen, worin die Variablen C und D die in der Tabelle angegebenen Bedeutungen haben:

| Beispiel Nr. | C | D |
|---|---|---|
| 35 | H | $SO_2NH_2$ |
| 36 | H | $SO_2NHCH_3$ |
| 37 | Cl | $SO_2NH_2$ |
| 38 | Cl | $SO_2NHCH_3$ |

Beispiele 39 bis 42: Analog wie in den Beispielen 2 bis 4 beschrieben lassen sich die symmetrischen 1: 2-Kobaltkomplexe der Verbindungen der allgemeinen Formel

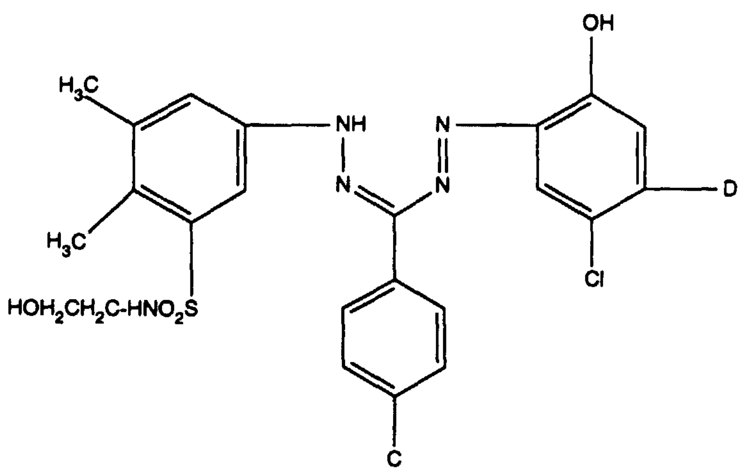

herstellen, worin die Variablen C und D die in der Tabelle angegebenen Bedeutungen haben:

| Beispiel Nr. | C | D |
|---|---|---|
| 39 | H | $SO_2NH_2$ |
| 40 | H | $SO_2NHCH_3$ |
| 41 | Cl | $SO_2NH_2$ |
| 42 | Cl | $SO_2NHCH_3$ |

Färbebeispiel 1: Man färbt 10 Teile Polyamid 6.6-Gewebe in 200 Teilen einer wässrigen Flotte, die 0,27%, bezogen auf das Fasergewicht, der Farbstoffmischung A gemäss Beispiel 1A enthält und mit Essigsäure und Natriumacetat auf pH 6 gestellt wird. Das Färbebad wird innerhalb von 45 Minuten auf 98°C erhitzt, 60 Minuten bei 96°C bis 98°C gehalten und dann innerhalb von 15 Minuten auf 70°C abgekühlt. Das gefärbte Gewebe wird anschliessend herausgenommen und wie üblich gespült und getrocknet. Man erhält ein in einem grauen Farbton gefärbtes Gewebe.

Färbebeispiele 2 bis 7: Verfährt man wie in Färbebeispiel 1 angegeben, verwendet jedoch anstelle der Farbstoffmischung A die in der folgenden Tabelle 1 in Spalte 2 angegebenen Farbstoffmischungen, so erhält man Polyamid 6.6-Gewebe, welche in den in Spalte 3 angegebenen Farbtönen gefärbt sind.

Tabelle 1

| Bsp. | Farbstoffmischung | Farbton auf Polyamid |
|---|---|---|
| 2 | 1,06% Farbstoffmischung B | braun |
| 3 | 1,13% Farbstoffmischung C | braun |
| 4 | 1,03% Farbstoffmischung D | braun |
| 5 | 1,10% Farbstoffmischung E | braun |
| 6 | 1,06% Farbstoffmischung J | braun |
| 7 | 1,06% Farbstoffmischung L | braun |

Verfährt man wie in den Färbebeispielen 1 bis 7 angegeben, verwendet jedoch jeweils entsprechende Farbstoffmischungen, welche anstelle des Farbstoffes der Formel (118) den Farbstoff der Formel

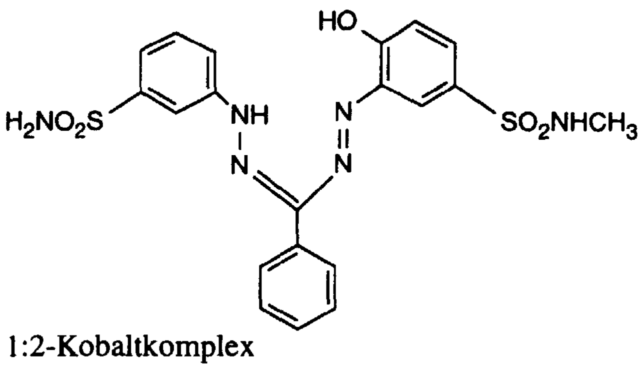

(117)

1:2-Kobaltkomplex

in gleicher Gewichtsmenge enthalten, so erhält man Polyamid 6.6-Gewebe, welche in den in braunen Farbtönen gefärbt sind.

Färbebeispiel 8: Man färbt 10 Teile Polyamid 6.6-Gewebe in 200 Teilen einer wässrigen Flotte, die 1,5%, bezogen auf das Fasergewicht, der Farbstoffmischung F gemäss Beispiel 1F enthält und mit Phosphatpuffer ($NaH_2PO_4/Na_2HPO_4$) auf pH 6 gestellt wird. Das Färbebad wird innerhalb von 45 Minuten auf 98°C erhitzt und 60 Minuten bei dieser Temperatur belassen. Das gefärbte Gewebe wird anschliessend herausgenommen und wie üblich gespült und getrocknet. Man erhält ein in einem blauen Farbton gefärbtes Gewebe.

Färbebeispiele 9 bis 12: Verfährt man wie in Färbebeispiel 8 angegeben, verwendet jedoch anstelle der Farbstoffmischung F die in der folgenden Tabelle 2 in Spalte 2 angegebenen Farbstoffmischungen, so erhält man Polyamid 6.6-Gewebe, welche in den in Spalte 3 angegebenen Farbtönen gefärbt sind.

Tabelle 2

| Bsp. | Farbstoffmischung | Farbton auf Polyamid |
|---|---|---|
| 9 | 1,75% Farbstoffmischung G | blau |
| 10 | 1,5% Farbstoffmischung H | blau |
| 11 | 1,5% Farbstoffmischung I | blau |

Verfährt man wie in den Färbebeispielen 8 bis 12 angegeben, verwendet jedoch jeweils entsprechende Farbstoffmischungen, welche anstelle des Farbstoffes der Formel (118) den Farbstoff der Formel (117) in gleicher Gewichtsmenge enthalten, so erhält man Polyamid 6.6-Gewebe, welche in den in blauen Farbtönen gefärbt sind.

Färbebeispiel 13: Man färbt 10 Teile Polyamid-6.6 Fasermaterial (Helancatrikot) in 500 Teilen einer wässrigen Flotte, die 2 g/l Ammonacetat und 0,5 %, bezogen auf das Fasergewicht des blauen Farbstoffs der Formel (118) gemäss Beispiel 4 enthält und mit Essigsäure auf pH 5 gestellt wird.

Die Färbedauer bei einer Temperatur von 98°C beträgt 30 bis 90 Minuten. Das gefärbte Polyamidfasermaterial wird anschliessend herausgenommen und wie üblich gespült und getrocknet. Man erhält ein in einem blauen Farbton völlig egal gefärbtes Gewebestück, das keinerlei materialbedingte Streifigkeit aufweist.

Färbebeispiel 14: Man färbt 10 Teile Polyamid 6.6-Garn in 400 Teilen einer wässrigen Flotte, die 1,5 g/l Ammonacetat und 0,5 %, bezogen auf das Fasergewicht, Farbstoff der Formel (118) gemäss Beispiel 4 enthält und mit Essigsäure auf pH 5,5 gestellt wird. Das Färbebad wird innerhalb von 30 Minuten auf 98°C erhitzt und 60 Minuten bei 96°C bis 98°C gehalten. Das gefärbte Garn wird anschliessend herausgenommen und wie üblich gespült und getrocknet. Man erhält ein in einem blauen Farbton gefärbtes Garn.

## Patentansprüche

1. Farbstoffmischungen, dadurch gekennzeichnet, dass sie mindestens einen 1:2-Kobaltkomplexfarbstoff der Formazanverbindung der Formel

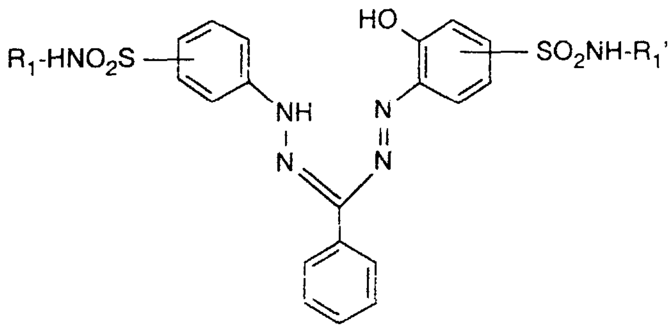

(8)

worin $R_1$ und $R_1$' unabhängig voneinander Wasserstoff oder $C_1$-$C_4$-Alkyl bedeuten und die Phenylreste der Verbindung der Formel (8) gegebenenfalls durch $C_1$-$C_4$-Alkyl, $C_1$-$C_4$-Alkoxy, $C_2$-$C_4$-Alkanoylamino, $C_1$-$C_4$-Alkylsulfonyl, $C_1$-$C_4$-Hydroxyalkylsulfonyl, Halogen, Sulfo, Hydroxyl, Carboxyl oder Nitro weitersubstituiert sind, zusammen mit mindestens einem Anthrachinonfarbstoff der Formel (2)

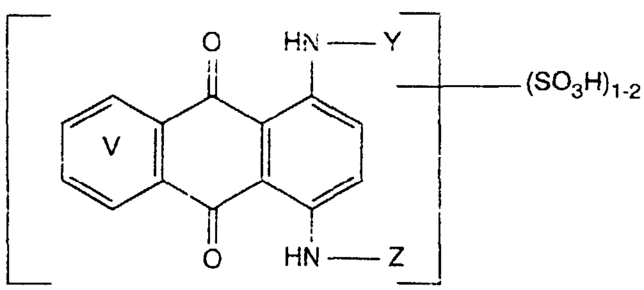

(2),

worin Y Wasserstoff, gegebenenfalls substituiertes $C_1$-$C_8$-Alkyl, Cyclohexyl, Phenyl oder 1,2,3,4-Tetrahydronaphthyl und

Z gegebenenfalls substituiertes $C_1$-$C_8$-Alkyl, Cyclohexyl, Phenyl oder 1,2,3,4-Tetrahydronaphthyl ist,

wobei der Ring V des Anthrachinonfarbstoffs der Formel (2) gegebenenfalls durch eine oder zwei Hydroxylgruppen weitersubstituiert ist,

oder zusammen mit mindestens einem 1:2-Chrom- oder 1 :2-Kobaltkomplexfarbstoff von zwei gleichen oder voneinander verschiedenen Azoverbindungen aus der Gruppe der Verbindungen der Formeln (3), (4), (5) und (6)

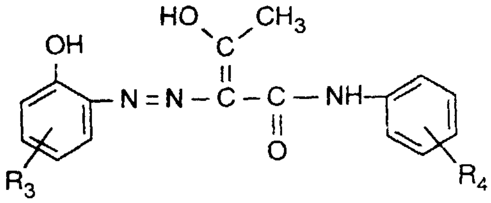

(3),

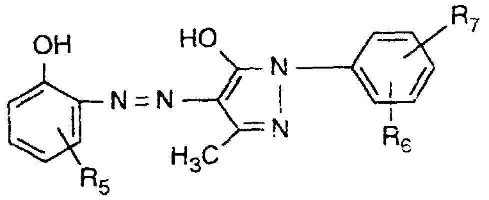

(4),

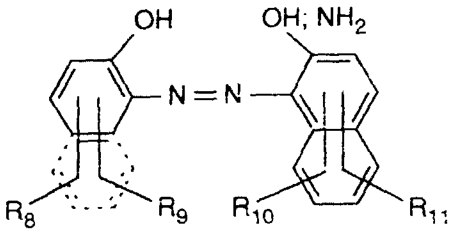

(5),

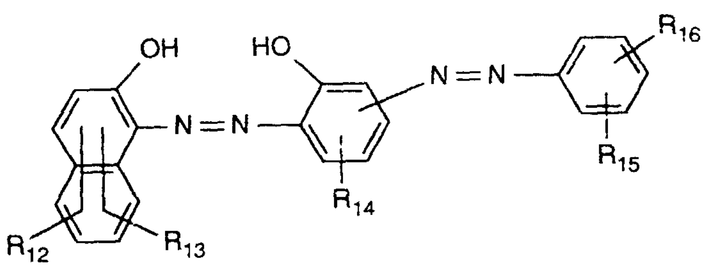

(6),

worin $R_3$, $R_4$, $R_5$, $R_6$, $R_7$, $R_8$, $R_9$, $R_{10}$, $R_{11}$, $R_{12}$, $R_{13}$, $R_{14}$, $R_{15}$ und $R_{16}$ unabhängig voneinander Wasserstoff, $C_1$-$C_4$-AJkyl, $C_1$-$C_4$-AJkoxy, $C_2$-$C_4$-Alkanoylamino, Halogen, Sulfo, Hydroxyl, Nitro, Sulfamoyl oder gegebenenfalls im Alkylteil durch Hydroxyl oder $C_1$-$C_4$-Alkoxy weitersubstituiertes N-$C_1$-$C_4$-Alkylsulfamoyl sind,

enthalten.

**2.** Farbstoffmischungen gemäss Anspruch 1, dadurch gekennzeichnet, dass sie als Anthrachinonfarbstoff der Formel (2) einen Anthrachinonfarbstoff der Formel

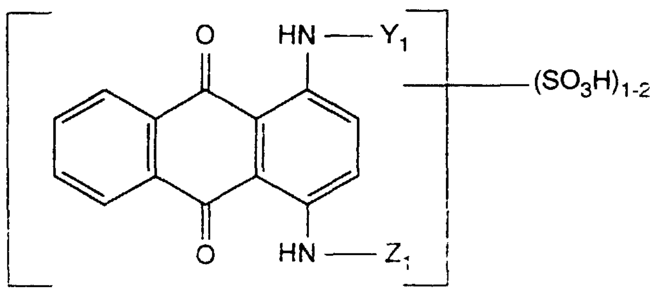

(9),

worin $Z_1$ gegebenenfalls durch $C_1$-$C_{12}$-Alkyl, $C_1$-$C_4$-Alkoxy, $C_2$-$C_4$-Alkanoylamino, Halogen, Benzoylaminomethyl, Chloracetylamino, Chloracetylaminomethyl oder α-Chloracryloylaminomethyl substituiertes Phenyl; Phenyl-$C_1$-$C_8$-alkyl, wobei der Phenylrest keine weiteren Substituenten enthält oder wie oben für $Z_1$ in der Bedeutung als Phenyl angegeben substituiert ist; gegebenenfalls durch $C_1$-$C_4$-Alkyl, Phenyisulfonylamino oder $C_1$-$C_4$-Alkylphenylsulfonylamino substituiertes Cyclohexyl; 1,2,3,4-Tetrahydronaphthyl; oder ein Rest der Formel

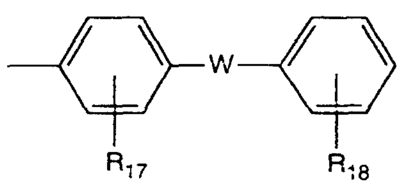

ist, wobei W ein Brückenglied der Formel -O-, -NH-CO-, $-OSO_2-$, $-NH-SO_2-$, $-CH_2-NH-SO_2-$ oder $-CH_2-N(CH_3)-SO_2-$ ist,

$R_{17}$ Wasserstoff, $C_1$-$C_4$-Alkyl, $C_1$-$C_4$-Alkoxy, oder Halogen und

$R_{18}$ Wasserstoff, $C_1$-$C_4$-Alkyl, $C_1$-$C_4$-Alkoxy, Halogen oder Acryloylaminomethyl ist, $Y_1$ Wasserstoff; $C_1$-$C_4$-. Alkyl; gegebenenfalls durch $C_1$-$C_4$-Alkyl, $C_1$-$C_4$-Alkoxy oder Halogen substituiertes Phenyl; gegebenenfalls im Phenylring durch $C_1$-$C_4$-Alkyl, $C_1$-$C_4$-Alkoxy, Halogen oder Benzoylaminomethyl substituiertes Phenyl-$C_1$-$C_8$-alkyl; gegebenenfalls durch $C_1$-$C_4$-Alkyl substituiertes Cyclohexyl; oder 1,2,3,4-Tetrahydronaphthyl ist, oder einen Anthrachinonfarbstoff der Formel

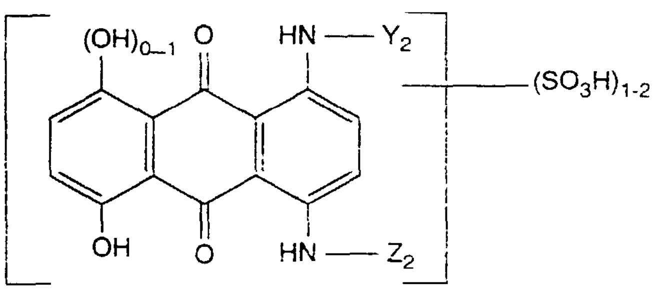

(10),

worin $Z_2$ gegebenenfalls durch $C_1$-$C_4$-Alkyl, $C_1$-$C_4$-Alkoxy oder Halogen substituiertes Phenyl oder gegebenenfalls durch $C_1$-$C_4$-.Alkyl oder Benzyl substituiertes Cyclohexyl ist und

$Y_2$ $C_1$-$C_4$-.Alkyl ist oder die oben für $Z_2$ angegebenen Bedeutungen hat,

oder einen Anthrachinenfarbstoff der Formel

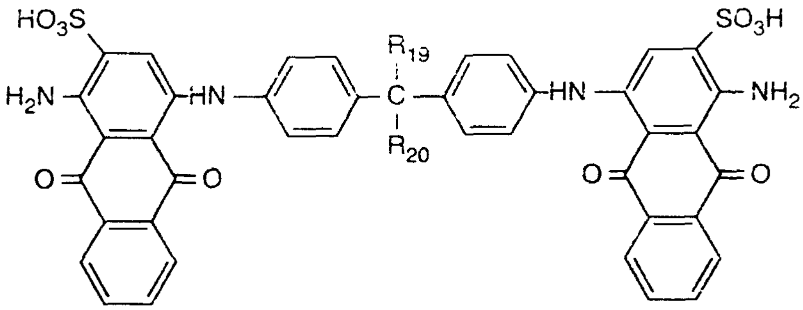

(11),

worin $R_{19}$ und $R_{20}$ Wasserstoff oder Methyl bedeuten,

enthält.

**3.** Farbstoffmischungen gemäss einem der Ansprüche 1 und 2, dadurch gekennzeichnet, dass sie als Anthrachinonfarbstoff der Formel (2) einen Anthrachinonfarbstoff der Formel

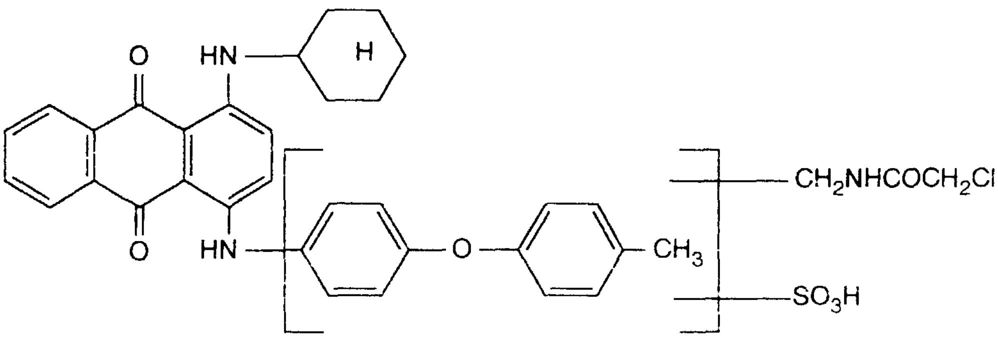

(12),

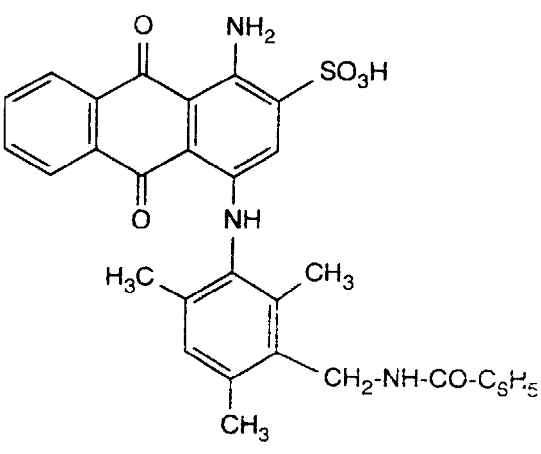

(13),

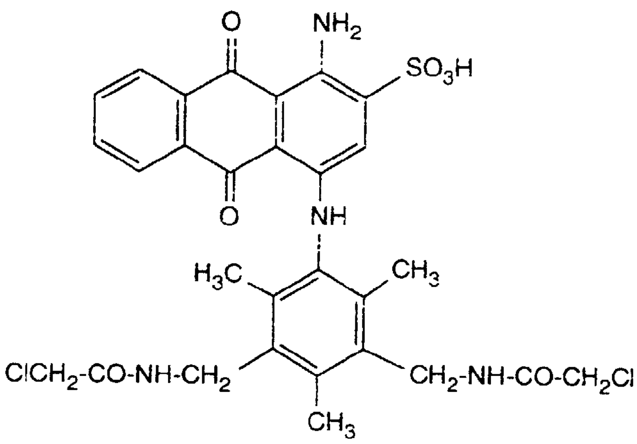

(14),

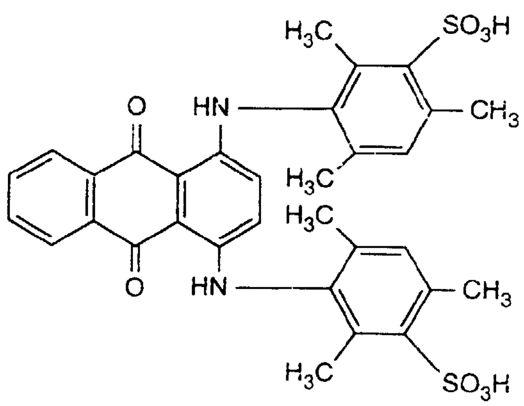

(15),

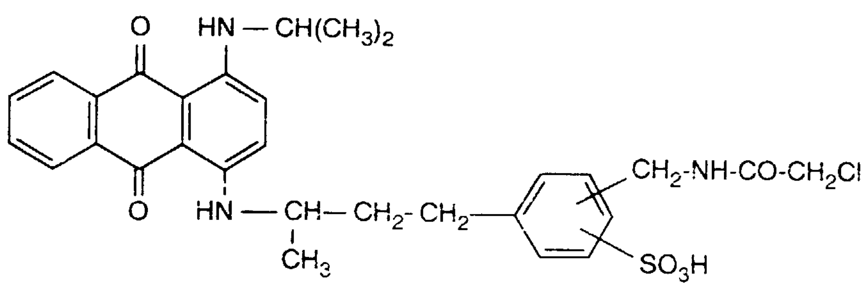

(16),

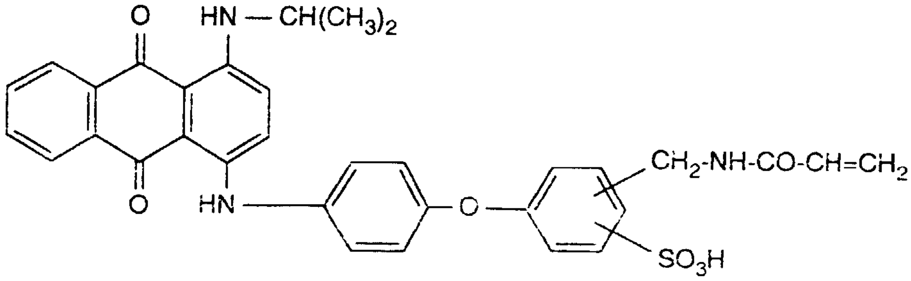

(17),

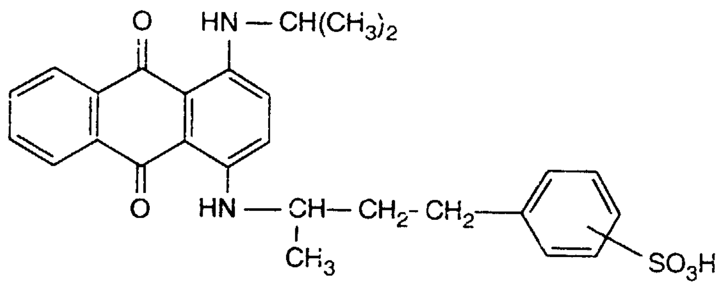

(18),

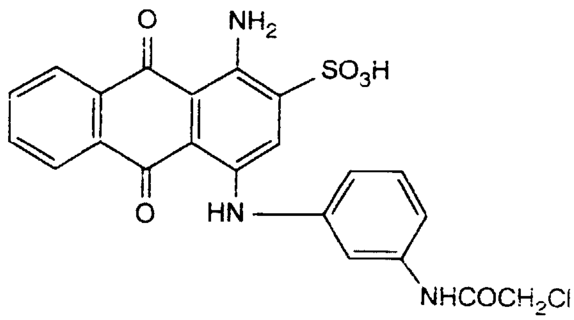

(19),

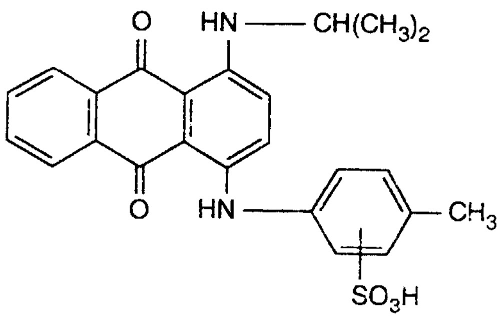

(20),

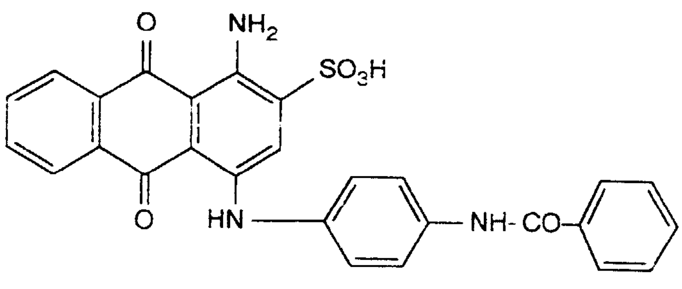

(21),

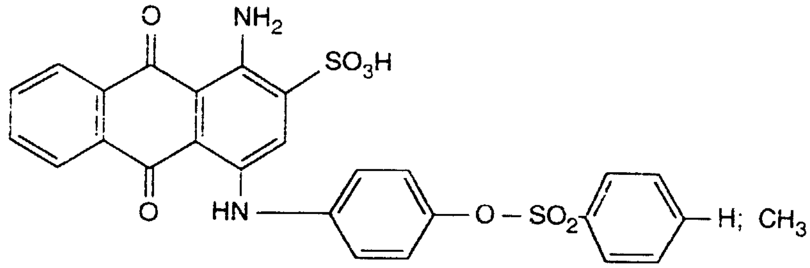

(22),

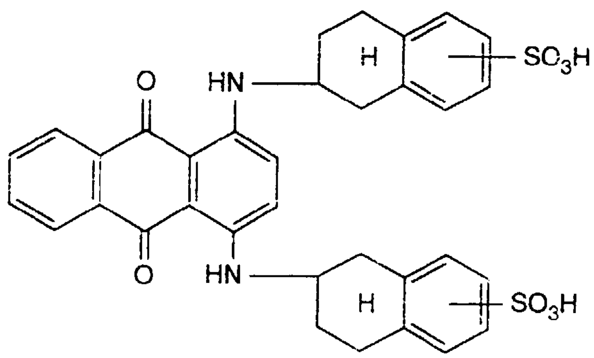

(23),

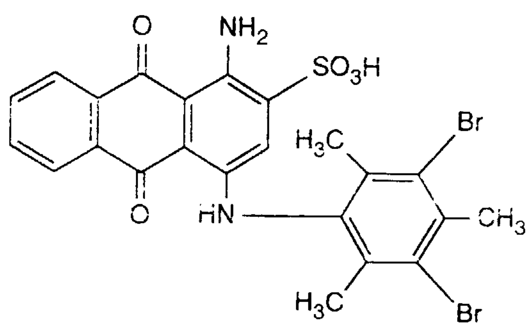

(24),

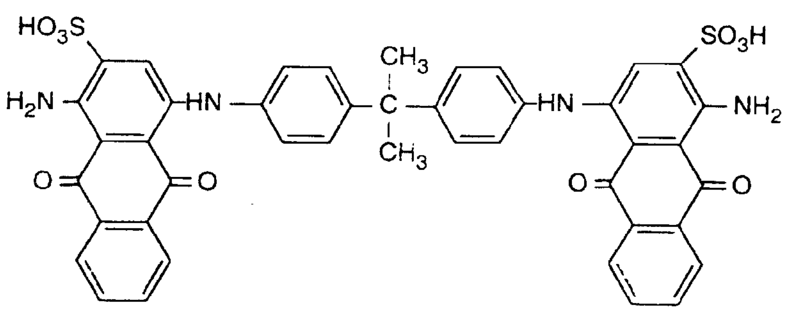

(25),

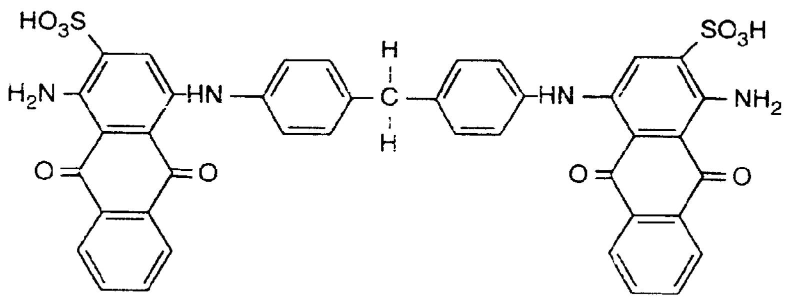

(26),

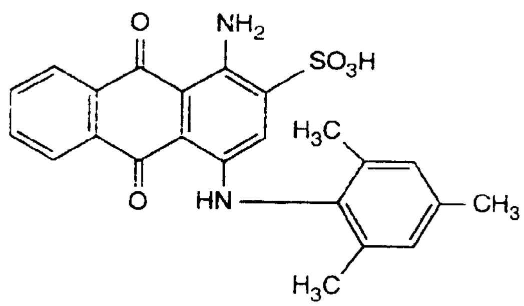

(27),

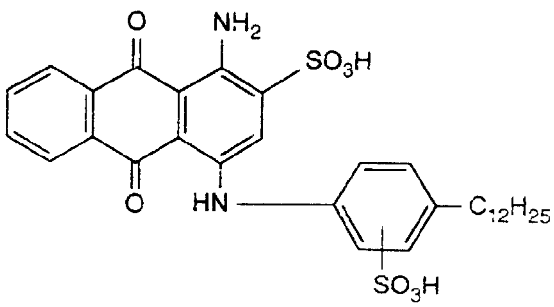

(28),

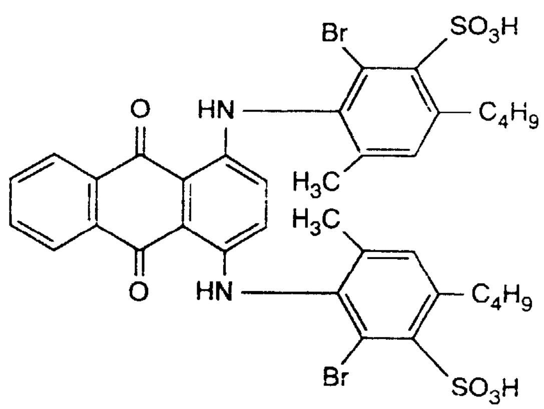

(29),

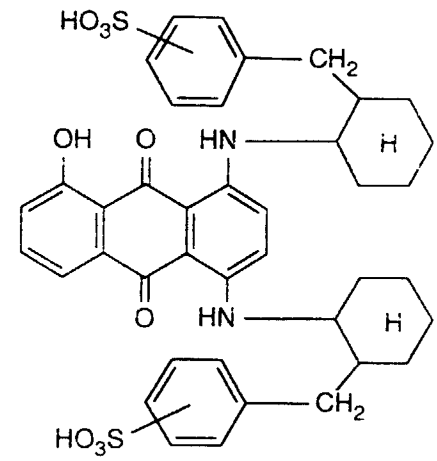

(30),

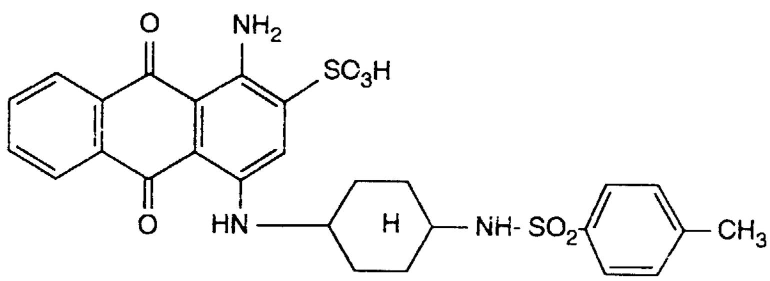

(31),

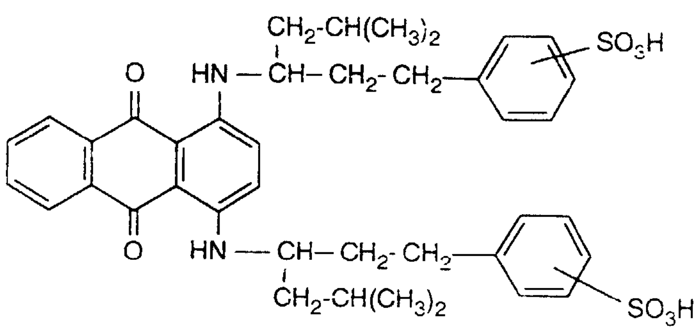

(32),

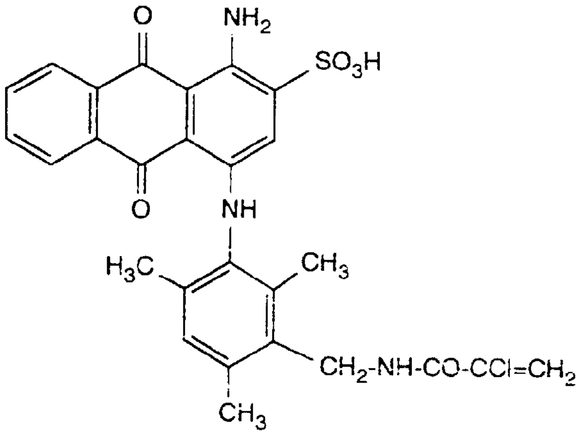

(33),

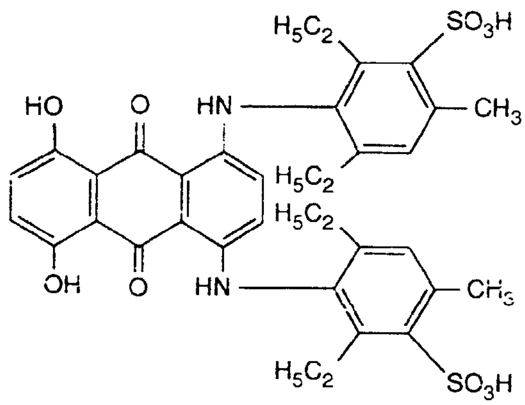

(34),

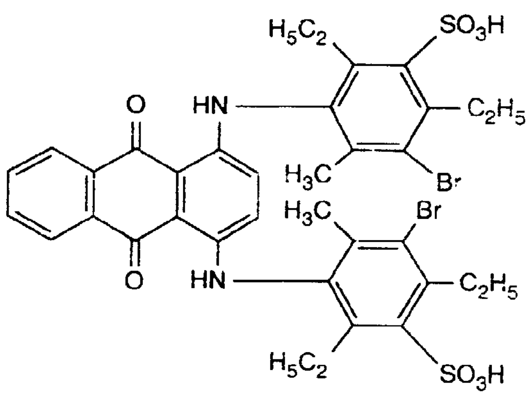

(35),

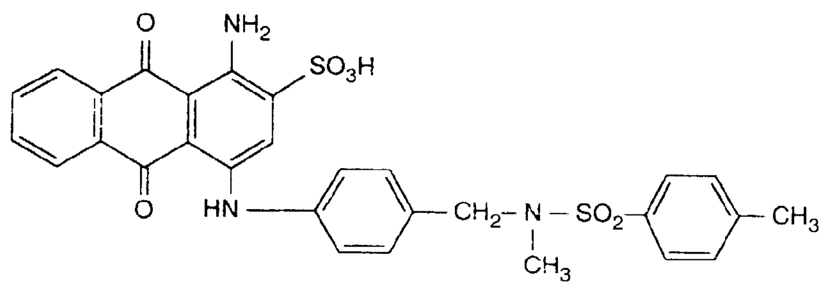

(36),

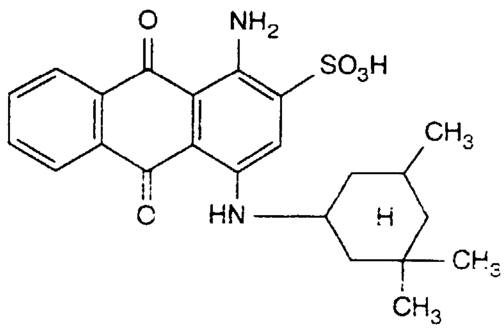

(37),

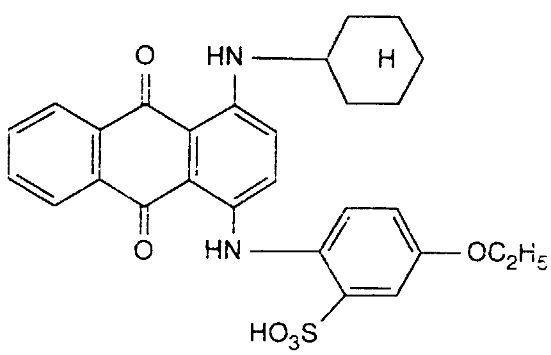

(38),

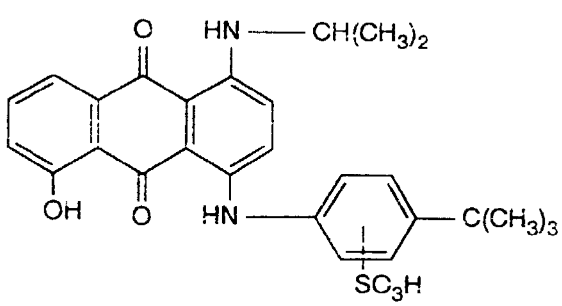

(39),

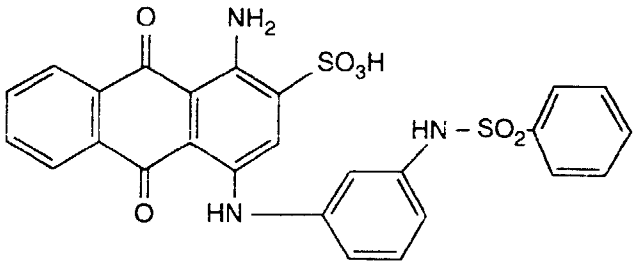

(40),

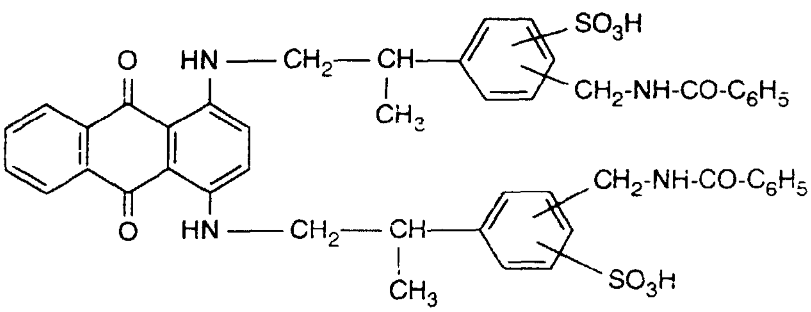

(41)

oder

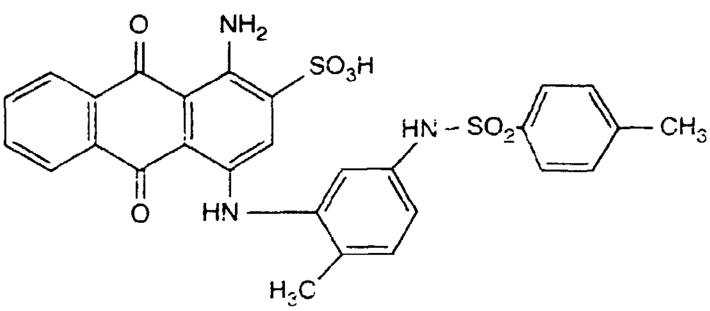

(42)

enthält.

**4.** Farbstoffmischungen gemäss einem der Ansprüche 1 bis 3, dadurch gekennzeichnet, dass sie als 1:2-Chrom- oder 1:2-Kobaltkomplexazofarbstoff einen Farbstoff der Formel

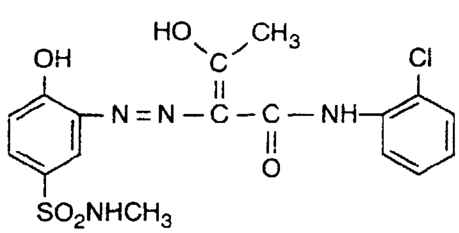

(43)

1:2-Kobaltkomplex

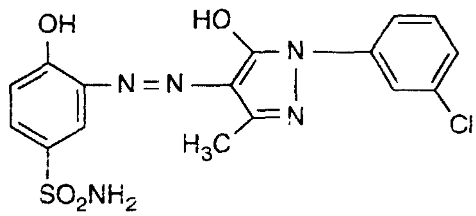

(44),

1:2-Kobaltkomplex

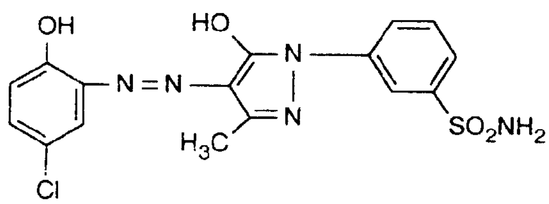

+

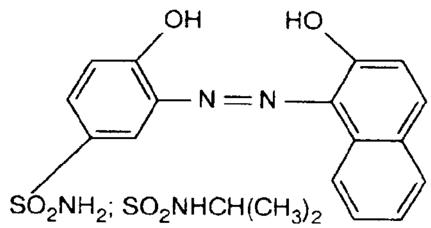

(45),

1:2-Kobaltkomplex

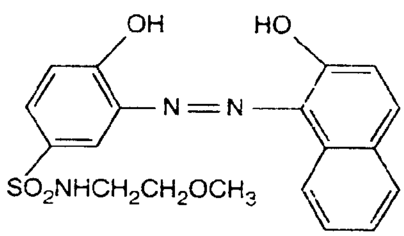

(46),

1:2-Kobaltkomplex

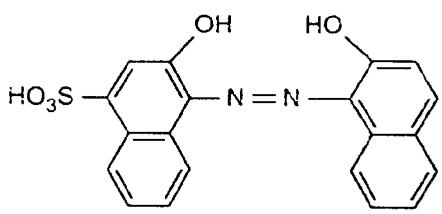

+

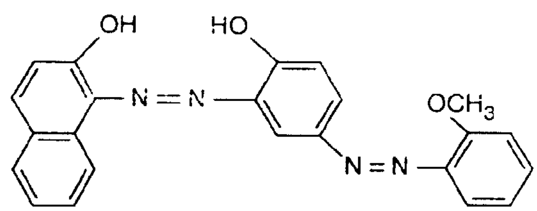

(47),

1:2-Chromkomplex

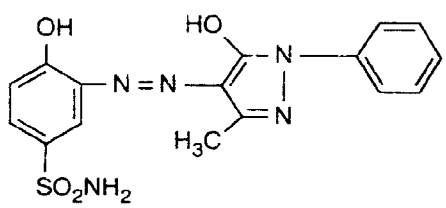

(48),

1:2-Kobaltkomplex

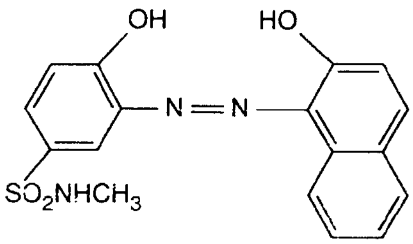

1:2-Kobaltkomplex

(49)

oder

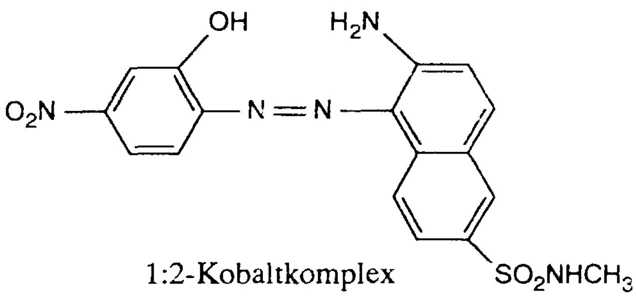

1:2-Kobaltkomplex

(50)

enthält.

5. Farbstoffmischungen gemäss einem der Ansprüche 1 bis 4, dadurch gekennzeichnet, dass sie 5 bis 95 Gew.-%, insbesondere 10 bis 90 Gew.%, des 1:2-Kobaltkomplexformazanfarbstoffes, bezogen auf die Gesamtmenge der Farbstoffe der Mischungen, enthalten.

6. Symmetrische 1:2-Kobaltkomplexformazanfarbstoffe von Verbindungen der Formel

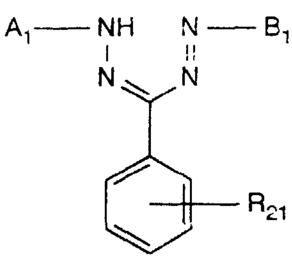

(51),

die der Formel

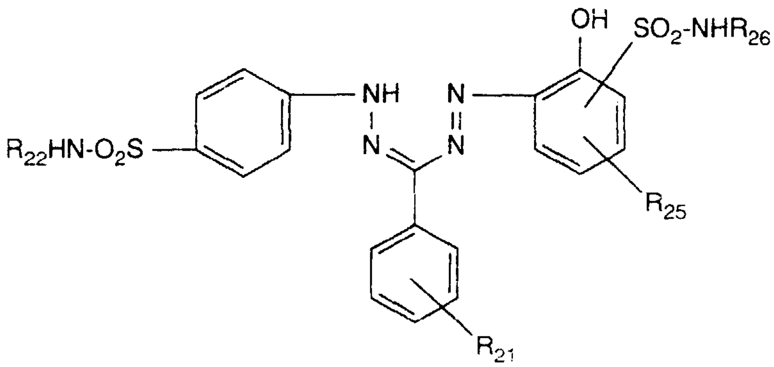

(51a)

entsprechen, worin $R_{21}$ Wasserstoff, Chlor oder Fluor, $R_{22}$ Wasserstoff, Methyl, Ethyl oder 2-Hydroxyethyl, $R_{25}$ Wasserstoff oder Chior und $R_{26}$ Wasserstoff, Methyl, Ethyl, 2-Hydroxyethyl, Phenyl, 2- oder 3-Carboxyphenyl, 2- oder 3-Sulfamoylphenyl oder 2oder 3-Sulfophenyl bedeuten.

**7.** Symmetrische 1:2-Kobaltkomplexformazanfarbstoffe gemäss Anspruch 6, worin $R_{21}$ Wasserstoff, Chlor oder Fluor, $R_{22}$ Wasserstoff, Methyl oder Ethyl, $R_{25}$ Chlor und $R_{26}$ Wasserstoff, Methyl, Ethy!, 2-Carboxyphenyl, 2-Sulfamoylphenyl oder 2-Sulfophenyl bedeuten.

**8.** Symmetrische 1:2-Kobaltkomplexformazanfarbstoffe von Verbindungen der Formel

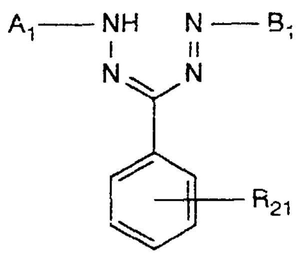

(51),

die der Formel

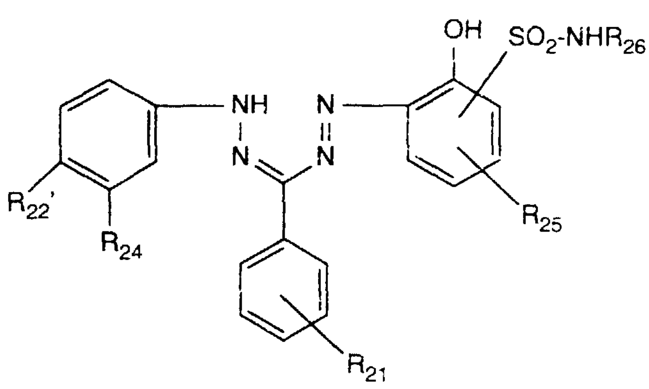

(51b)

entsprechen,
worin $R_{21}$ Wasserstoff, $R_{22}'$ Wasserstoff, $R_{24}$ Acetylamino oder insbesondere Propionylamino, $R_{25}$ Wasserstoff oder Chlor und $R_{26}$ Wasserstoff, Methyl oder Ethyl bedeuten.

**9.** Symmetrische 1:2-Kobaltkomplexformazanfarbstoffe gemäss Anspruch 6 der Formel

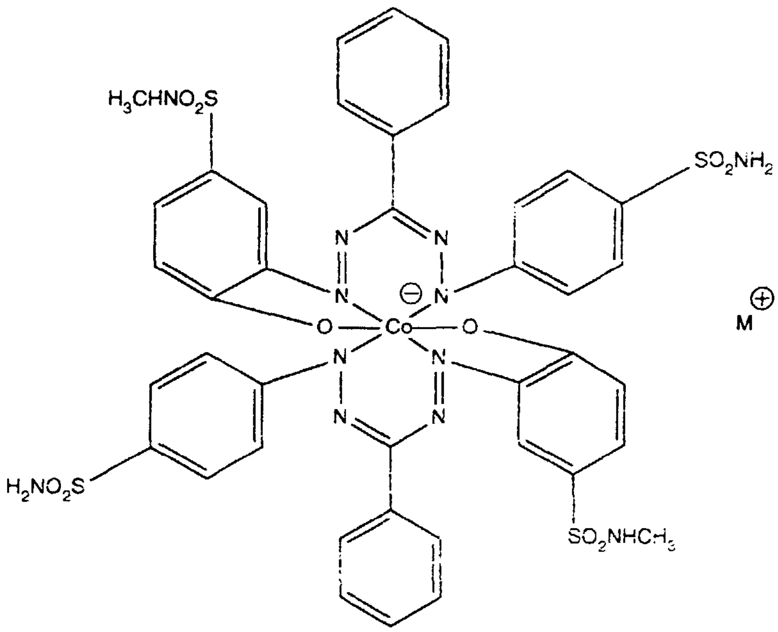

(51d),

worin $M^{\oplus}$ ein Kation bedeutet.

**10.** 1:2 Kobaltkomplexformazanfarbstoffe gemäss Anspruch 9, worin $M^{\oplus}$ ein Alkalimetallkation bedeutet.

**11.** Verfahren zur Herstellung von symmetrischen 1:2-Kobaltkomplexformazanfarbstoffen von Verbindungen der Formel (51) gemäss Anspruch 6 oder 8, dadurch gekennzeichnet, dass man eine Verbindung der Formel

$$B_1\text{-}NH_2 \quad (57)$$

diazotiert, auf das Hydrazon der Formel

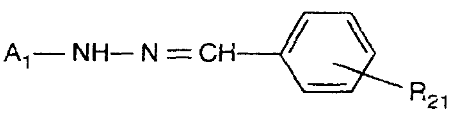

(58)

kuppelt, und die erhaltene metallfreie Verbindung mit einem Kobaltsalz metallisiert,
worin die Variablen $R_{21}$, $A_1$ und $B_1$ jeweils die den Formeln (51a) oder (51b) entsprechenden Bedeutungen haben.

**12.** Verfahren zum Färben oder Bedrucken von hydroxylgruppenhaltigen oder stickstoffhaltigen Fasermaterialien, dadurch gekennzeichnet, dass man einen symmetrischen 1 :2-Kobaltkomplexformazanfarbstoff gemäss einem der Ansprüche 6 bis 10 venvendet.

**13.** Verfahren zum Färben oder Bedrucken von hydroxylgruppenhaltigen oder stickstoffhaltigen Fasermaterialien mit einer Farbstoffmischung, dadurch gekennzeichnet, dass man eine Farbstoffmischung gemäss einem der Ansprüche 1 bis 5 verwendet.

**14.** Verfahren gemäss Anspruch 13; dadurch gekennzeichnet, dass man als Fasermaterial natürliches oder synthetisches Polyamidfasermaterial, insbesondere synthetisches Polyamidfasermaterial, verwendet.

## Claims

**1.** A dye mixture which comprises at least one 1:2 cobalt complex dye of the formazan compound of the formula

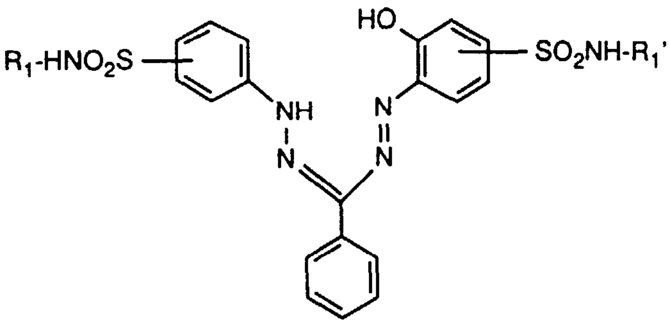

(8)

in which $R_1$ and $R_1'$ independently of one another are hydrogen or $C_1$-$C_4$alkyl and the phenyl radicals of the compound of the formula (8) may be further substituted by $C_1$-$C_4$alkyl, $C_1$-$C_4$alkoxy, $C_2$-$C_4$alkanoylamino, $C_1$-$C_4$alkylsulfonyl,
$C_1$-$C_4$hydroxyalkylsulfonyl, halogen, sulfo, hydroxyl, carboxyl or nitro,
together with at least one anthraquinone dye of the formula (2)

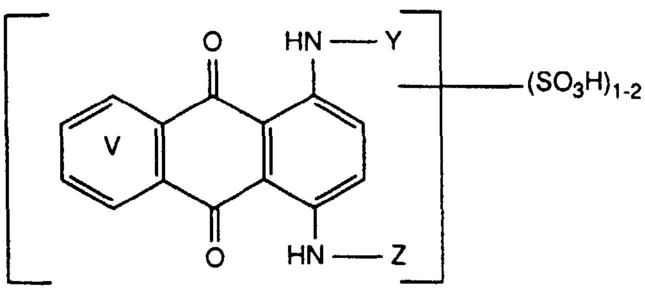

(2),

in which Y is hydrogen or substituted or unsubstituted $C_1$-$C_8$alkyl, cyclohexyl, phenyl or 1,2,3,4-tetrahydronaphthyl and
Z is substituted or unsubstituted $C_1$-$C_8$alkyl, cyclohexyl, phenyl or 1,2,3,4-tetrahydronaphthyl,
and in which the ring V of the anthraquinone dye of the formula (2) may be further substituted by one or two hydroxyl groups,
or together with at least one 1:2 chromium or 1:2 cobalt complex dye of two identical or different azo compounds from the group comprising compounds of the formulae (3), (4), (5) and (6)

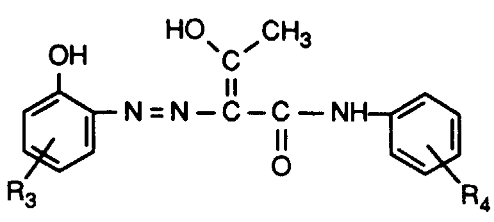

(3),

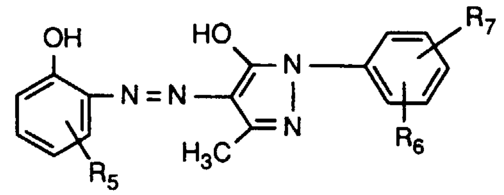

(4),

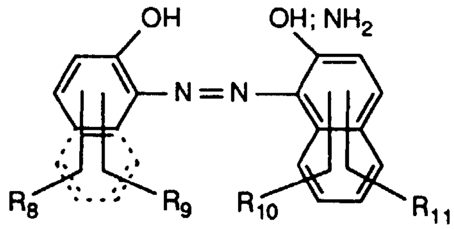

(5),

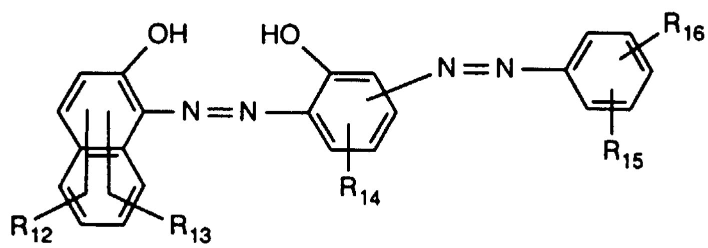

(6),

in which $R_3$, $R_4$, $R_5$, $R_6$, $R_7$, $R_8$, $R_9$, $R_{10}$, $R_{11}$, $R_{12}$, $R_{13}$, $R_{14}$, $R_{15}$ and $R_{16}$ independently of one another are hydrogen, $C_1$-$C_4$alkyl, $C_1$-$C_4$alkoxy, $C_2$-$C_4$alkanoylamino, halogen, sulfo, hydroxyl, nitro, sulfamoyl or N-$C_1$-$C_4$alkylsulfamoyl, which is unsubstituted or further substituted in the alkyl moiety by hydroxyl or $C_1$-$C_4$alkoxy.

**2.** A dye mixture according to claim 1, which comprises, as the anthraquinone dye of the formula (2), an anthraquinone dye of the formula

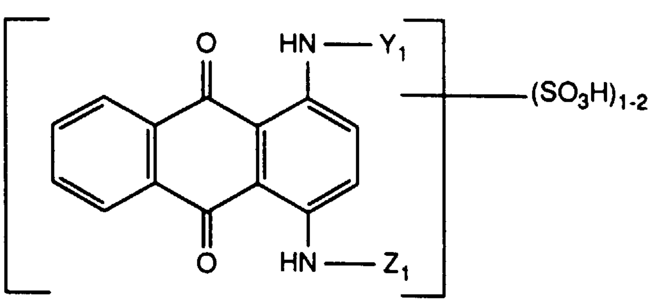

(9),

in which $Z_1$ is phenyl which is unsubstituted or substituted by $C_1$-$C_{12}$alkyl, $C_1$-$C_4$alkoxy, $C_2$-$C_4$alkanoylamino, halogen, benzoylaminomethyl, chloroacetylamino, chloroacetylaminomethyl or α-chloroacryloylaminomethyl; phenyl-$C_1$-$C_8$alkyl, where the phenyl radical contains no further substituents or is substituted as defined for a phenyl radical $Z_1$ above; cyclohexyl which is unsubstituted or substituted by $C_1$-$C_4$alkyl, phenylsulfonylamino or $C_1$-$C_4$alkylphenylsulfonylamino; 1,2,3,4-tetrahydronaphthyl; or a radical of the formula

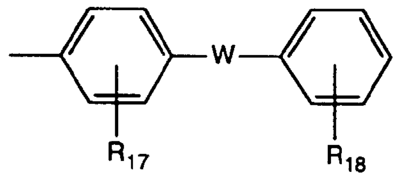

in which W is a bridge member of the formula -O-, -NH-CO-, $-OSO_2-$, $-NH-SO_2-$, $-CH_2-NH-SO_2-$ or $-CH_2-N(CH_3)-SO_2-$,
$R_{17}$ is hydrogen, $C_1$-$C_4$alkyl, $C_1$-$C_4$alkoxy or halogen and
$R_{17}$ is hydrogen, $C_1$-$C_4$alkyl, $C_1$-$C_4$alkoxy, halogen or acryloylaminomethyl,
$Y_1$ is hydrogen; $C_1$-$C_4$alkyl; phenyl which is unsubstituted or substituted by $C_1$-$C_4$alkyl, $C_1$-$C_4$alkoxy or halogen; phenyl-$C_1$-$C_8$alkyl which is unsubstituted or substituted in the phenyl ring by $C_1$-$C_4$alkyl, $C_1$-$C_4$alkoxy, halogen or benzoylaminomethyl; cyclohexyl which is unsubstituted or substituted by $C_1$-$C_4$alkyl; or 1,2,3,4-tetrahydronaphthyl, or an anthraquinone dye of the formula

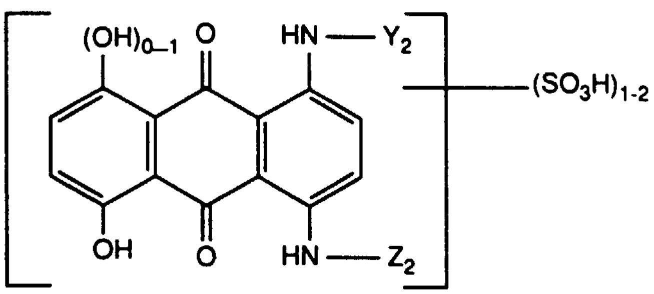

(10),

in which $Z_2$ is phenyl which is unsubstituted or substituted by $C_1$-$C_4$alkyl, $C_1$-$C_4$alkoxy or halogen or cyclohexyl which is unsubstituted or substituted by $C_1$-$C_4$alkyl or benzyl and $Y_2$ is $C_1$-$C_4$alkyl or is as defined above for $Z_2$, or an anthraquinone dye of the formula

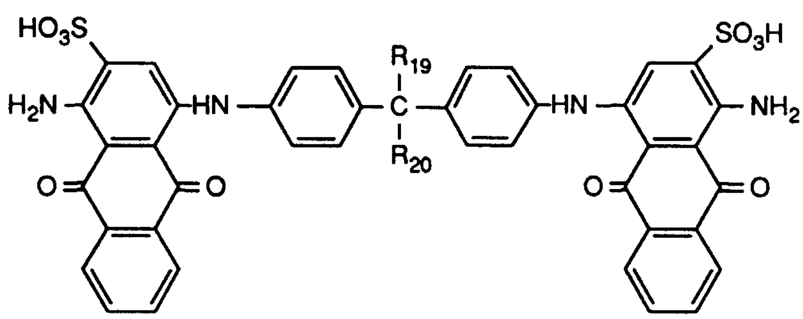

(11),

in which $R_{19}$ and $R_{20}$ are hydrogen or methyl.

**3.** A dye mixture according to either of claims 1 and 2, which comprises, as the anthraquinone dye of the formula (2), an anthraquinone dye of the formula

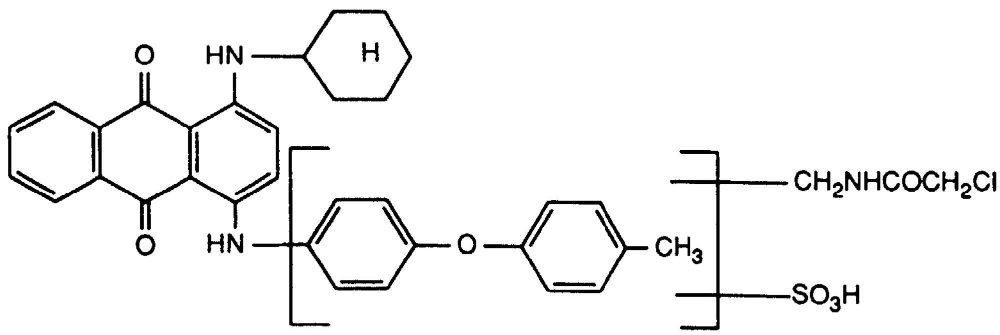

(12),

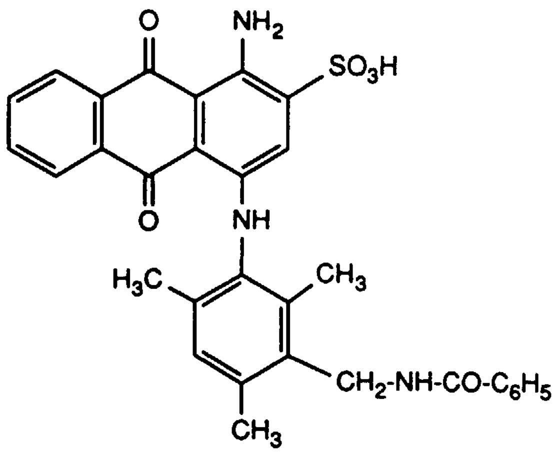

(13),

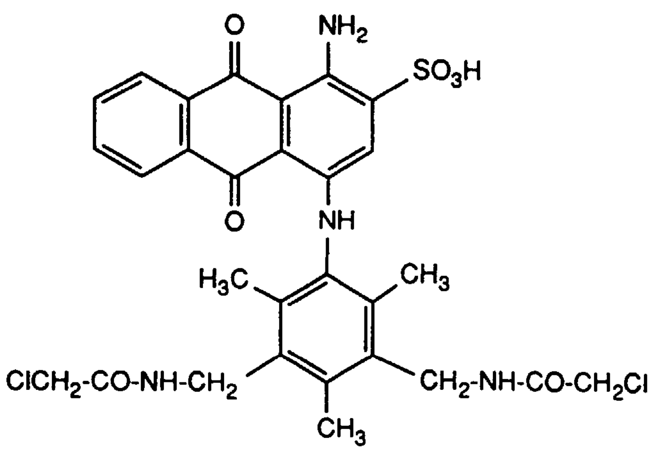

(14),

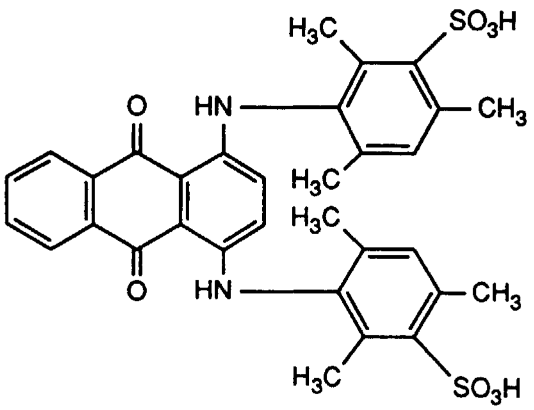

(15),

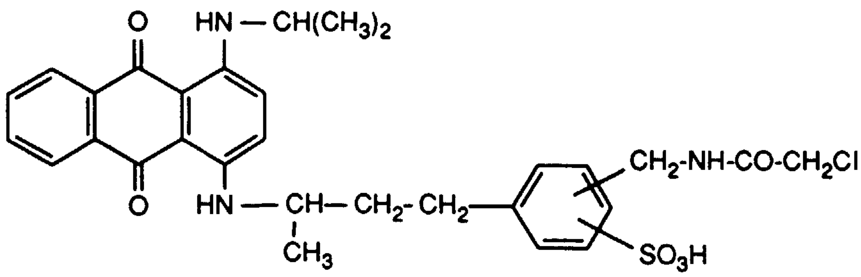

(16),

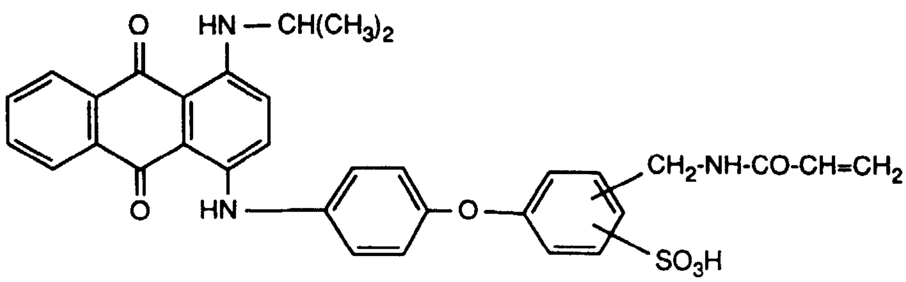

(17),

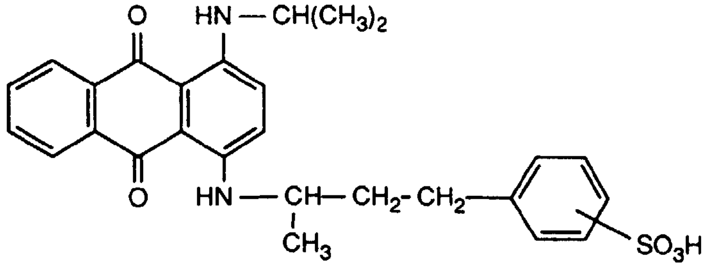

(18),

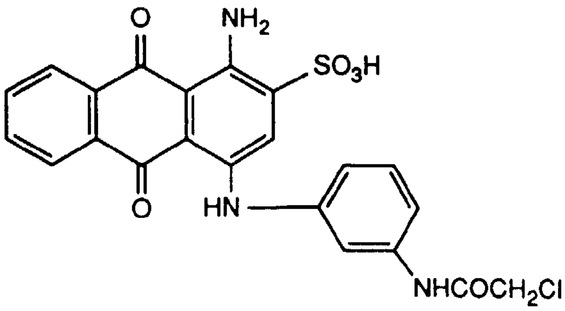

(19),

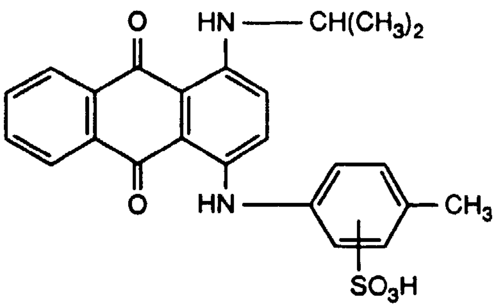

(20),

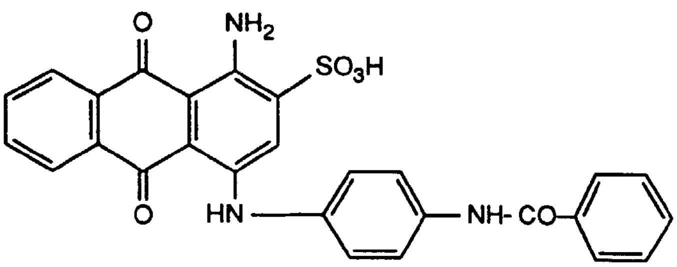

(21),

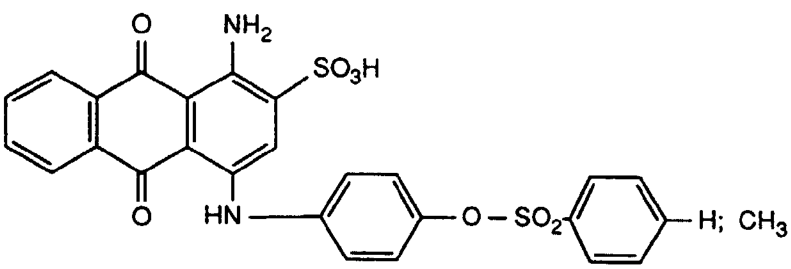

(22),

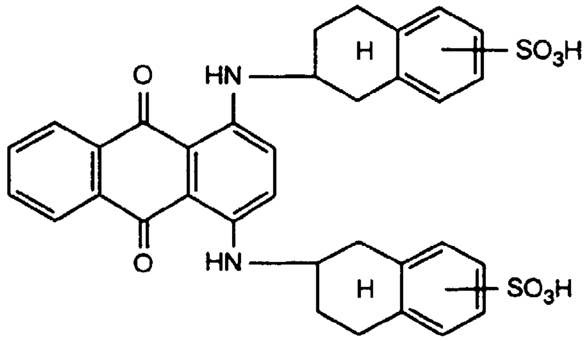

(23),

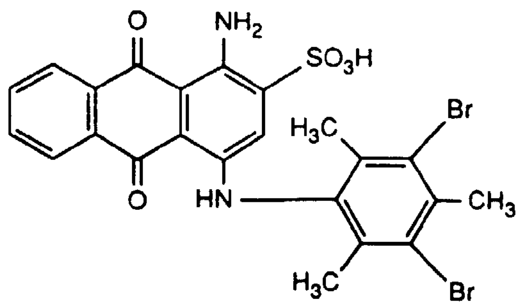

(24),

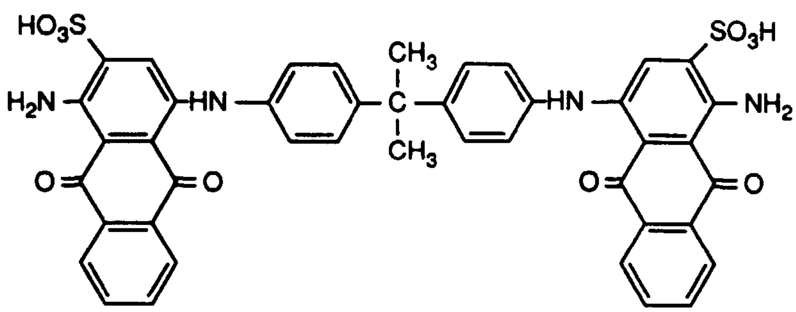

(25),

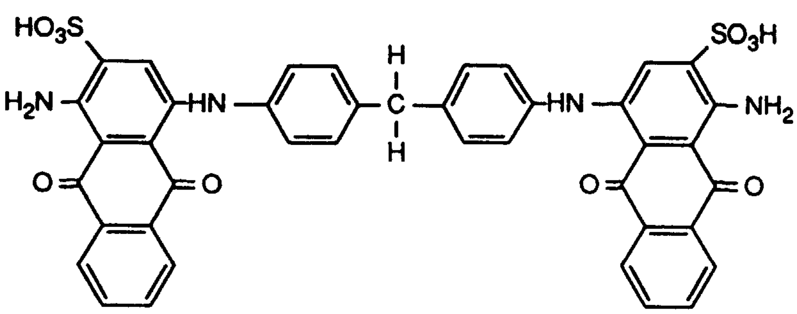

(26),

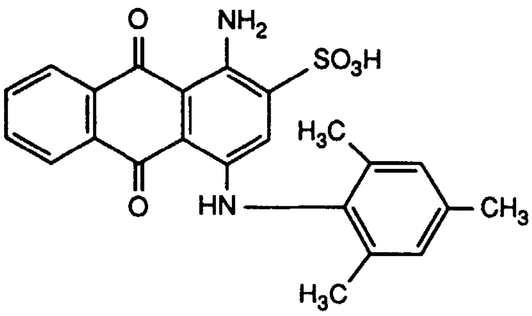

(27),

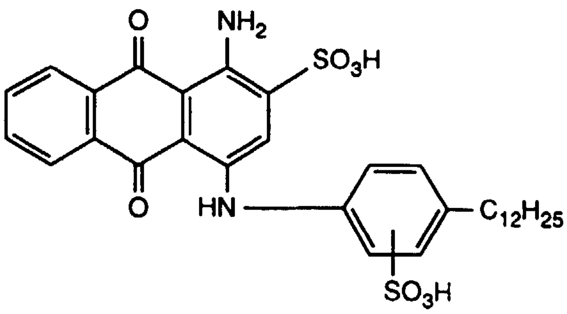

(28),

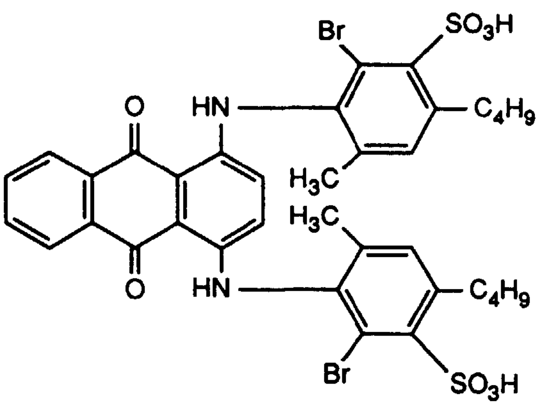

(29),

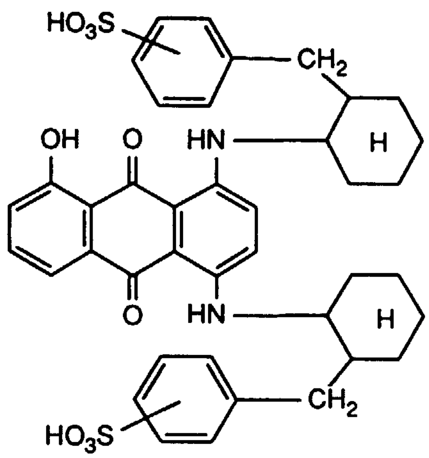

(30),

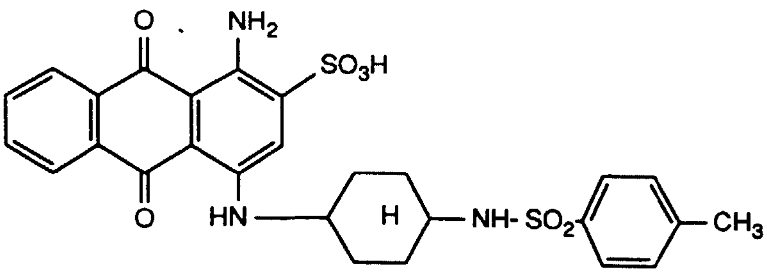

(31),

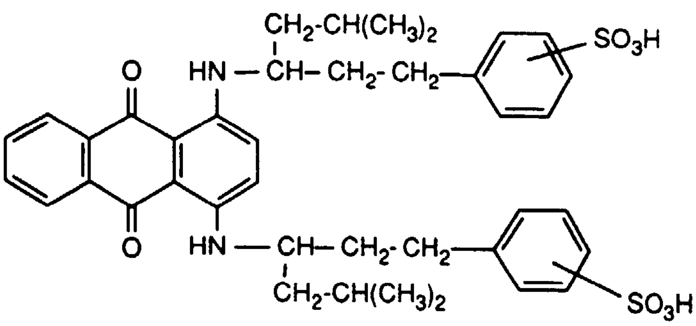

(32),

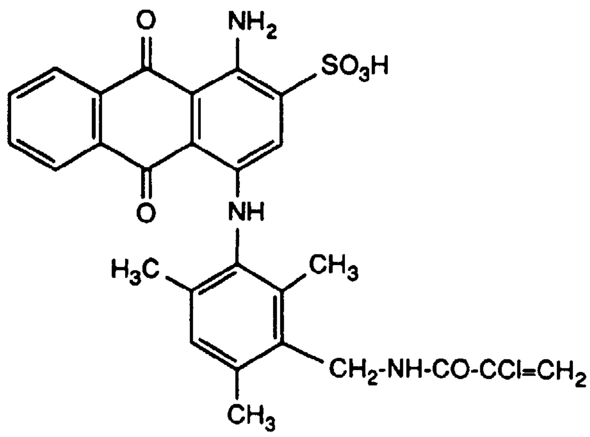

(33),

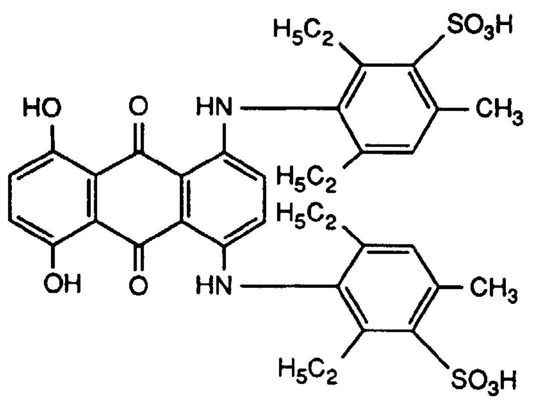

(34),

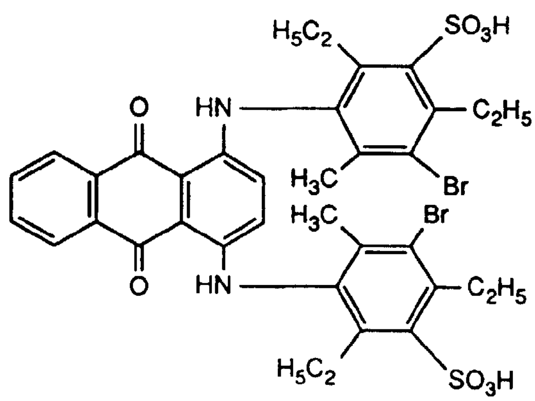

(35),

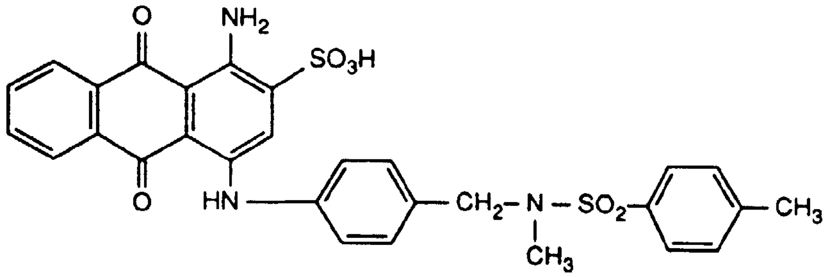

(36),

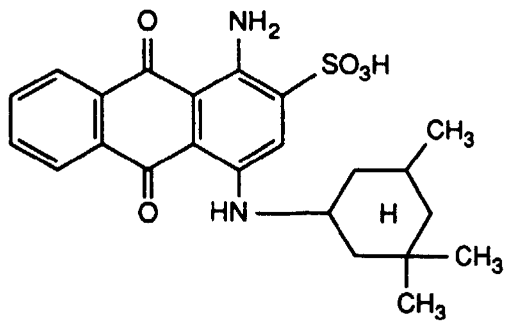

(37),

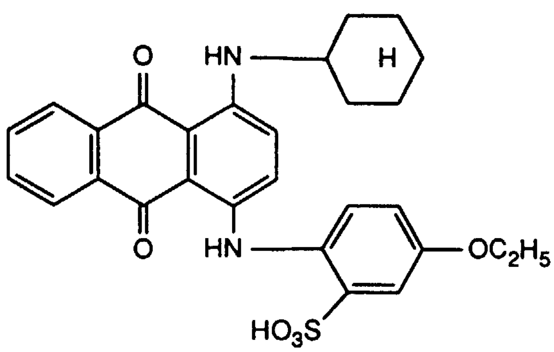

(38),

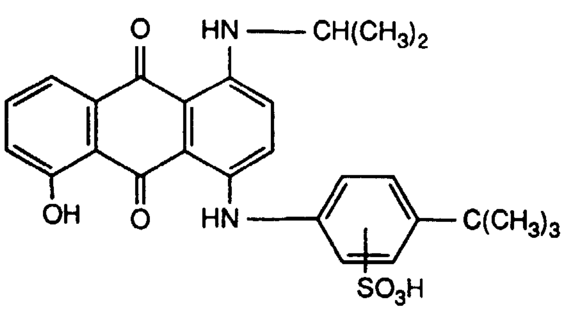

(39),

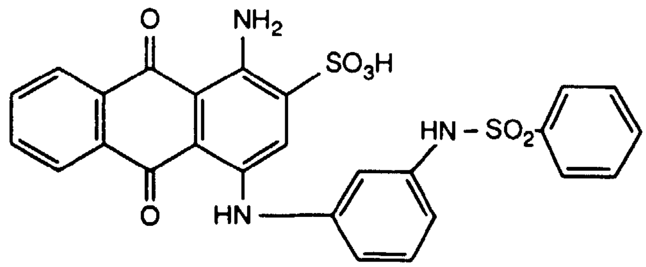

(40),

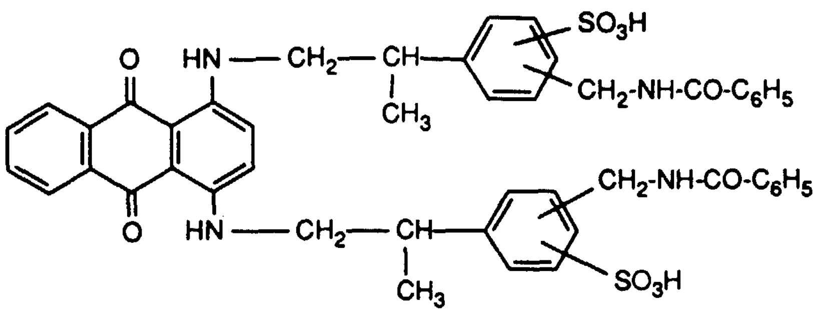

(41)

or

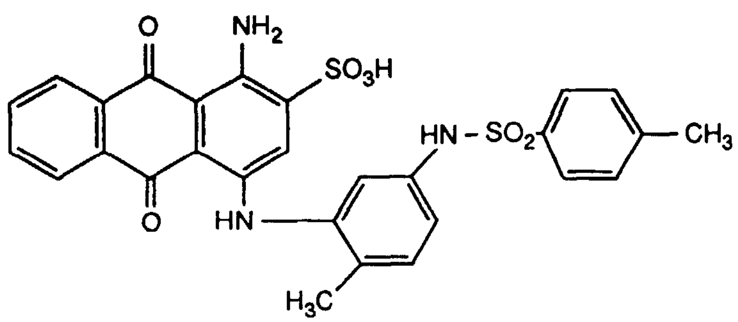

(42).

**4.** A dye mixture according to any one of claims 1 to 3, which comprises, as the 1:2 chromium or 1:2 cobalt complex azo dye, a dye of the formula

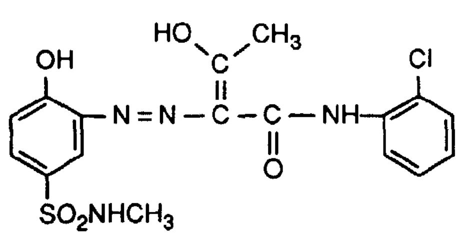

(43),

1:2 cobalt complex

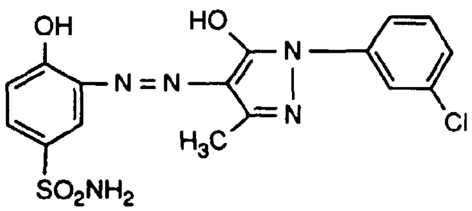

(44),

1:2 cobalt complex

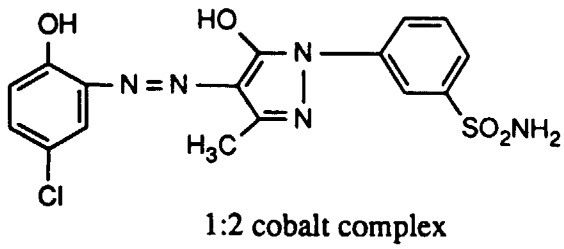

+

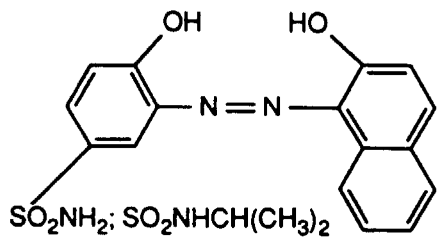

(45),

1:2 cobalt complex

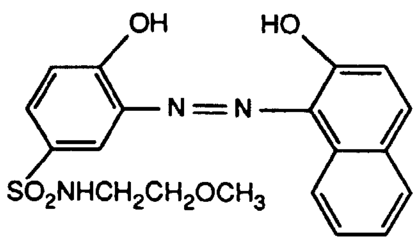

(46),

1:2 cobalt complex

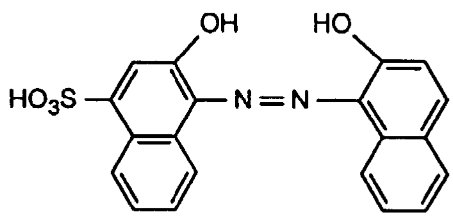

+

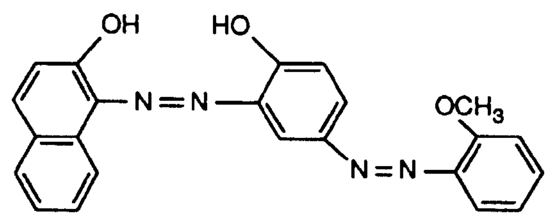

(47),

1:2 chromium complex

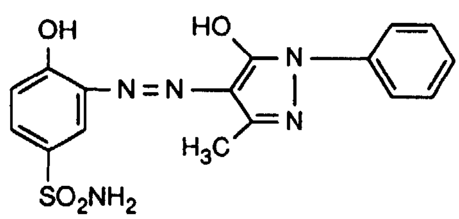

(48),

1:2 cobalt complex

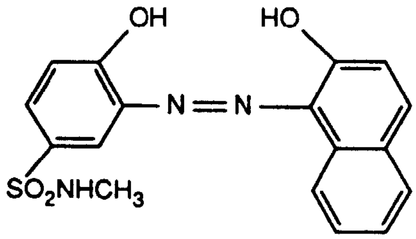

(49)

1:2 cobalt complex

or

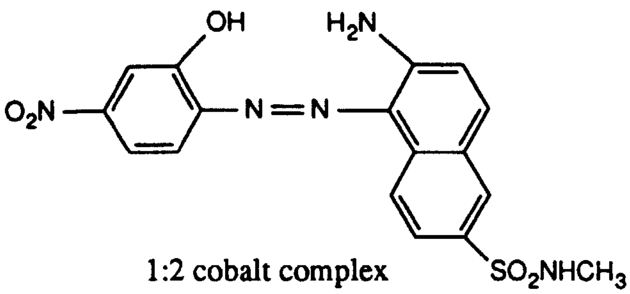

(50).

1:2 cobalt complex

5. A dye mixture according to any one of claims 1 to 4, which comprises 5 to 95% by weight, in particular 10 to 90% by weight, of the 1:2 cobalt complex formazan dye, based on the total amount of dyes of the mixture.

6. A symmetric 1:2 cobalt complex formazan dye of a compound of the formula

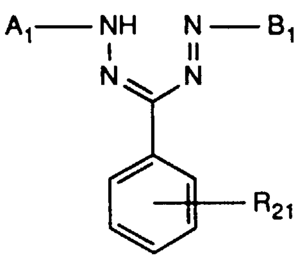

(51)

which corresponds to the formula

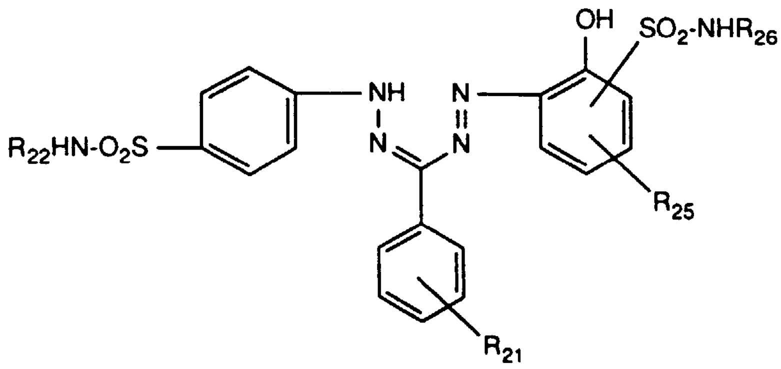

(51a),

in which $R_{21}$ is hydrogen, chlorine or fluorine, $R_{22}$ is hydrogen, methyl, ethyl or 2-hydroxyethyl, $R_{25}$ is hydrogen or chlorine and $R_{26}$ is hydrogen, methyl, ethyl, 2-hydroxyethyl, phenyl, 2- or 3-carboxyphenyl, 2- or 3-sulfamoylphenyl or 2- or 3-sulfophenyl.

**7.** A symmetric 1:2 cobalt complex formazan dye according to claim 6, in which $R_{21}$ is hydrogen, chlorine or fluorine, $R_{22}$ is hydrogen, methyl or ethyl, $R_{25}$ is chlorine and $R_{26}$ is hydrogen, methyl, ethyl, 2-carboxyphenyl, 2-sulfamoylphenyl or 2-sulfophenyl.

**8.** A symmetric 1:2 cobalt complex formazan dye of a compound of the formula

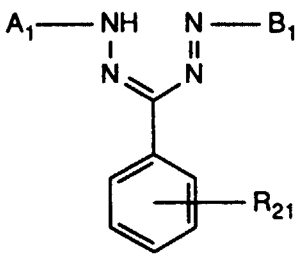

(51)

which corresponds to the formula

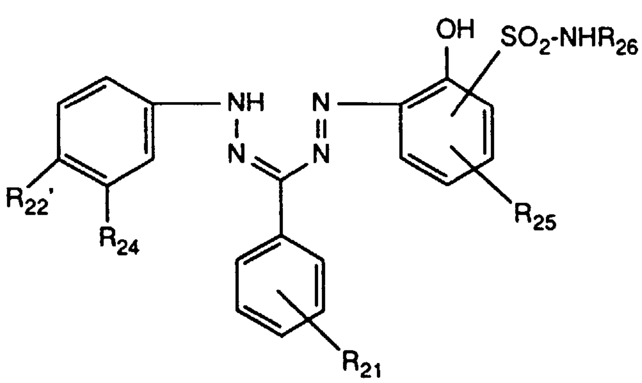

(51b),

in which $R_{21}$ is hydrogen, $R_{22}'$ is hydrogen, $R_{24}$ is acetylamino or, in particular, propionylamino, $R_{25}$ is hydrogen or chlorine and $R_{26}$ is hydrogen, methyl or ethyl.

**9.** A symmetric 1:2 cobalt complex formazan dye according to claim 6, of the formula

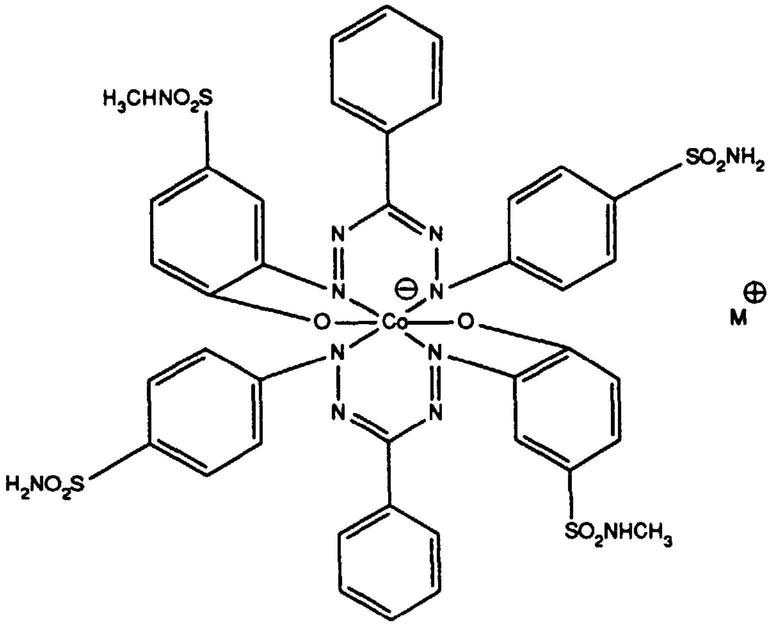

(51d),

in which $M^{\oplus}$ is a cation.

**10.** A 1:2 cobalt complex formazan dye according to claim 9, in which $M^{\oplus}$ is an alkali metal cation.

**11.** A process for the preparation of a symmetric 1:2 cobalt complex formazan dye of a compound of the formula (51) according to claim 6 or 8, which comprises diazotizing a compound of the formula

$$B_1\text{-}NH_2 \qquad (57),$$

coupling the product to the hydrazone of the formula

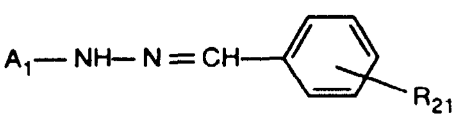

(58)

and metallizing the resulting metal-free compound with a cobalt salt, in which the variables $R_{21}$, $A_1$ and $B_1$ are in each case as defined for the formulae (51a) or (51b).

**12.** A process for dyeing or printing fibre materials containing hydroxyl groups or containing nitrogen, which comprises using a symmetric 1:2 cobalt complex formazan dye according to any one of claims 6 to 10.

**13.** A process for dyeing or printing fibre materials containing hydroxyl groups or containing nitrogen with a dye mixture, which comprises using a dye mixture according to any one of claims 1 to 5.

**14.** The process according to claim 13, wherein natural or synthetic polyamide fibre material, in particular synthetic polyamide fibre material, is used as the fibre material.

**Revendications**

**1.** Mélanges de colorants caractérisés en ce qu'ils contiennent au moins un colorants au complexe de cobalt 1:2 du composé de formazane de formule

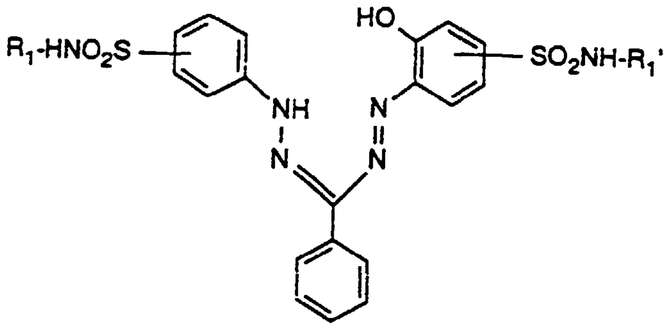

(8),

dans laquelle

$R_1$ et $R_1$' représentent, indépendamment l'un de l'autre, un atome d'hydrogène ou un groupe alkyle en $C_1$-$C_4$ et les restes phényle du composé de formule (8) sont éventuellement substitués encore par des groupes alkyle en $C_1$-$C_4$, alkoxy en $C_1$-$C_4$, (alcanoyl en $C_2$-$C_4$)-amino, (alkyl en $C_1$-$C_4$)sulfonyle, hydroxy (alkyl en $C_1$-$C_4$)-sulfonyle, halogène, sulfo, hydroxyle, carboxyle ou nitro,

ensemble avec au moins un colorant d'anthraquinone de formule (2)

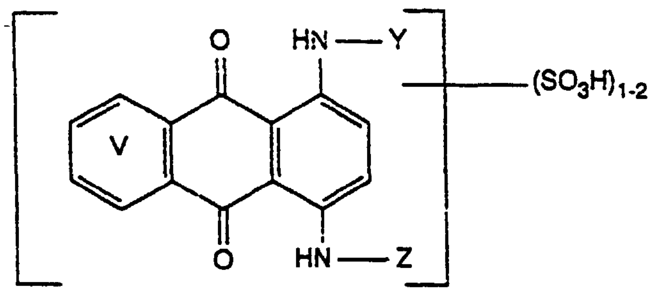

(2),

dans laquelle

Y représente un atome d'hydrogène, des groupes 1,2,3,4-tétrahydronaphtyle, phényle, cyclohexyle ou alkyle en $C_1$-$C_8$ éventuellement substitué et

Z représente des groupes 1,2,3,4-tétrahydronaphtyle, phényle, cyclohexyle ou alkyle en $C_1$-$C_8$ éventuellement substitué,

le cycle V du colorant d'anthraquinone de formule (2) étant éventuellement substitué encore par un ou deux groupes hydroxyle,

ou ensemble avec au moins un colorant de complexe de cobalt 1:2 ou de chrome 1:2 de deux composés azoïques identiques ou différents pris dans le groupe des composés de formule (3), (4), (5) et (6)

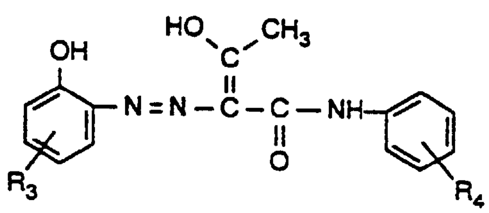

(3),

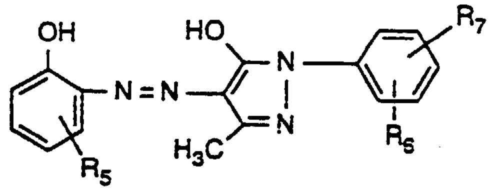

(4),

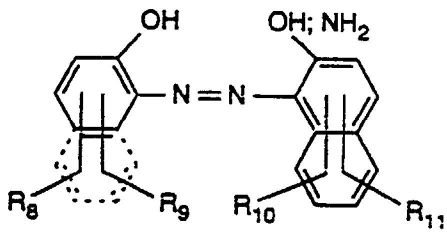

(5),

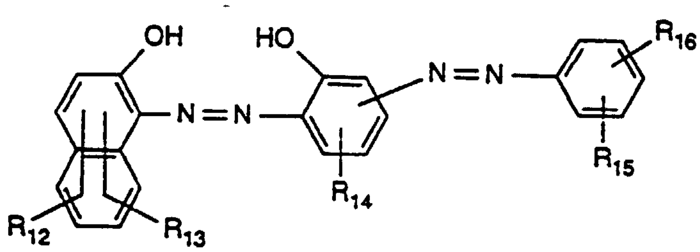

(6),

dans lesquelles $R_3$, $R_4$, $R_5$, $R_6$, $R_7$, $R_8$, $R_9$, $R_{10}$, $R_{11}$, $R_{12}$, $R_{13}$, $R_{14}$, $R_{15}$ et $R_{16}$ représentent, indépendamment les uns des autres, un atome d'hydrogène, des groupes alkyle en $C_1$-$C_4$, alkoxy en $C_1$-$C_4$, (alcanoyl en $C_2$-$C_4$)-amino, halogène, sulfo, hydroxyle, nitro, sulfamoyle ou N(alkyl en $C_1$-$C_4$)sulfamoyle éventuellement substitué encore dans le fragment alkyle par des groupes hydroxyle ou alkoxy en $C_1$-$C_4$.

**2.** Mélanges de colorants selon la revendication 1, caractérisés en ce qu'ils contiennent en tant quez colorant d'anthraquinone de formule (2), un colorant d'anthraquinone de formule

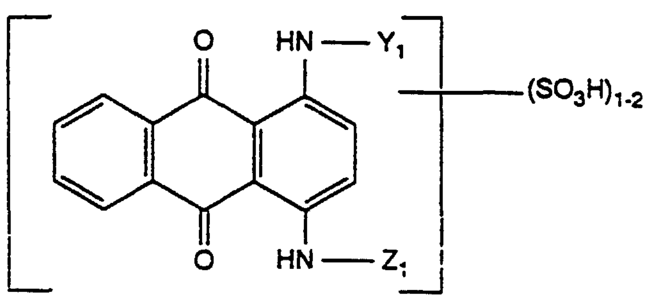

(9)

dans laquelle

$Z_1$ représente un groupe phényle éventuellement substitué par des groupes alkyle en $C_1$-$C_{12}$, alkoxy en $C_1$-$C_4$, (alcanoyl en $C_2$-$C_4$) amino, halogène, benzoylaminométhyle, chloracétylamino, chloracétylaminométhyle ou α-chloracryloylaminométhyle ; phénylalkyle en $C_1$-$C_8$, le reste phényle ne contenant pas d'autres substituants ou étant substitué comme indiqué ci-dessus pour $Z_1$ ayant la signification de phényle ; un groupe cyclohexyle éventuellement substitué par des groupes alkyle en $C_1$-$C_4$, phénylsulfonylamino ou

(alkyl en $C_1$-$C_4$)phénylsulfonylamino ; 1,2,3,4-tétrahydronaphtyle ; ou un reste de formule

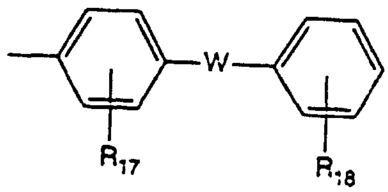

W représentant un élément de pontage de formule -O-, -NH-CO-, $-OSO_2-$, $-NH-SO_2-$, $CH_2-NH-SO_2-$ ou $-CH_2-N(CH_3)-SO_2-$,

$R_{17}$ représente un atome d'hydrogène, des groupes alkyle en $C_1$-$C_4$, alkoxy en $C_1$-$C_4$ ou halogène et

$R_{18}$ représente un atome d'hydrogène, des groupes alkyle en $C_1$-$C_4$, alkoxy en $C_1$-$C_4$, halogène ou acryloylaminométhyle,

$Y_1$ représente un atome d'hydrogène ; des groupes alkyle en $C_1$-$C_4$ ; phényle éventuellement substitué par des groupes alkyle en $C_1$-$C_4$, alkoxy en $C_1$-$C_4$ ou halogène ; phénylalkyle en $C_1$-$C_{18}$ substitué éventuellement sur le cycle phényle par des groupes alkyle en $C_1$-$C_4$, alkoxy en $C_1$-$C_4$, halogène ou benzoylaminométhyle ; cyclohexyle éventuellemnt substitué par alkyle en $C_1$-$C_4$ ; ou représente 1,2,3,4-tétrahydronaphtyle,

ou un colorant d'anthraquinone de formule

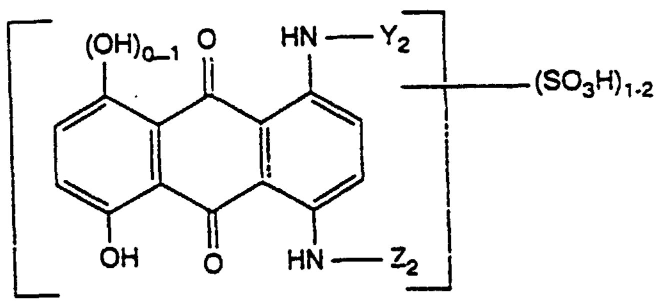

(10)

dans laquelle

$Z_2$ représente un groupe phényle éventuellement substitué par des groupes alkyle en $C_1$-$C_4$, alkoxy en $C_1$-$C_4$ ou halogène ou un groupe cyclohexyle éventuellement substitué par des groupes alkyle en $C_1$-$C_4$ ou benzyle et

$Y_2$ représente un groupe alkyle en $C_1$-$C_4$ ou possède la signification donnée ci-dessus pour $Z_2$,

ou un colorant d'anthraquinone de formule

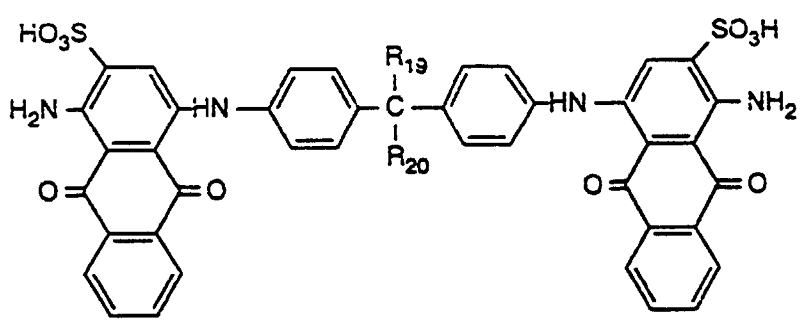

(11)

dans laquelle $R_{19}$ et $R_{20}$ représentent un atome d'hydrogène ou un groupe méthyle.

3. Mélange de colorants selon l'une des revendications 1 et 2, caractérisé en ce qu'ils contiennent en tant que colorant d'anthraquinone de formule (2) un colorant d'anthraquinone de formule

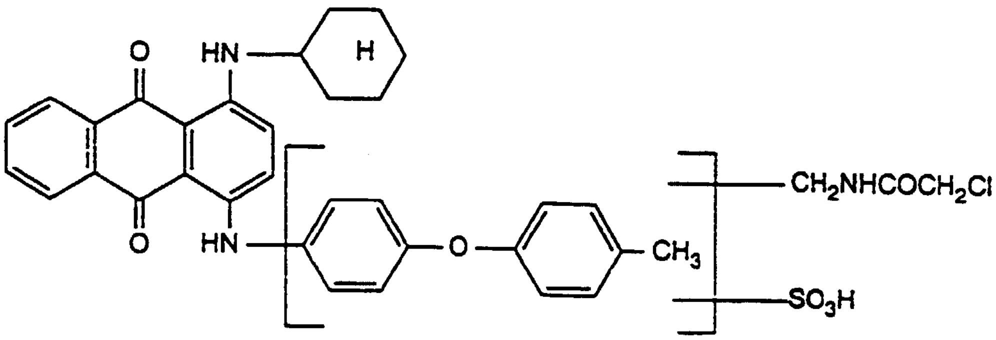

(12),

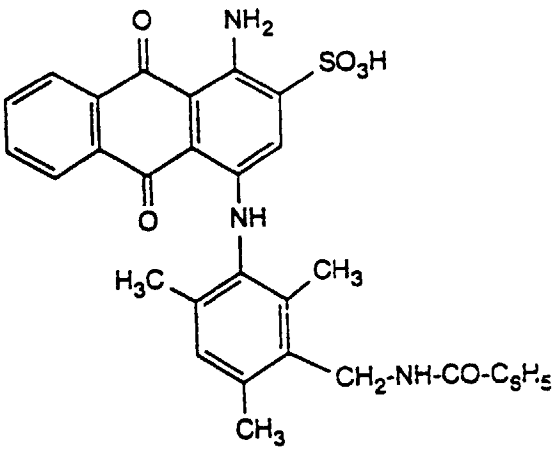

(13),

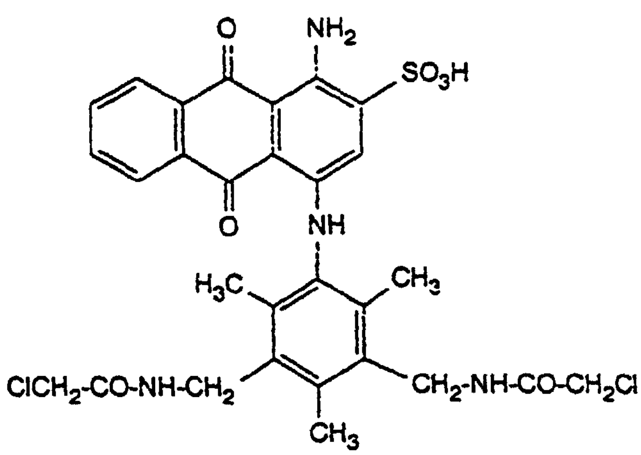

(14),

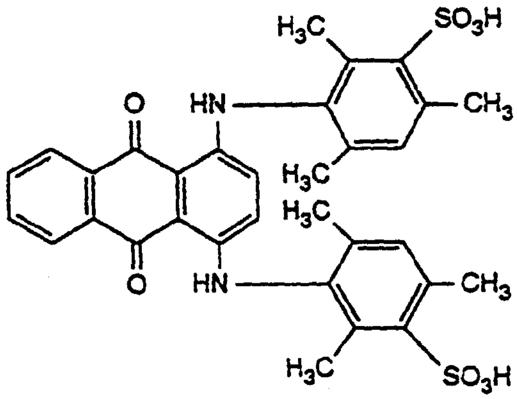

(15),

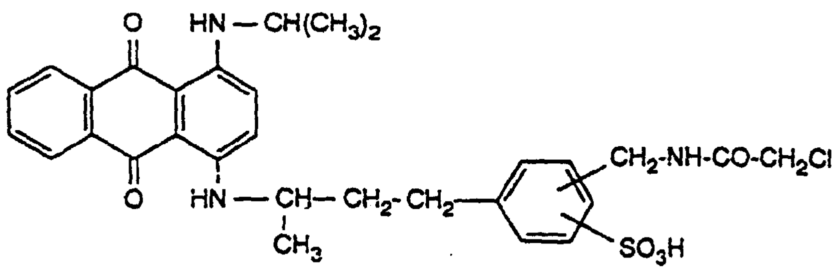

(16),

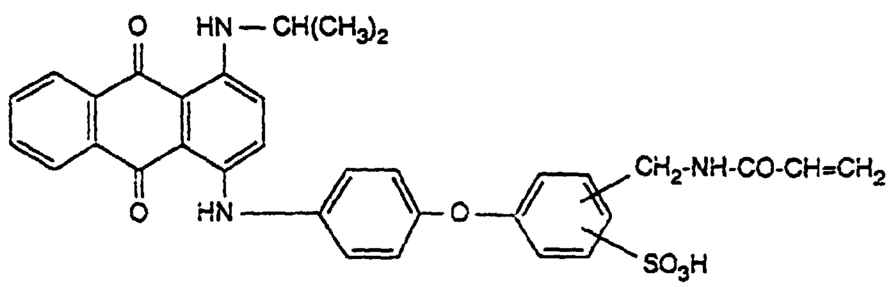

(17),

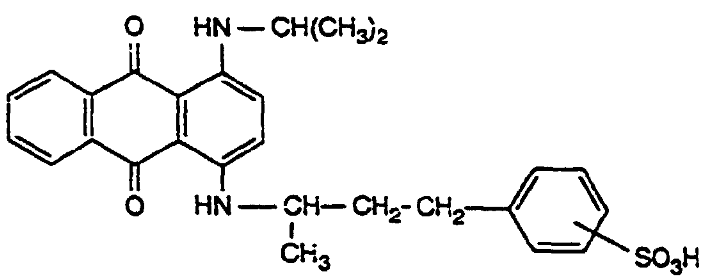

(18),

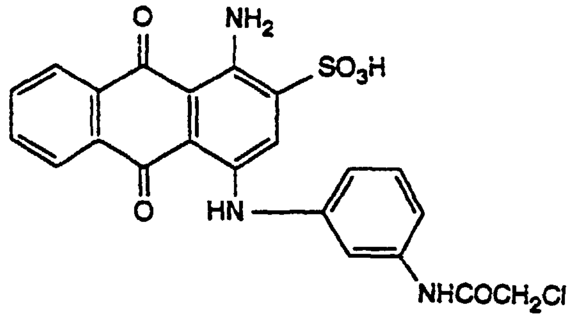

(19),

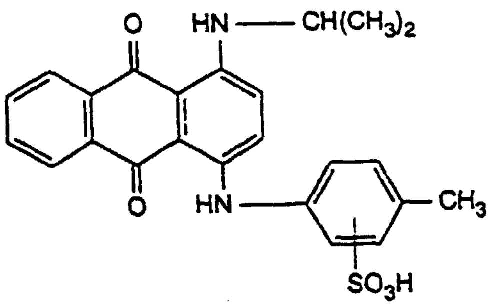

(20),

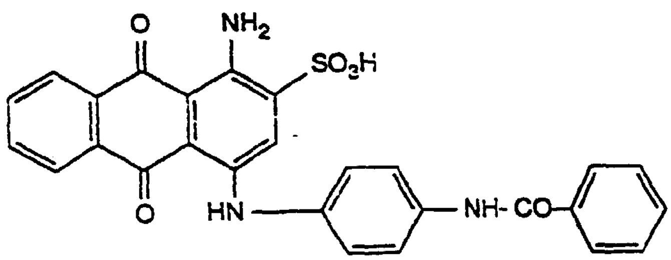

(21),

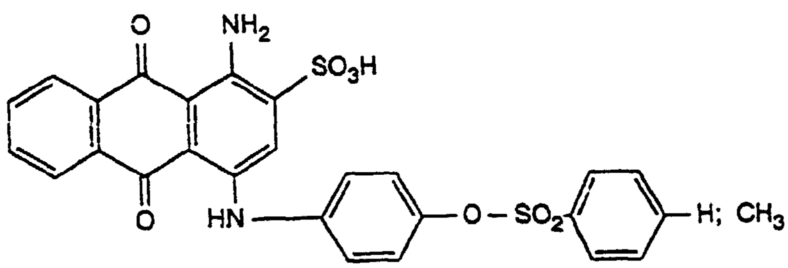

(22),

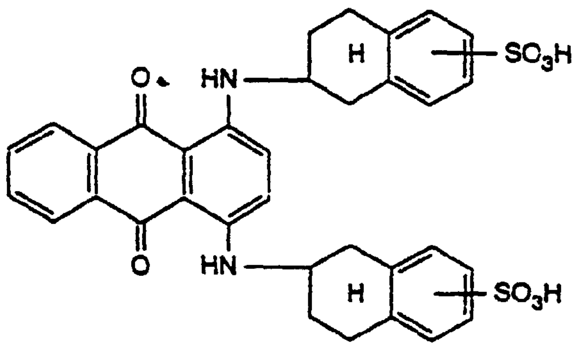

(23),

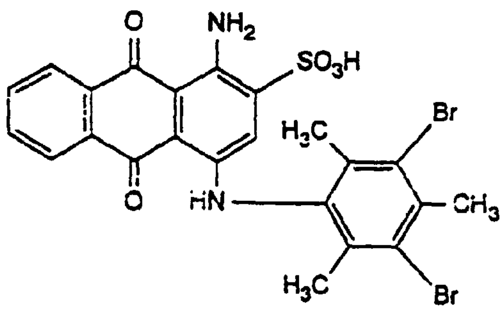

(24),

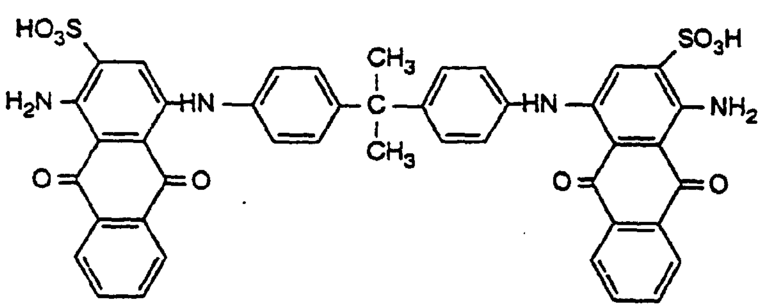

(25),

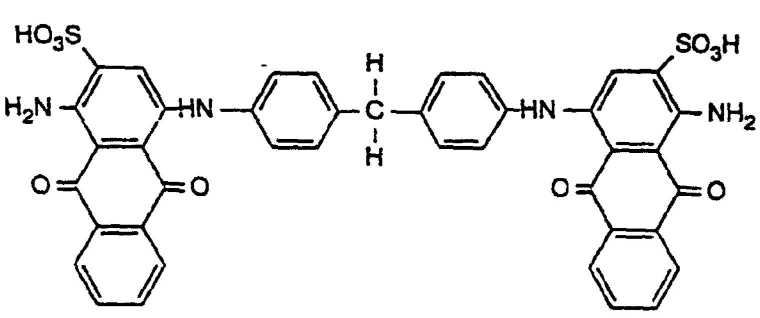

(26),

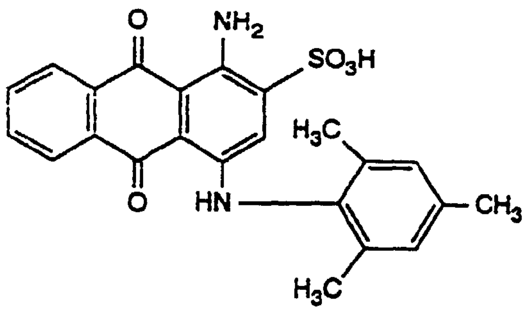

(27),

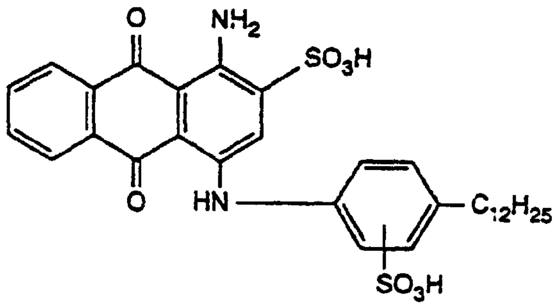

(28),

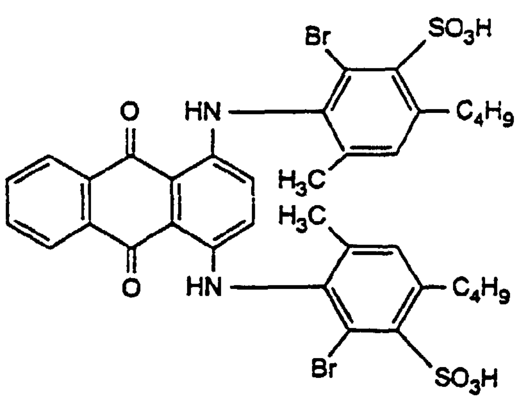

(29),

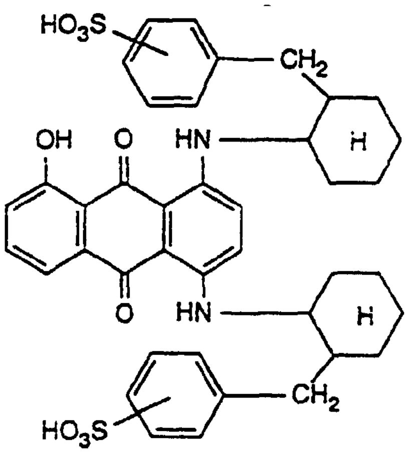

(30),

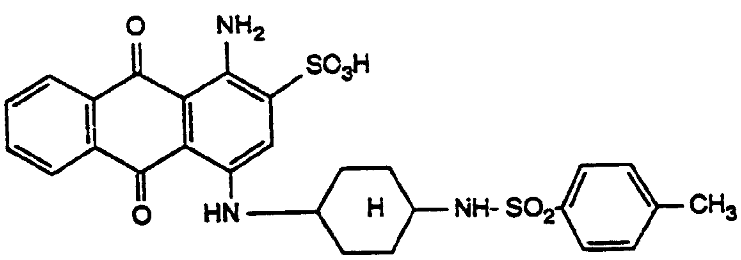

(31),

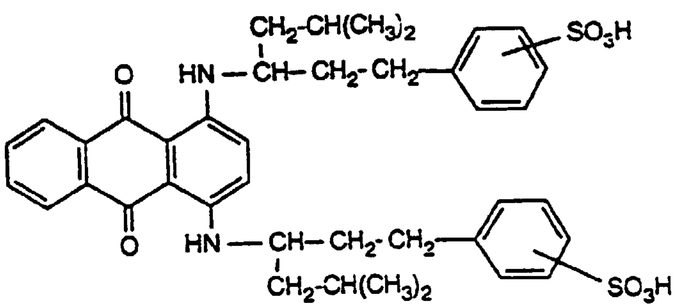

(32),

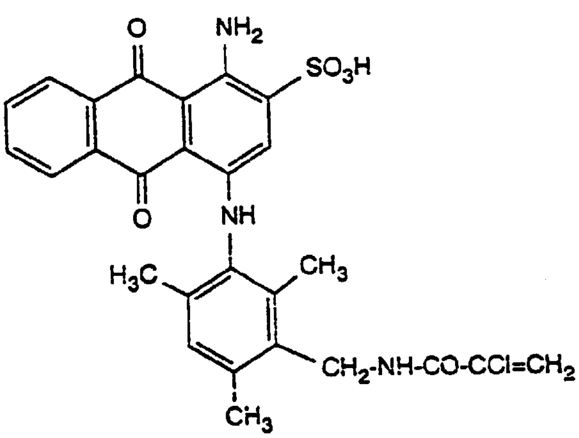

(33),

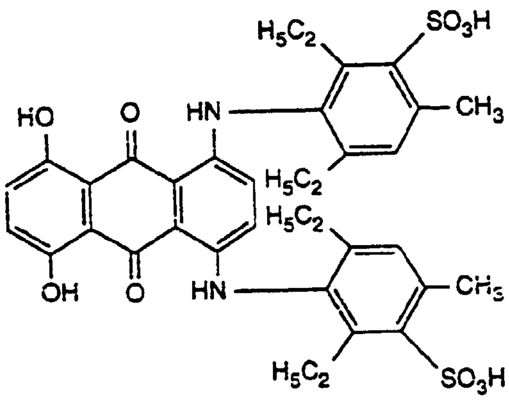

(34),

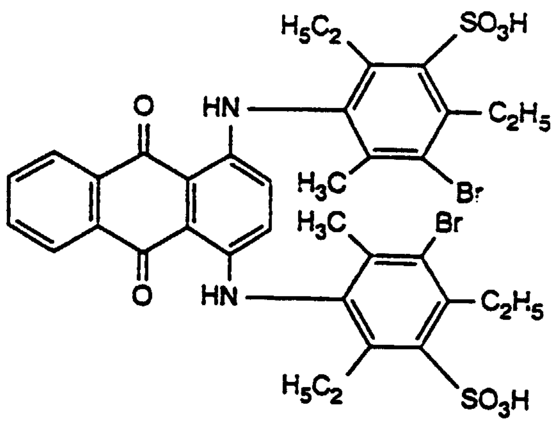

(35),

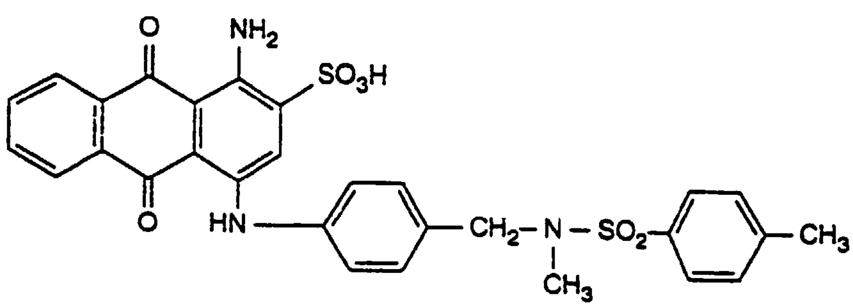

(36),

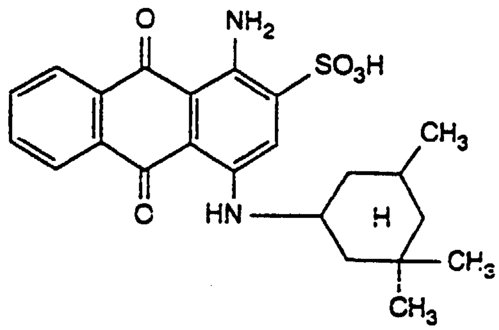

(37),

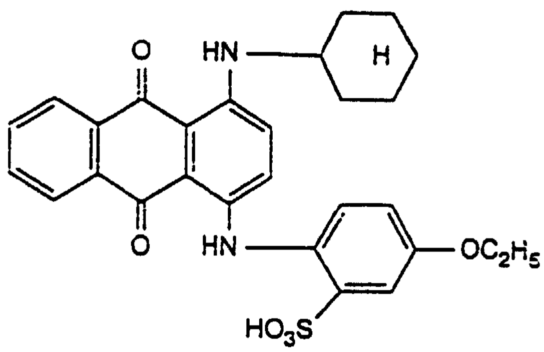

(38),

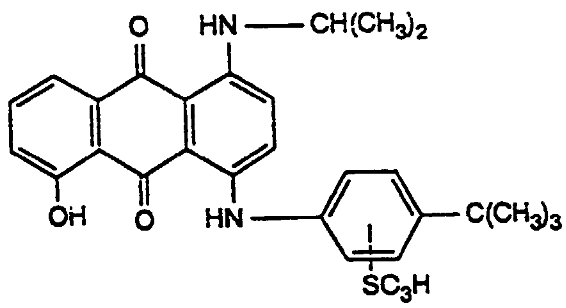

(39),

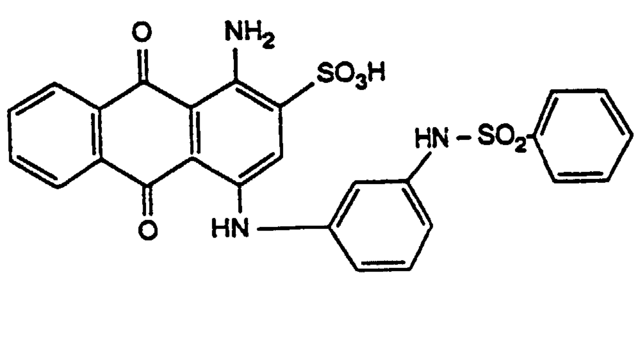

(40),

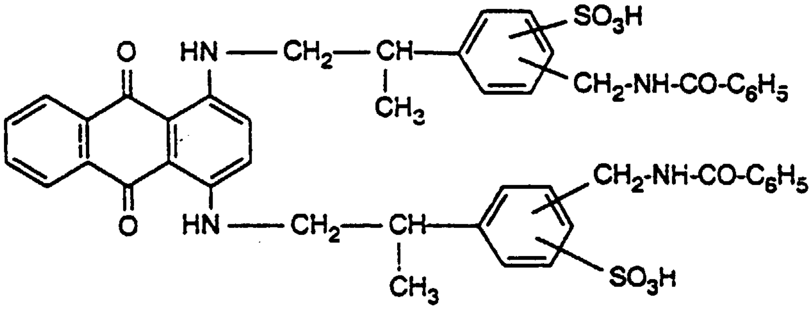

(41)

ou

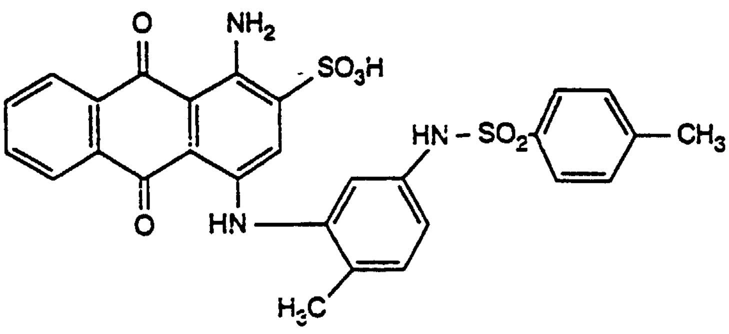

(42)

4. Mélanges de colorants selon l'une des revendications 1 à 3, caractérisés en ce qu'ils contiennent en tant que colorant azoïque au complexe de cobalt 1:2 ou de chrome 1:2, un colorant de formule

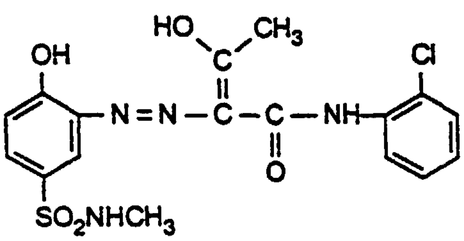

(43)

complexe de cobalt 1:2

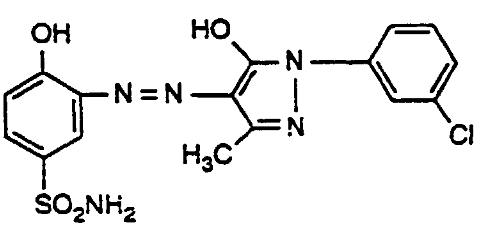

(44),

complexe de cobalt 1:2

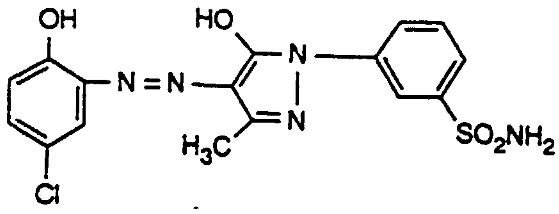

+

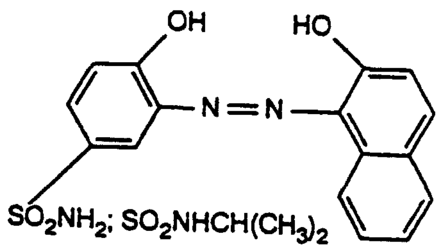

(45),

complexe de cobalt 1:2

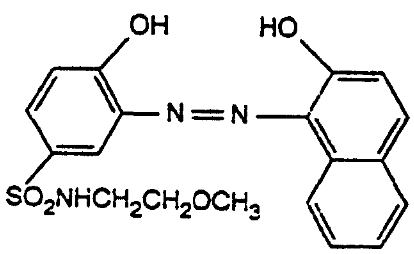

(46),

complexe de cobalt 1:2

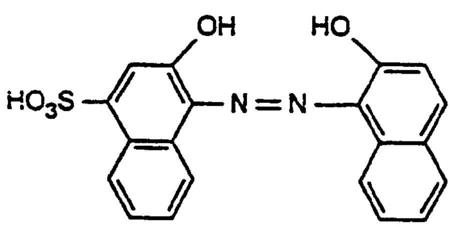

+

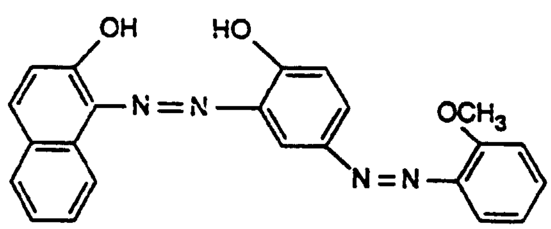

(47),

complexe de chrome 1:2

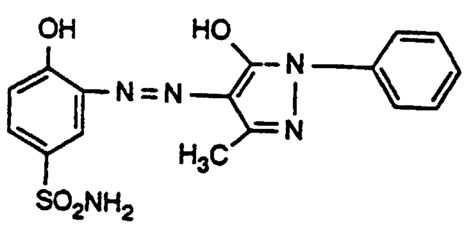

(48),

complexe de cobalt 1:2

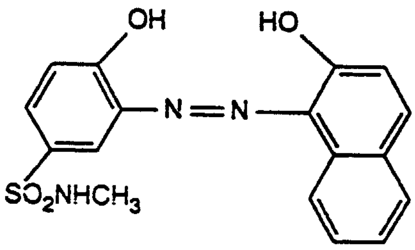

(49)

complexe de cobalt 1:2

ou

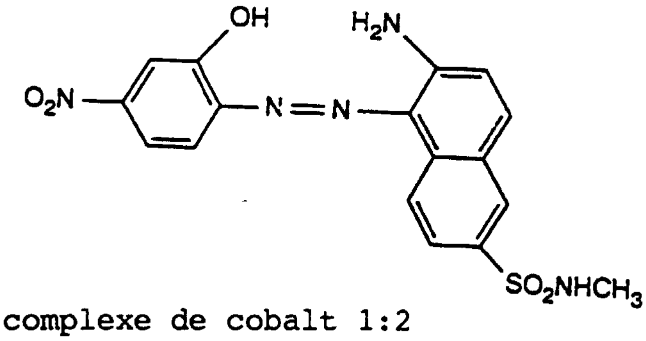

(50)

complexe de cobalt 1:2

**5.** Mélanges de colorants selon l'une des revendications 1 à 4, caractérisés en ce qu'ils contiennent de 5 à 95 % en poids, en particulier de 10 à 90 % en poids, du colorant de formazane au complexe de cobalt, par rapport à la quantité totale des colorants des mélanges.

**6.** Colorants de formazane au complexe de cobalt 1:2 symétriques des composés de formule

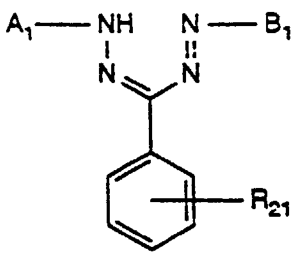

(51)

ceux de formule

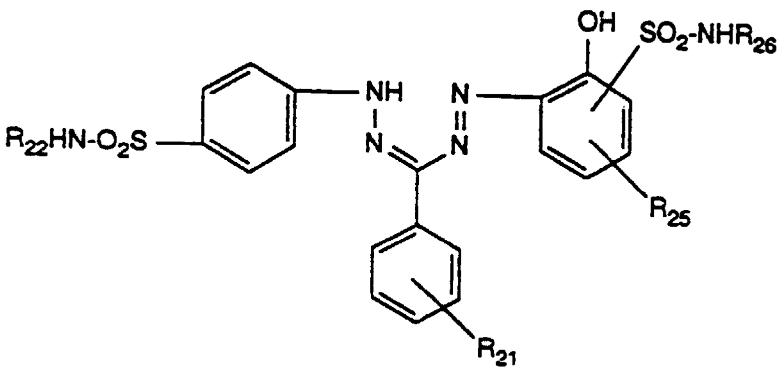

(51a)

dans laquelle

$R_{21}$ représente des atomes d'hydrogène, de chlore ou de fluor,
$R_{22}$ représente un atome d'hydrogène, des groupes méthyle, éthyle ou 2-hydroxyéthyle,
$R_{25}$ représente un atome d'hydrogène ou de chlore et
$R_{26}$ représente un atome d'hydrogène, des groupes méthyle, éthyle, 2-hydroxyéthyle, phényle 2- ou 3carboxyphényle, 2- ou 3-sulfamoylphényle ou 2- ou 3-sulfophényle.

**7.** Colorants de formazane au complexe de cobalt 1:2 selon la revendication 6, où

$R_{21}$ représente des atomes d'hydrogène, de chlore ou de fluor,
$R_{22}$ représente un atome d'hydrogène, des groupes méthyle ou éthyle,
$R_{25}$ représente un atome de chlore et
$R_{26}$ représente un atome d'hydrogène, des groupes méthyle, éthyle, 2-carboxyphényle, 2-sulfamoylphényle ou 2-sulfophényle.

**8.** Colorants de formazane au complexe de cobalt 1:2 symétriques des composés de formule

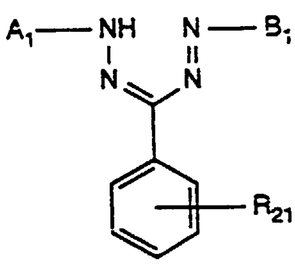

(51)

ceux de formule

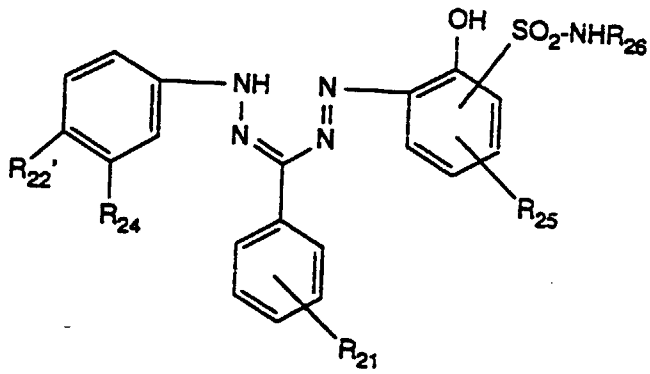

(51a)

dans laquelle

$R_{21}$ représente un atome d'hydrogène,
$R'_{22}$ représente un atome d'hydrogène,
$R_{24}$ représente un groupe acétylamino ou en particulier propionylamino,
$R_{25}$ représente un atome d'hydrogène ou de chlore et
$R_{26}$ représente un atome d'hydrogène, des groupes méthyle ou éthyle.

9. Colorants de formazane au complexe de cobalt 1:2 symétriques selon la revendication 6 de formule

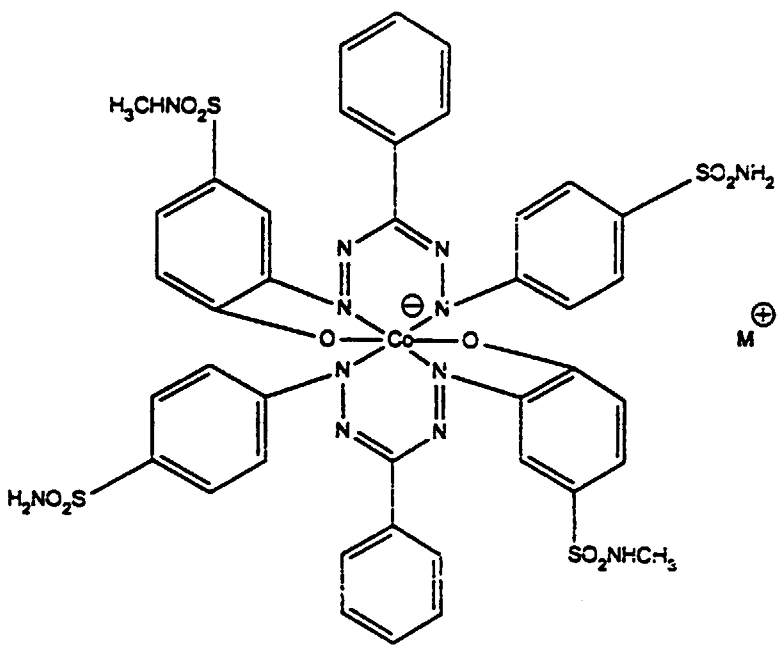

(51d),

dans laquelle $M^{\oplus}$ signifie un cation.

10. Colorants de formazane au complexe de cobalt selon la revendication 9, où $M^{\oplus}$ représente un cation de métal alcalin.

11. Procédé pour la préparation de colorants de formazane au complexe de cobalt symétriques des composés de formule (51) selon la revendication 6 ou 8, caractérisés en ce que l'on diazote un composé de formule

$$B_1\text{-}NH_2 \quad (57)$$

on copule sur l'hydrazone de formule

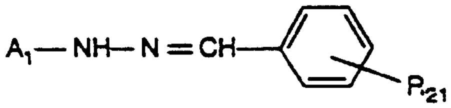

(58)

et on métallise le composé sans métal obtenu, avec un sel de cobalt, les variables $R_{21}$, $A_1$ et $B_1$ ayant chaucne les significations correspondantes à celles des formules (51a) ou (51b).

**12.** Procédé de teinture ou d'impression de matières fibreuses contenant des groupes hydroxyle ou l'azote, caractérisé en ce que l'on utilise un colorant de formazane au complexe de cobalt 1:2 symétrique selon l'une des revendications 6 à 10.

**13.** Procédé de teinture ou d'impression de matières fibreuses contenant des groupes hydroxyle ou l'azote avec un mélange de colorants caractérisé en ce que l'on utilise un mélange de colorants selon l'une des revendications 1 à 5.

**14.** Procédé selon la revendication 13, caractérisé en ce que l'on emploie une matière de fibres polyamide naturelle ou synthétique, en particulier une matière de fibres polyamide synthétique.